# EUROPÄISCHE PATENTSCHRIFT

(11) **EP 3 295 101 B1**
(45) Veröffentlichungstag und Bekanntmachung des Hinweises auf die Patenterteilung: **07.06.2023**
(21) Anmeldenummer: 16719309.3
(22) Anmeldetag: 15.04.2016
(51) Int. Cl.: F26B 3/04, C08F 6/00, F26B 5/04, F26B 17/04

(54) **HERSTELLUNGSVERFAHREN ZUR HERSTELLUNG WASSERABSORBIERENDER POLYMERPARTIKEL UND BANDTROCKNER**
PRODUCTION METHOD FOR PRODUCING WATER ABSORBING POLYMER PRODUCTS AND BELT DRYER
MÉTHODE DE FABRICATION POUR FABRIQUER DES PRODUITS POLYMÈRES ABSORBANTS L'EAU ET SÉCHEUR À BANDE

(30) Priorität: 08.05.2015 EP 15166995
(43) Veröffentlichungstag der Anmeldung: 21.03.2018
(73) Patentinhaber: BASF SE, 67056 Ludwigshafen am Rhein (DE)
(72) Erfinder: GRÜNEWALD, Gerald, 67056 Ludwigshafen (DE); FUNK, Rüdiger, 65527 Niedernhausen (DE); WEISMANTEL, Matthias, 63637 Jossgrund (DE)
(86) Internationale Anmeldenummer: PCT/EP2016/058332
(87) Internationale Veröffentlichungsnummer: WO 2016/180598

(56) Entgegenhaltungen:
- FR-A- 895 974
- US-A- 2 452 983
- US-A1- 2014 047 730

## Beschreibung

Die Erfindung betrifft ein Herstellungsverfahren zur Herstellung wasserabsorbierender Polymerpartikel gemäß dem Oberbegriff des Anspruchs 1. Die Erfindung betrifft weiter einen Bandtrockner zur Trocknung eines wässrigen Polymergels gemäß dem Oberbegriff des Anspruchs 10.

Das Herstellungsverfahren weist die Schritte auf: Polymerisieren einer wässrigen Monomer-Lösung oder -Suspension zur Herstellung eines Polymergels; Trocknen des wässrigen Polymergels in einem Bandtrockner mit einem Förderband unter Aufnahme des wässrigen Polymergels auf dem Förderband und Fördern des Polymergels auf dem Förderband in eine Förderrichtung des Förderbandes; Brechen und/oder Mahlen des getrockneten Polymergels zu wasserabsorbierenden Polymerpartikeln.

Zum Trocknen ist vorgesehen, dass der Bandtrockner einen Trockneraufbau aufweist, in dem das Förderband geführt wird.

Als wasserabsorbierende bzw. superabsorbierende Polymere (SAP, kurz Superabsorber genannt) bezeichnet man vernetzte hydrophile Polymere, die ein Vielfaches ihrer Masse im trockenen Zustand (teilweise über das Tausendfache) an Wasser absorbieren können. Das Haupteinsatzgebiet von Superabsorbern liegt im Hygienebereich und spielt auch im medizinischen Bereich in Wundauflagen und Pflastern eine bedeutende Rolle. Weitere wichtige Einsatzgebiete für Superabsorber stellen Landwirtschaft und Gartenbau dar, wo Superabsorber eingesetzt werden, um die Fähigkeit von Erde zur Speicherung von Feuchtigkeit zu verbessern.

Die Anforderungen an einen Superabsorber hängen von dem jeweiligen Anwendungsgebiet ab, weshalb die Eigenschaften der Superabsorber (z. B. der Quellungsgrad und die Quellungsgeschwindigkeit) entsprechend angepasst werden müssen. Dafür ist es von Bedeutung, ob die Aufnahme der zu absorbierenden Flüssigkeit unter Druck und/oder bei höherer Temperatur erfolgen soll, was insbesondere für den Einsatz von Superabsorbern in Inkontinenzprodukten wichtig ist. Von großer Bedeutung sind auch Art und Zusammensetzung der zu absorbierenden Flüssigkeit, da der Quellungsgrad eines Superabsorbers stark vom Salzgehalt des Quellungsmittels beeinflusst wird.

Die wasserabsorbierenden Polymere sind insbesondere Polymere aus (co)polymerisierten hydrophilen Monomeren, Pfropfcopolymere von einem oder mehreren hydrophilen Monomeren auf einer geeigneten Pfropfgrundlage, vernetzte Cellulose oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche wasserabsorbierende Polymere werden zur Herstellung von Windeln, Tampons und Damenbinden, aber auch als wasserzurückhaltende Mittel im landwirtschaftlichen Gartenbau verwendet.

Die Herstellung der wasserabsorbierenden Polymere wird beispielsweise in der Monographie "Modern Super Absorbent Polymer Technology", von F. L. Buchholz und A. T. Graham, Wiley-VCH, 1998 oder in Ullmanns "Encyklopedia of Industrial Chemistry", 6. Auflage, Band 35, Seite 73 bis 103 beschrieben.

Ein superabsorbierendes Polymer im Zustand eines wässrigen Polymergels wird als in einem nassen Zustand befindlich angesehen und kann insofern auch allgemeiner als Nassgut bezeichnet werden; d.h. das wässrige Polymergel hat immer noch einen beträchtlichen Wasseranteil vor dem Trocknen; insbesondere wie unten beschrieben. Das wässrige Polymergel wird durch Polymerisieren einer Monomer-Lösung oder -Suspension gewonnen. Das wässrige Polymergel mit noch wässrigen Polymerpartikeln wird bevorzugt als Granulat, z.B. mit einem Feststoffanteil von 40-60%, in den Bandtrockner eingebracht. In diesem Zustand ist das wässrige Polymergel grundsätzlich bereits vernetzt mit einem gewünschten Vernetzungsgrad, insbesondere zunächst homogen vernetzt, insbesondere mit einem vergleichsweise niedrigen Vernetzungsgrad insbesondere, wie unten weiter beschrieben, zunächst noch kaum oberflächenvernetzt.

Ein superabsorbierendes Polymer im Zustand eines wasserabsorbierenden PolymerPartikels ist als in einem Zustand nach dem Trocknen befindlich anzusehen; d.h. es hat einen geringen restlichen Wassergehalt der Polymerpartikel nach dem Trocknen des wässrigen Polymergels, insbesondere wie unten beschrieben; also liegt das superabsorbierende Polymer bevorzugt als getrocknetes Polymergel, insbesondere getrocknete Polymerpartikel vor. In diesem Zustand können die wasserabsorbierenden Polymerpartikel bevorzugt nachvernetzt werden, insbesondere oberflächenvernetzt werden, wobei der Oberflächenvernetzungsgrad dann bevorzugt über dem obengenannten vergleichsweise niedrigen zunächst homogenen Vernetzungsgrad liegt. Vorzugsweise wird nach der Polymerisation ein wässriges Polymergel der wasserabsorbierenden Polymere erhalten, das getrocknet wird. Die Grundsätze einer Trocknung des wässrigen Polymergels zu einem wasserabsorbierenden Polymer, insbesondere getrocknetem Polymergel, mit wasserabsorbierenden, insbesondere getrockneten, Polymerpartikeln wird ebenfalls in der Monographie "Modern Super Absorbent Polymer Technology", von F. L. Buchholz und A. T. Graham, Wiley-VCH, 1998, in den Seiten 87 bis 93 beschrieben.

Im Bandtrockner wird das wässrige Polymergel zu einem teilgetrockneten Polymergel getrocknet und liegt insofern als ein Trockenkuchen vor. Der Trockenkuchen liegt bevorzugt als ein Strang von teilgetrockneten Polymergel, also als teilgetrockneter Polymerstrang, auf dem Band des Bandtrockners vor, der sich insofern durch den Trockneraufbau des Bandtrockners erstreckt.

Der Trockenkuchen liegt am Ende des Bandtrockners, d.h. beim Verlassen des Trockneraufbaus, als weitgehend getrockneter Strang von getrocknetem Polymergel, etwa in Form einer Platte oder einem brettartigen Strang, also als getrockneter Polymerstrang, vor. Im Folgenden wird teilweise auf das teilgetrocknete Polymergel und auf das getrocknete Polymergel des Trockenkuchens bereits mit der Begrifflichkeit "getrocknete Polymerpartikel" Bezug genommen; beide Fälle werden mit den Begriffen "superabsorbierendes oder wasserabsorbierendes Polymergel" oder "getrocknetes Polymergel" im Unterschied zu "wässrigem Polymergel" erfasst.

Bei einer eher breiten Größenverteilung von Partikeln des zu trocknenden wässrigen Polymergels kann oftmals eine vollständige Trocknung aller Polymerpartikel unter solchen Trocknungsbedingungen erfolgen, unter denen schließlich ein Großteil der Partikel bereits eher übertrocknet ist. Letztendlich soll das Trocknungsverfahren aber auch wirtschaftlich sein und die gewünschte Polymergelqualität liefern. Nach angemessener Verweilzeit des zu trocknenden wässrigen Polymergels im Bandtrockner soll dies zu einem superabsorbierenden Polymer mit wasserabsorbierenden Polymerpartikeln getrocknet werden, die einen gewünschten Wassergehalt, bevorzugt niedrigen Wassergehalt und insofern Restfeuchtegehalt aufweisen. Dementsprechend werden in einer verbesserten Praxis vorzugsweise Trocknungsbedingungen gewählt, die einen Kompromiss zwischen Ausnutzung der Trocknerkapazität und der Verarbeitbarkeit der wasserabsorbierenden Polymerpartikel darstellen.

Das getrocknete Polymergel als weitgehend getrockneter Polymerstrang wird dann einem Brecher oder dergleichen Zerkleinerer am Ende des Bandtrockners zugeführt. Es entstehen dann also durchweg getrocknete Polymerpartikel von getrocknetem Polymergel.

Die getrockneten Polymerpartikel liegen dann teils als Bruch von getrocknetem Polymergel, z. B. vergleichsweise grobe Brocken, und teils als unvermeidlicher Bruchrest von getrocknetem Polymergel vor. Insbesondere der Bruchrest von getrocknetem Polymergel umfasst feine Pulverstücke von Polymerpartikeln umfassend Fein- und Feinstpartikel.

Die getrockneten Polymerpartikel werden dann bevorzugt einem Mahlvorgang zugeführt und zu gemahlenen getrockneten Polymerpartikel weiterverarbeitet.

Die gemahlenen getrockneten Polymerpartikel können dann einem Siebvorgang zugeführt werden. Eine Gutkornfraktion hat dann eine schon bevorzugte gewünschte Partikelgröße haben und kann bereits abgetrennt werden. Eine Überkorn- oder Feinkorn-Fraktion kann ggfs. nochmals gemahlen, gesiebt oder bearbeitet werden und zur Gutkornfaktion hinzugefügt werden.

Die getrockneten, gemahlenen und gesiebten Polymerpartikel der Gutkornfraktion können oberflächennachbearbeitet werden.

Die getrockneten, gemahlenen und gesiebten und oberflächennachbearbeiteten Polymerpartikel können einer Schutzsiebung zugeführt werden.

Das für das vorliegende Konzept bevorzugte Verfahren ist ein Förderbandverfahren (mit einem Förderband des Bandtrockners). Der Bandtrockner ist ein konvektives Trocknungssystem für die Behandlung von durchströmbaren Polymergelen. Das zu trocknende wässrige Polymergel wird auf ein endloses, gasdurchlässiges Förderband gegeben und mittels eines bevorzugt erwärmten Gasstromes, vorzugsweise Luft, angeströmt. Im Folgenden ist mit Trocknungsluft jede Art eines Trocknungsgases gemeint; insbesondere Luft oder luftähnliche Gase, vorzugsweise erwärmte Trocknungsgase, insbesondere erwärmte Luft oder erwärmte luftähnliche Gase. Beim Trocknungsverfahren können kontinuierlich arbeitende Konvektionsbandtrockner verwendet werden; im Folgenden betrifft dies einen Bandtrockner der eingangs genannten Art, insbesondere einen Umluftbandtrockner. Der eingangs genannte Bandtrockner ist zur Trocknung eines begrenzt rieselfähigen, stückigen und verformbaren pastösen Produkts, insbesondere für ein wässriges Polymergel, besonders ausgebildet. Bei einem kontinuierlich arbeitenden Bandtrockner wird die als durchströmbares Haufwerk aufgelegte Polymergelschicht eines wässrigen Polymergels auf einem perforierten Förderband durch den Trocknungsraum transportiert und dabei zunächst zu teilgetrocknetem Polymergel und schließlich zu getrocknetem Polymergel getrocknet; dieses wird dann zu den oben genannten getrockneten Polymerpartikeln als wasserabsorbierende Polymerpartikel weiterverarbeitet.

Das die Produktschicht des Trockenkuchens von teilgetrocknetem Polymergel und dann getrocknetem Polymergel durchströmende Trocknungsgas dient sowohl zum Wärmeeintrag in das zu trocknende wässrige Polymergel bzw. in die teilweise getrockneten wasserabsorbierenden Polymerpartikel als auch zum Abtransport von verdampfender Feuchte; grundsätzlich wird dies dadurch erreicht, dass eine Temperatur im Trockner entlang der Förderrichtung des Polymergels jedenfalls in einem Teilabschnitt zunimmt und die Feuchte des zu trocknenden wässrigen Polymergels in Förderrichtung des Förderbandes abnimmt. Als Trocknungsgas wird bevorzugt Luft als Trocknungsluft verwendet. Bei einem eingangs genannten Bandtrockner, dann insbesondere in Form eines Umluftbandtrockners, kann die die Polymergelschicht durchströmende Trocknungsluft außerdem als Umluft geführt werden; insbesondere kann diese auch mit Frischluft ergänzt werden und so ganz oder teilweise nach Bedarf ersetzt werden - grundsätzlich erweist sich eine reine Frischluftzuführung jedoch als weniger energieeffizient als eine intelligente Luftrückführung; insbesondere aus einer Endzone, aus welcher die Rückführluft vergleichsweise wenig feuchtebeladen ist in vordere Zonen des Trockners.

Der Bandtrockner hat im Vergleich zu anderen Trocknerbauarten den Vorteil, dass (bis auf die Schwerkraft) keine wesentliche mechanische Beanspruchung das Polymergel beeinträchtigt, da das wässrige Polymergel bzw. die wasserabsorbierenden Polymerpartikel lose auf einem Förderband aufliegen. Prinzipiell bietet sich die Möglichkeit, einen Bandtrockner mit einer einzigen Trocknerzone baulich zu gestalten. In einer Abwandlung bietet sich auch die Möglichkeit, eine Anzahl von Trocknerzonen ganz oder teilweise baulich zu gestalten. Im einfachsten Fall umfasst der Trockneraufbau eine einzige Trocknerzone; oder in einem aufwendigeren Fall eine Anzahl von Trocknerzonen.

Eine Trocknerzone kann, muss aber nicht, einen modularen Aufbau haben, d.h. mittels einem einzigen oder einer Mehrzahl von Trocknermodulen baulich realisiert sein. Im Ergebnis kann ein Trockneraufbau mittels einer Anzahl von Trocknermodulen baulich realisiert sein. Ein Bandtrockner umfasst beispielsweise ein Polymergelaufgabemodul, eine Anzahl von Trocknermodulen zur Bildung einer oder mehrerer Trocknerzonen und ein Austragsmodul.

Das Austragsmodul dient zum Austragen des superabsorbierenden Polymers in Form der wasserabsorbierenden Polymerpartikel; insbesondere endet das Förderband im Austragsmodul bzw. hat dort einen Umkehrpunkt; das superabsorbierende Polymer kann im Austragsmodul auf einen oben genannten Brecher od. dgl. Zerkleinerer fallen.

Bandtrockner mit Transportbändern sind zu unterscheiden von Bandreaktoren. Während ein Bandreaktor verwendet wird, um wässriges Polymergel aus seinen Herstellungsstoffen zu produzieren, wird ein Bandtrockner verwendet, um wasserabsorbierende Polymerpartikel aus einem wässrigen Polymergel zu produzieren, insbesondere um bevorzugt aus einem mit gewünschtem Vernetzungsgrad zunächst homogen vernetzten, ggfs. auch oberflächenvernetzten-wässrigen Polymergel die genannten wasserabsorbierenden Polymerpartikel zu produzieren.

In WO 2006/100300 A1 wird ein Verfahren zur Herstellung wasserabsorbierender Polymere mit Polymerisation einer Monomer-Lösung und Trocknung des durch die Polymerisation erhaltenen wässrigen Polymergels in einem Bandtrockner mittels eines erwärmten Luftstromes offenbart, wobei die Trocknung in mindestens zwei Temperaturzonen durchgeführt wird und/oder die Durchströmungsrichtung des Trocknungsluftstroms durch das wässrige Polymergel im vorderen Abschnitt eines Bandtrockners von unten und im hinteren Abschnitt des Bandtrockners von oben durchgeführt wird. Dabei wird die Trocknungsluft im Kreis geführt, um bei einem mehrfachen Durchgang durch die Polymergelschicht eine möglichst hohe Aufsättigung zu erfahren. Zur wirtschaftlichen Trocknung der wasserabsorbierenden Polymere wird die Luftführung im Trockner konsequent auf einen energieeffizienten Betrieb ausgelegt. Es sind verschiedene Luftführungskonzepte möglich, die Vorteile hinsichtlich Trocknungsverhalten und Energieausnutzung aufweisen: im Kreuzstrom von oben von unten, alternierend, Kreuzgegenstrom oder aber im Kreuzgleichstrom. Bevorzugt ist hierbei die übergeordnete Luftführung im Kreuzgegenstrom. Die Trocknung wird vorzugsweise bei einem Druck durchgeführt, der gegenüber dem Atmosphärendruck vermindert ist. Dieser Unterdruck beträgt als Differenz zum Atmosphärendruck vorzugsweise mindestens - 0,5mbar, besonders bevorzugt mindestens - 2mbar, ganz besonders bevorzugt mindestens -10mbar (Minuszeichen zeigt Unterdruck an) Der gegenüber dem Atmosphärendruck verminderte Unterdruck im Trockner bewirkt eine günstigere Gasströmung im Trockner und damit eine gleichmäßigere Trocknung. In WO 2008/034786 A1 wird ein Verfahren zur Herstellung farbstabiler wasserabsorbierender Polymerpartikel mit einem niedrigen Neutralisationsgrad beschrieben, in dem ein Verfahren durch die Trocknung in mindestens zwei Temperaturzonen durchgeführt wird.

Eine Aufgabe der Erfindung ist es, ein verbessertes Herstellungsverfahren und eine verbesserte Vorrichtung zur Herstellung wasserabsorbierender Polymerpartikel anzugeben. Insbesondere soll ein energieeffizientes Trocknungsverfahren angegeben werden, vorzugsweise unter Nutzung einer Gegenstromführung, d.h. unter Führung einer Trocknungsluft im Gegenstrom entgegen einer Förderrichtung des Polymergelstromes auf dem Förderband. Vorzugsweise soll ein Kreuzgegenstrom einer Luftführung genutzt werden; d.h. unter kreuzender Führung eines Polymergelstromes auf dem Förderband in Förderrichtung und eines Umluftstromes der Trocknungsluft (Kreuzstrom). Insbesondere soll eine Luftrückführung von Trocknungsluft als Rückführluft gegen einen Polymergelstrom genutzt werden, d.h. entgegen einer Förderrichtung des Förderbandes (Gegenstrom). Insbesondere soll ein Trocknungsverhalten des wässrigen Polymergels verbessert und/oder ein Anteil an Abfallprodukten verringert werden. Insbesondere soll eine Produktkonditionierung und/oder die energieeffiziente Trocknung als wirtschaftlicher Faktor mit berücksichtigt werden.

Insbesondere soll ein Falschlufteintrag und/oder ein unerwünschter Partikeleintrag in den Innenraum eines Trocknermoduls eines Bandtrockners verringert werden. Insbesondere soll ein Falschlufteintrag und/oder ein unerwünschter Partikeleintrag durch den Falschlufteintrag in den Innenraum eines Trocknermoduls eines Bandtrockners verringert werden.

Vorzugsweise soll bei einem verbesserten Trocknungsverfahren der Wartungs- und Reinigungsaufwand verringert sein, insbesondere betreffend Einbauten in einer Luftrückführung, wie z. B. den betreffend einer daran angeschlossenen Kühleinheit und/oder Heizeinheit, insbesondere betreffend einem dort befindlichen Heizregister oder Vorlufterhitzer. Insbesondere soll dies zu zeitlich gleichbleibenden Polymergeleigenschaften bei möglichst konstanten bzw. angemessen angepassten Betriebsparametern führen. Vorzugsweise ist ein Partikeleintrag in eine Luftrückführung, insbesondere in Einbauten in einer Luftrückführung --wie einer Kühleinheit und/oder Heizeinheit, z. B. Heizregisterverringert, vorzugsweise auch bei einem energieeffizienten Trocknungsverfahren mit Trocknungsluftführung im Gegenstrom, insbesondere einer Luftrückführung und unter Nutzung eines Kreuzgegenstromes verringert.

Betreffend das Herstellungsverfahren wird die Aufgabe durch die Erfindung mit einem Herstellungsverfahren des Anspruchs 1 gelöst.

Betreffend die Vorrichtung wird die Aufgabe durch die Erfindung mit einem Bandtrockner des Anspruchs 10 gelöst.

Vorteilhafte Weiterbildungen der Erfindung sind den Unteransprüchen zu entnehmen und geben im einzelnen vorteilhafte Möglichkeiten an, das erläuterte Konzept im Rahmen der Aufgabenstellung sowie hinsichtlich weiterer Vorteile zu realisieren.

Es wird von einem Herstellungsverfahren der eingangs genannten Art gemäß dem Oberbegriff des Anspruchs 1 ausgegangen.

Zum Trocknen ist vorgesehen, dass der Bandtrockner einen Trockneraufbau aufweist, in dessen Innenraum das Förderband geführt wird.

Es ist vorgesehen, dass Trocknungsluft in dem Innenraum des Trockneraufbaus im Gegenstrom entgegen der Förderrichtung geführt wird und der Innenraum des Trockneraufbaus weitgehend bei einem Unterdruck gegenüber dem Umgebungsdruck im Außenraum des Trockneraufbaus gehalten wird. Bevorzugt wird der Innenraum des Trockneraufbaus vollständig bei einem Unterdruck gegenüber dem Umgebungsdruck im Außenraum des Trockneraufbaus gehalten.

Der Innenraum des Trockneraufbaus weist eine Druckzone auf und/oder bildet eine Druckzone. Bevorzugt ist der Innenraum des Trockneraufbaus in eine Anzahl von Druckzonen aufgeteilt.

Es ist weiter vorgesehen, dass entlang der Förderrichtung ein erster Innendruck als Einlassdruck an einem Polymergeleinlass in wenigstens einer Druckzone mit einer ersten Druckdifferenz zu einem Umgebungsdruck und ein zweiter Innendruck als Auslassdruck an einem Polymergelauslass in der wenigstens einen Druckzone mit einer zweiten Druckdifferenz zu einem Umgebungsdruck gebildet ist. Die zweite Druckdifferenz ist geringer als die erste Druckdifferenz.

Vorliegend wird ein Druckzoneneinlass als Polymergeleinlass bezeichnet, da dies den Eintritt des wässrigen Polymergels in die Druckzone entlang der (im Folgenden mit C bezeichneten) Förderrichtung im Betrieb des Bandtrockners kennzeichnet. Vorliegend wird ein Druckzonenauslass als Polymergelauslass bezeichnet, da dies den Austritt des getrockneten Polymergels aus der Druckzone entlang der (im Folgenden mit C bezeichneten) Förderrichtung im Betrieb des Bandtrockners kennzeichnet. Ein Druckzonenauslass als Polymergelauslass entspricht dabei dem Eintritt von Trocknungsluft in die Druckzone unter Führung der Trocknungsluft in dem Innenraum des Trockneraufbaus im Gegenstrom (in bezeichneter Gegenstrom-Richtung C') entgegen der Förderrichtung des Polymergels, wobei der Innenraum des Trockneraufbaus weitgehend bei einem Unterdruck, bevorzugt vollständig bei einem Unterdruck, gegenüber dem Umgebungsdruck im Außenraum des Trockneraufbaus gehalten wird. Ein Druckzoneneinlass als Polymergeleinlass entspricht dabei dem Austritt von Trocknungsluft aus der Druckzone unter Führung der Trocknungsluft in dem Innenraum des Trockneraufbaus im Gegenstrom (in bezeichneter Gegenstrom-Richtung C') entgegen der Förderrichtung des Polymergels, wobei der Innenraum des Trockneraufbaus weitgehend bei einem Unterdruck, bevorzugt vollständig bei einem Unterdruck, gegenüber dem Umgebungsdruck im Außenraum des Trockneraufbaus gehalten wird.

Das Herstellungsverfahren wird bevorzugt unter Nutzung eines Kreuzgegenstromes einer Luftführung durchgeführt; d.h. unter Führung der Trocknungsluft in dem Innenraum des Trockneraufbaus im Gegenstrom entgegen der Förderrichtung des Polymergels auf dem Förderband, wobei der Innenraum des Trockneraufbaus weitgehend bei einem Unterdruck, bevorzugt vollständig bei einem Unterdruck, gegenüber dem Umgebungsdruck im Außenraum des Trockneraufbaus gehalten wird und außerdem eine kreuzende Führung eines Polymergelstromes auf dem Förderband und eines Stromes der Trocknungsluft (Kreuzstrom), nämlich in dem Fall bevorzugt als Umluft, vorgesehen ist.

Bevorzugt kann zusätzlich eine Luftrückführung von Trocknungsluft als Rückführluft entgegen der Förderrichtung des Polymergels auf dem Förderband erfolgen, insbesondere entgegen der Förderrichtung des Förderbandes und außerhalb des Trockneraufbaus, z.B. in einer Peripherie desselben mittels entsprechenden Belüftungsaufbauten. Unter einer Luftrückführung ist eine Rückführung von entnommener Luft aus dem Trockneraufbau zu verstehen, welche in einer Luftentnahmeführung abgeführt wird und als oben genannte Rückführluft entgegen der Förderrichtung des Förderbandes zurück geführt wird und an einer entgegen der Förderrichtung des Polymergels auf dem Förderband gelegenen Stelle dem Trockneraufbau wieder zugeführt wird; z.B. über eine Luftführungsöffnung zur Druckzone. Insbesondere für den bevorzugten Fall einer Luftführung im Kreuzgegenstrom im Trockneraufbau hat es sich als vorteilhaft erwiesen, dass die zweite Druckdifferenz geringer ist als die erste Druckdifferenz.

Vorteilhaft, insbesondere für den bevorzugten Fall einer Luftführung im Kreuzgegenstrom im Trockneraufbau, erhöht sich der Absolutdruck vom ersten zum zweiten Innendruck der Druckzone in wenigstens einem Bereich der Druckzone entlang der Förderrichtung des Förderbandes; dies gilt insbesondere für eine Endzone des Trockneraufbaus. Vorteilhaft, insbesondere für den bevorzugten Fall einer Luftführung im Kreuzgegenstrom im Trockneraufbau, erhöht sich der Absolut-druck vom ersten zum zweiten Innendruck in einem Bereich der wenigstens einen Druckzone entlang der Förderrichtung des Polymergels auf dem Förderband.

Das Konzept geht davon aus, dass es grundsätzlich möglich ist, den inneren Bereich des Trockneraufbaus, d.h. dessen Innenraum, als eine Druckzone auszubilden derart, dass ein Trocknungsdruck (Druck) einstellbar ist. Der Innenraum des Trockneraufbaus weist dementsprechend eine Druckzone auf und/oder bildet eine Druckzone. Der Innenraum kann auch in eine Anzahl von Druckzonen aufgeteilt sein, d.h. in eine, zwei oder mehr Druckzonen. Die Aufteilung kann sich aus einem Druckverlauf ergeben und beispielsweise funktional und/oder konstruktiv zur Einstellung eines Drucks bzw. Druckverlaufs realisiert sein. Insbesondere ergibt sich eine Aufteilung in eine Anzahl von Druckzonen aus der Anordnung von Luft zum Innenraum zuführenden Elementen und Luft vom Innenraum abführenden Elementen, z.B. ein weiter unten beschriebenes Zuluftelement oder eine Luftentnahmeführung, da an diesen ein Druckniveau am Innenraum vorgegeben wird; insofern ein Druck eingestellt wird. Der innere Bereich des Trockneraufbaus kann demnach in einen oder mehrere, ggfs. bezüglich des Drucks einstellbare, insbesondere kontrollierbare, Bereiche aufgeteilt sein. Insbesondere ist unter einer Druckzone ein Bereich des Innenraums des Trockneraufbaus zu verstehen, in dem ein Druck, beispielsweise ein Eingangsdruck und/oder Ausgangsdruck einstellbar ist. Insbesondere soll ein Druck --bis auf unvermeidbare Kopplungen-- weitgehend unabhängig zu anderen Druckzonen im Trockneraufbau und/oder weitgehend unabhängig von dem Umgebungsdruck (Atmosphärendruck) außerhalb des Trockneraufbaus einstellbar sein. Beispielsweise kann ein erster Innendruck als Einlassdruck an einem Polymergeleinlass in wenigstens einer Druckzone mit einer ersten Druckdifferenz zu einem Umgebungsdruck und/oder ein zweiter Innendruck als Auslassdruck an einem Polymergelauslass in der wenigstens einen Druckzone mit einer zweiten Druckdifferenz zu einem Umgebungsdruck einstellbar sein.

Im Rahmen einer weiter unten näher erläuterten besonders bevorzugten Weiterbildung können in der wenigstens einen Druckzone --mit jeweils einem bestimmten Druckprofil im Innenraum des Trockneraufbaus-- eine oder mehrere Druckzonenteilbereiche vorgesehen sein, derart, dass in jedem Druckzonenteilbereich ein Druckabschnittsverlauf eines Druckprofils der Druckzone vorliegt. Die Druckabschnittsverläufe der Druckzonenteilbereiche können durch einen Druckverlauf eines Druckgradientenbereichs voneinander unterscheidbar sein. Der Druckverlauf kann beispielsweise durch eine maßgebliche Druckstufe oder Druckrampe oder dergleichen gebildet sein. Eine maßgeblich Druckstufe oder Druckrampe oder dergleichen Druckverlauf eines Druckgradientenbereichs wird von einer Querwand, die quer zur Förderrichtung des Förderbandes orientiert ist, innerhalb einer Druckzone erzeugt, um das Druckprofil der Druckzone insofern maßgeblich zu gestalten.

Generell kann darüberhinaus vorgesehen sein, dass eine Einstellung unterschiedlicher Trocknungsbedingungen --wie z. B. neben oben genannter Trocknungsdrücke, mittels geeigneter Trocknungstemperaturen, Luftfeuchten oder dgl. Trocknungsbedingungen im Innenraum des Trockneraufbaus-- jeweils für einen oder mehrere unterschiedliche innere Bereiche des Trockneraufbaus möglich ist.

Unter einer in dieser Anmeldung bezeichneten Trocknerzone ist insofern allgemein ein Bereich im Trockneraufbau zu verstehen, in dem das zu trocknende wässrige Polymergel getrocknet wird; ihm also Feuchte entzogen wird, bevorzugt durch erwärmte Trocknungsluft. Insbesondere ist unter einer Temperaturzone ein Bereich im Trockneraufbau zu verstehen, in dem die Trocknungslufttemperatur weitgehend unabhängig einstellbar ist. Insbesondere kann jedenfalls eine Eingangstemperatur der Trocknungsluft oder auch eine durch interne Luftaufheizung einstellbare Umluft zum Polymergel hin oder Abluft vom Polymergel weg weitgehend unabhängig --bis auf unvermeidbare Kopplungen-- zu anderen Bereichen im Trockneraufbau, insbesondere weitgehend unabhängig von der Umgebungstemperatur außerhalb des Trockneraufbaus, eingestellt werden.

Eine solche Einstellung von Trocknungstemperaturen und/oder Trocknungsdrücken und optional anderen Trocknungsbedingungen innerhalb verschiedener Trocknerzonen erfolgt beispielsweise mittels geeigneten Einbauten in einer Peripherie des Trockneraufbaus; bevorzugt mittels entsprechenden Belüftungsaufbauten. Solche Ein- oder Aufbauten können geeignet dimensionierte Heizregister, Wärmetauscher sowie eine Luftzu- und Luftentnahmeführung von Trocknungsluft und Ventilatoren oder dergleichen aufweisen. Trocknungstemperaturen und/oder Trocknungsdrücke und optional andere Trocknungsbedingungen umfassen z. B. die genannten Lufttemperaturen, Luftfeuchten und Luftdrücke der Trocknungsluft. Durch unterschiedliche Trocknungsbedingungen --wie mittels Luftfeuchte, Temperatur und Druck im Trockneraufbau und/oder einstellbaren Trocknungszeiten für das zu trocknende wässrige Polymergel-- kann der gewünschte Endtrocknungsgrad für die wasserabsorbierenden Polymerpartikel eingestellt werden.

Insbesondere kann vorgesehen sein, dass sich --im Innenraum des Trockneraufbaus abhängig von der Luftführung zum Innenraum und den konstruktiven Gegebenheiten einer Trocknerzone-- unterschiedliche Trocknungsdrücke einrichten lassen. Insbesondere kann eine oder eine Anzahl verschiedener Druckzonen im Innenraum des Trockneraufbaus realisiert werden. Eine Druckzone kann als ganzer Teil oder Bruchteil eines Innenraums eines Trockneraufbaus gebildet sein, in dem sich der Druck einstellen lässt. Insbesondere kann der Druck für eine Druckzone eingestellt werden, die sich über wenigstens eine oder mehrere der Trocknerzonen erstreckt, insbesondere auf diese beschränkt ist. So lassen sich Trocknungsdrücke über die Druckzone für eine oder mehrere Trocknerzonen einstellen. Es zeigt sich, dass dies als Basis für eine vorteilhafte Einstellung von Trocknungsbedingungen genutzt werden kann. Es zeigt sich auch, dass dies als Basis für eine vorteilhafte Herabsetzung eines Fremdpartikeleintrags in den Trockneraufbau genutzt werden kann.

Insbesondere ist unter einer Druckzone, insbesondere unter weiterer Konkretisierung der obigen Maßgabe, ein Bereich, z. B. ein Gesamtteil oder Bruchteil, eines Innenraumes eines Trockneraufbaus zu verstehen, der derart von der Umgebung bzw. dem übrigen Bereich eines Innenraumes eines Trockneraufbaus pneumatisch abgegrenzt ist, dass in ihm ein Druck innerhalb physikalischer Grenzen unabhängig einstellbar ist von der Umgebung bzw. von dem übrigen Bereich eines Innenraumes eines Trockneraufbaus. In der Druckzone ist vorteilhaft ein Absolutdruck entlang eines Gegenstroms der Trocknungsluft, d.h. entgegen der Förderrichtung des superabsorbierenden Polymergels als abnehmend zu verstehen; dies bevorzugt in einem Unterdruckbereich, der unterhalb des Umgebungsdrucks liegt.

Es wird weiter von einem Bandtrockner der eingangs genannten Art gemäß dem Oberbegriff des Anspruchs 11 ausgegangen. Der Bandtrockner weist einen das Förderband weitgehend umfassenden Trockneraufbau auf, in dem das Förderband geführt wird.

Es ist vorgesehen, dass Trocknungsluft in dem Innenraum des Trockneraufbaus im Gegenstrom entgegen der Förderrichtung des Polymergels führbar ist und der Innenraum des Trockneraufbaus weitgehend bei einem Unterdruck, bevorzugt vollständig bei einem Unterdruck, gegenüber dem Umgebungsdruck im Außenraum des Trockneraufbaus haltbar ist. Der Innenraum weist eine Druckzone auf und/oder bildet eine Druckzone. Bevorzugt ist der Innenraum des Trockneraufbaus in eine Anzahl von Druckzonen aufgeteilt.

Weiter ist entlang der Förderrichtung ein erster Innendruck als Einlassdruck an einem Polymergeleinlass in wenigstens einer der Druckzonen mit einer ersten Druckdifferenz zu einem Umgebungsdruck und ein zweiter Innendruck als Auslassdruck an einem Polymergelauslass in der wenigstens einen Druckzone mit einer zweiten Druckdifferenz zu einem Umgebungsdruck gebildet. Die zweite Druckdifferenz ist geringer als die erste Druckdifferenz.

Grundsätzlich hat es sich als vorteilhaft erwiesen, dass das Herstellungsverfahren und der Bandtrockner derart ausgebildet ist, dass der Druck bei der Trocknung überwiegend, bevorzugt vollständig, niedriger ist als der Atmosphärendruck; insofern der Bandtrockner überwiegend bei Unterdruck, bevorzugt vollständig bei einem Unterdruck, betrieben wird. Auf diese Weise können auch Trocknungsbedingungen verbessert werden.

Es wird darüberhinaus vorteilhaft eine Energie- und Produktionseffizienz beim Betrieb eines Bandtrockners unterstützt; dies gilt insbesondere für einen in Förderrichtung des Polymergels gesehenen Ausgang eines Trockneraufbaus in einer Endzone - in besonderem Masse für eine Anzahl letzter Trocknerzonen in Förderrichtung des Polymergels vor einem Austragsmodul. Bevorzugt ist das Konzept verwirklicht für eine in deren Nähe realisierte Druckzone; insbesondere eine Druckzone, die sich über eine Anzahl letzter Trocknerzonen erstreckt, insbesondere auf diese beschränkt ist. Es sollte verhindert werden, dass getrocknete Partikel, die am Ende des Trockneraufbaus, insbesondere in einem vorgenannten Austragsmodul am Trockneraufbau, unter anderem durch mechanischen Abrieb, beim Abwurf von der Umlenkrolle oder beim Brechen des Strangs oder der Platte des Trockenkuchens, vom übrigen Fördergut des Trockenkuchens entstehen, in den Trockneraufbau eingetragen werden. Das getrocknete Polymergel als weitgehend getrockneter Polymerstrang wird dann einem Brecher am Ende des Bandtrockners zugeführt. Es entstehen aber bereits beim Abbrechen des Strangs oder der Platte getrocknete Polymerpartikel von getrocknetem Polymergel. Die getrockneten Polymerpartikel liegen dann teils als Bruch von getrocknetem Polymergel, z. B. vergleichsweise grobe Brocken, und teils als unvermeidlicher Bruchrest von getrocknetem Polymergel vor. Insbesondere der Bruchrest von getrocknetem Polymergel umfasst feine Pulverstücke von Polymerpartikeln umfassend Fein- und Feinstpartikel. Das getrocknete Polymergel liegt also bereits vor dem Brecher oder dergleichen Zerkleinerer jedenfalls teilweise bereits als getrocknete Polymerpartikel vor.

Ein Eintrag der oben genannten, getrockneten feinen Pulverstücken umfassend Fein- und Feinstpartikel kann insbesondere mit einer Gestaltung einer Druckzone im Trockneraufbau im Bereich der Endzone des Trockneraufbaus und vor dem Austragsmodul, insbesondere für eine Anzahl letzter Trocknerzonen vor dem Austragsmodul, gemäß dem Konzept unterbunden oder vermindert werden. Das Austragsmodul wird vorteilhaft als nicht mehr zum Trockneraufbau gehörig verstanden, da sich für dieses aufgrund seiner offenen Gestaltung im wesentlichen ein Umgebungsdruck einstellt; insofern ist für ein Austragsmodul ein Druck, beispielsweise ein Eingangsdruck und/oder Ausgangsdruck, nicht unabhängig vom Umgebungsdruck einstellbar.

Es wird ein Beitrag für einen verbesserten Trocknungsprozess bei einer Herstellung von superabsorbierenden, insbesondere wasserabsorbierenden, Polymerpartikeln erreichbar. Grundsätzlich können zusätzlich oder alternativ die Eigenschaften der getrockneten superabsorbierenden, insbesondere wasserabsorbierenden, Polymerpartikel verbessert werden. Darüberhinaus wurde erkannt, dass ein Falschlufteintrag und/oder ein Partikeleintrag in den Innenraum eines Trockneraufbaus verringert werden kann mit einer geeigneten Gestaltung einer Druckzone gemäß dem Konzept in einer Endzone. Insbesondere hat sich das Konzept als vorteilhaft erwiesen bei einer Druckzone, die sich über eine Anzahl letzter Trocknerzonen erstreckt, insbesondere auf diese beschränkt ist. Mit Vorteil verbunden ist dies der Fall bei einem Trockneraufbau, dessen Innenraum unterhalb des Atmosphärendrucks liegt, also im Unterdruckbereich betrieben wird. Ein Falschlufteintrag kann zu einem Energieverlust und desweiteren zu in gewissem Rahmen undefinierten Prozessbedingungen führen. Ein Partikeleintrag --insbesondere auch gasgetragen mittels Mitreißen durch den Falschlufteintrag in den Innenraum eines Trockneraufbaus-- kann zu verkürzten Wartungsintervallen und/oder geringeren Standzeiten der Anlage zwischen Wartungen führen.

Der Innenraum des Trockneraufbaus weist eine Druckzone auf und/oder bildet eine Druckzone. Es ist vorgesehen, dass ein erster Innendruck als Einlassdruck an einem Polymergeleinlass in wenigstens einer der Druckzonen mit einer ersten Druckdifferenz zu einem Umgebungsdruck und ein zweiter Innendruck als Auslassdruck an einem Polymergelauslass in der wenigstens einen Druckzone mit einer zweiten Druckdifferenz zu einem Umgebungsdruck gebildet ist, wobei die zweite Druckdifferenz geringer als die erste Druckdifferenz ist.

Vorteilhaft kann eine pro Zeiteinheit produzierte Superabsorbermenge dadurch gesteigert werden, dass Abfallprodukte im Trockneraufbau vermindert werden. Ein fortlaufender Betrieb des Bandtrockners kann im Rahmen vergleichsweise langfristig beständiger, insbesondere konstanter, Parameter für den Bandtrockner und/oder das Polymergel erreicht werden.

Erfindungsgemäß ist vorgesehen, dass in der wenigstens einen Druckzone im Innenraum des Trockneraufbaus die Druckzone oder ein Druckzonenteilbereich von dieser mittels einer Querwand, die quer zur Förderrichtung des Förderbandes orientiert ist, begrenzt wird. Beispielsweise können eine oder mehrere Querwände eine Druckzone in eine oder mehrere Druckzonenteilbereiche unterteilen. Grundsätzlich kann sich nämlich in einer Druckzone zwischen deren Polymergeleinlass und deren Polymergelauslass eine leichte Druckänderung einstellen; eine Querwand in einer Druckzone --also zwischen dem Polymergeleinlass und dem Polymergelauslass im Strom der Trocknungsluft-- erzeugt gleichwohl einen Druckverlust in Gegenstromrichtung C' der Trocknungsluft, der sich zusätzlich zur leichten Druckänderung als Druckgradient in einem Druckgradientenbereich, d. h. als eine Druckstufe, Druckrampe oder dergleichen zusätzlicher Druckverlauf bemerkbar macht an der Querwand. Ein Druckverlauf in der Druckzone ist so beispielsweise in eine Anzahl von Druckabschnittsverläufen aufgeteilt, welche durch anhand einer Druckstufe, Druckrampe oder dergleichen zusätzlichen Druckverlauf zwischen den Druckabschnittsverläufen an einer Querwand unterscheidbar sind.

Bevorzugt kann in einer Druckzone ein Druckprofil ausgebildet werden, das mindestens einen Druckgradientenbereich zwischen dem Polymergeleinlass und dem Polymergelauslass der Druckzone aufweist. Insbesondere kann der Druckgradientenbereich eine Druckstufe, Druckrampe oder dergleichen Druckverlauf ausgebildet werden. Diese stellt im obigen Sinne eine Druckänderung entlang einer Wegachse in Förderrichtung des Polymergels dar. Bevorzugt kann der Druckgradientenbereich mittels einer Querwand abgegrenzt werden bzw. mittels der Querwand eingestellt werden, die quer zur Förderrichtung des Förderbandes orientiert ist.

Bevorzugt kann im Innenraum des Trockneraufbaus eine Anzahl einer oder mehrerer Druckzonen gebildet werden. Bevorzugt kann sich gemäß einer ersten Variante eine oder mehrere Druckzonen über wenigstens eine oder mehrere der Trocknerzonen erstrecken, insbesondere auf diese beschränkt sein. Insbesondere kann der Druckgradientenbereich zwischen dem Polymergeleinlass und dem Polymergelauslass sich über die wenigstens eine oder mehrere der Trocknerzonen erstrecken, insbesondere innerhalb einer Endzone vor einem Austragsmodul. Insbesondere kann die Endzone auch das Austragsmodul umfassen. Insbesondere kann die Endzone also in einem bevorzugten Beispiel mit einer Kombination der letzten Trocknerzone, optional auch einer vorletzten Trocknerzone, und dem Austragsmoduls des Trockneraufbaus gebildet sein. Unter einer Endzone ist vorliegend also eine Zone des Trockneraufbaus zu verstehen, welche eine Anzahl von Trocknerzonen, wenigstens aber die letzte Trocknerzone vor dem Austragsmodul umfasst; also z.B. nur die letzte Trocknerzone oder die letzte Trocknerzone und eine vorletzte Trocknerzone oder die letzte Trocknerzone und die vorletzte Trocknerzone und eine noch weitere davor (entgegen der Förderrichtung liegende Trocknerzone).

Bevorzugt kann sich eine Druckzone mit einem Druckgradientenbereich zwischen dem Polymergeleinlass und dem Polymergelauslass innerhalb einer Anzahl letzter Trocknerzonen erstrecken, die vor einem Austragsmodul in einer Endzone des Trockneraufbaus gebildet ist. Ein solcher Verlauf einer Druckänderung ist insbesondere in einer letzten Trocknerzone, insbesondere in einer Endzone vor einem Austragsmodul ausgebildet.

Insbesondere kann die Endzone auch eine Kühlzone umfassen. Die letzte Trocknerzone vor dem Austragsmodul kann vorteilhaft dazu genutzt werden, die wasserabsorbierenden Polymerpartikel abkühlen zu lassen und kann demzufolge auch ohne einen gesteigerten oder nur mit einem geringen oder mit keinem Wärmeeintrag in die wasserabsorbierenden Polymerpartikel ausgebildet sein; die letzte Trocknerzone vor dem Austragsmodul wird in diesem Sinne auch als "Kühlzone" bezeichnet; anders formuliert kann die Kühlzone ausgebildet sein, grundsätzlich einen negativen Wärmeeintrag zu ermöglichen. Die letzte Trocknerzone kann in einer Abwandlung gleichwohl auch Heizregister und/oder Wärmetauscher und dgl. aufweisen; insofern wie vorhergehende Trocknerzonen ausgebildet sein. Die letzte Trocknerzone vor dem Austragsmodul kann aber vorteilhaft in der baulichen Realisierung in Kombination mit einer vorgenannten "Kühlzone" realisiert sein, wobei die Kombination dann im folgenden als Endzone bezeichnet ist; insbesondere in dem Falle einer Endzone mit "Kühlzone" zeichnet sich eine Endzone dadurch aus, dass das getrocknete Polymergel in Form der wasserabsorbierenden Polymerpartikel bei gleicher Temperatur oder bevorzugt kälter austritt als es eintritt. Beispielsweise ist es möglich, dass das getrocknete Polymergel in Form der wasserabsorbierenden Polymerpartikel aus einer letzten Trocknerzone bei geringerer Temperatur, d. h. "kälter", austritt als es eintritt. Beispielsweise ist es auch möglich, dass das getrocknete Polymergel in Form der wasserabsorbierenden Polymerpartikel aus einer vorletzten Trocknerzone bei geringerer Temperatur, d. h. "kälter", austritt als es eintritt und in eine letzte Trocknerzone bei gleicher Temperatur austritt wie es eintritt.

Insbesondere können Drücke am Rand einer Druckzone, insbesondere am Rand eines Trockneraufbaus angepasst werden. Insbesondere sollen vorteilhaft nur geringe Druckdifferenzen zum Umgebungsdruck (etwa Atmosphärendruck) der Umgebung, insbesondere der Umgebung außerhalb des Trockneraufbaus, bestehen bleiben. So ist vorteilhaft die in Förderrichtung des Polymergels zweite Druckdifferenz geringer als die erste Druckdifferenz im Bereich einer Endzone des Trockneraufbaus vor einem Austragsmodul. Bevorzugt kann sich gemäß einer zweiten Variante auch eine oder mehrere Druckzonen innerhalb einer einzigen der Trocknerzonen erstrecken und der Druckgradientenbereich zwischen dem Polymergeleinlass und dem Polymergelauslass auf diese einzige Trocknerzone beschränkt sein. Bevorzugt kann sich dann eine Druckzone mit einem Druckgradientenbereich zwischen dem Polymergeleinlass und dem Polymergelauslass innerhalb dieser einzigen Trocknerzone erstrecken. Beispielsweise kann durch den gesamten Trockneraufbau eine einzige Trocknerzone gebildet sein; der Innenraum des Trockneraufbaus kann als eine einzige Druckzone ausgebildet sein.

Erfindungsgemäß ist der Innenraum des Trockneraufbaus weitgehend bei einem Unterdruck p_U in einem Bereich bis zu maximal -10mbar, insbesondere bei einem Unterdruck (p_U) ab wenigstens -5mbar, vorzugsweise bei einem Unterdruck (p_U) zwischen -0.5mbar bis -7mbar oder vorzugsweise bei einem Unterdruck zwischen - 0,5mbar bis -5mbar gegenüber dem Umgebungsdruck im Außenraum des Trockneraufbaus gehalten. Insbesondere ist der Umgebungsdruck ein Atmosphärendruck außerhalb des Trockneraufbaus. Insbesondere ist der Umgebungsdruck ein Atmosphärendruck im Wesentlichen außerhalb des Trockneraufbaus, gegebenenfalls noch im Auftrags- und/oder Austragsmodul. Bevorzugt ist ein Druckprofil eines Druckverlaufs in der Druckzone innerhalb physikalischer Grenzen unabhängig von einem Umgebungsdruck einstellbar.

Eine Druckdifferenz zum Atmosphärendruck liegt vorteilhaft typischerweise bei oder nahe 0 mbar bevorzugt am Ende des Trockneraufbaus. Diese Weiterbildung betrifft insbesondere speziell den "Rand des Lufttrockners"; also den Rand des Luftrockneraufbaus zum Austragsmodul bzw. die Grenze der letzten Trocknerzone zum Austragsmodul. An der, insofern insbesondere hinteren, Grenze des Trockneraufbaus kann Falschluft eingezogen werden. Die Weiterbildung geht von der Überlegung aus, dass ein dem Umgebungsdruck, insbesondere Atmosphärendruck, angeglichenes Druckprofil, insbesondere mittels einem Druckgradientenbereich graduell angeglichenes Druckprofil einen Falschlufteintrag und/oder Partikeleintrag verringert.

Die erste und zweite Druckdifferenz zum Umgebungsdruck kann auf einen Innendruck oberhalb des Förderbandes bezogen sein, wobei der Innendruck oberhalb des Förderbandes ein Unterdruck im Bereich bis zu -10mbar ist, vorzugsweise bis zu -5mbar ist. Insbesondere kann ein Innendruck unterhalb des Förderbandes um einen Wert zwischen 0.5mbar und 5mbar gegenüber dem Innendruck oberhalb des Förderbandes abgesenkt sein. Diese Maßgabe hat sich als vorteilhaft erwiesen für den Fall, dass Trocknungsluft in den Trockneraufbau jedenfalls überwiegend, beispielsweise mittels einem Umluftventilator, von oberhalb des Förderbandes nach unten eingebracht wird. Selbst wenn keine neue Luft eingebracht wird, sorgt die durch einen Umluftventilator hervorgerufene "Drucktrennung" dafür, dass oberhalb und unterhalb des Förderbandes verschiedene Drücke herrschen. Bevorzugt ist --wiederum für den Fall, dass Trocknungsluft in den Trockneraufbau jedenfalls überwiegend oberhalb des Förderbandes eingebracht wirddie erste und zweite Druckdifferenz zum Umgebungsdruck bezogen auf einen Innendruck oberhalb des Förderbandes, wobei die erste Druckdifferenz zum Atmosphärendruck zwischen -10mbar und -1mbar beträgt, insbesondere zwischen -10 mbar und -0.5 mbar, und die zweite Druckdifferenz zum Atmosphärendruck zwischen -3 mbar und 0 mbar, insbesondere zwischen -2 mbar und 0 mbar, insbesondere zwischen -0.5mbar und Ombar beträgt.

Eine im Prinzip umgekehrte Tendenz ergibt sich, wenn in einer Abwandlung Trocknungsluft in den Trockneraufbau jedenfalls überwiegend, beispielsweise mittels eines Umluftventilators, von unterhalb des Förderbandes nach oben eingebracht wird. Für den Fall, dass Trocknungsluft in den Trockneraufbau überwiegend unterhalb des Förderbandes eingebracht wird, ergibt sich entsprechend umgekehrt vorzugsweise, dass ein Innendruck oberhalb des Förderbandes um einen Wert zwischen 0.5mbar und 5mbar gegenüber dem Innendruck unterhalb des Förderbandes abgesenkt ist. Dabei kann es vorteilhaft sein, dass die erste und zweite Druckdifferenz zum Umgebungsdruck bezogen auf einen Innendruck unterhalb des Förderbandes ist, wobei der Innendruck unterhalb des Förderbandes ein Unterdruck im Bereich bis zu -10mbar ist, vorzugsweise bis zu -5mbar ist. Insbesondere kann die erste und zweite Druckdifferenz zum Umgebungsdruck bezogen auf einen Innendruck unterhalb des Förderbandes sein, wobei die erste Druckdifferenz zum Atmosphärendruck zwischen -10mbar und -1mbar beträgt, insbesondere zwischen -10 mbar und -0.5 mbar, und die zweite Druckdifferenz zum Atmosphärendruck zwischen -3 mbar und 0 mbar, insbesondere zwischen -2 mbar und 0 mbar, insbesondere zwischen -0.5mbar und Ombar beträgt.

Das Druckprofil kann in einer Anzahl von Druckabschnittsverläufen durchlaufen werden, bis der Atmosphärendruck oder eine Annäherung zum Atmosphärendruck erreicht ist. Es hat sich dementsprechend als besonders vorteilhaft erwiesen, dass eine Druckzone eine Anzahl von Druckzonenteilbereichen aufweist, in welchen jeweils ein Druckabschnittsverlauf realisiert ist. Insbesondere kann eine Druckzone eine Anzahl von oben genannten Querwänden aufweisen, welche einen Druckverlauf in der Druckzone in Druckabschnittsverläufe aufteilt.

Gemäß einer besonders bevorzugten Weiterbildung ist eine Druckdifferenz zwischen Polymergeleinlass und Polymergelauslass einer Druckzone im Trockneraufbau unterschiedlich. Vor allem am Polymergelauslass einer Druckzone ist ein Innendruck bevorzugt dem Atmosphärendruck nahezu angenähert, um einen Eintrag von Falschluft und/oder einen Eintrag von Superabsorber-Fein- und Feinstpartikel durch Falschluft zu verringern; dies insbesondere im Bereich einer Endzone.

Insbesondere ein stufenweise dem Atmosphärendruck sich annäherndes Druckprofil mit wenigstens einer Druckstufe hat sich als vorteilhaft erwiesen. Vorzugsweise erstreckt sich das Druckprofil über die Länge einer Druckzone, insbesondere eine Länge einer Trocknerzone für den Fall, dass die Druckzone auf eine Trocknerzone beschränkt ist. Dadurch lässt sich eine Druckstufe mit vergleichsweise hoher Druckamplitude am Polymergelauslass der Druckzone vermeiden bzw. eine Druckamplitude mindern. Ein verminderter Falschlufteintrag verbessert die Energieeffizienz und verringert einen Superabsorber-Partikel, Fein- und Feinstpartikeleintrag in den Trockneraufbau des Bandtrockners bzw. in den Innenraum des Lufttrockneraufbaus durch Mitreißen von Partikeln.

Ein Druckprofil weist einen Druckgradienten zwischen dem Polymergeleinlass und dem Polymergelauslass einer Druckzone auf und wird ausgebildet bzw. stellt sich ein gemäß den Druckbedingungen an dem Polymergeleinlass und dem Polymergelauslass. Dabei bildet die Druckzone einen drucktechnisch einstellbaren Bereich eines Innenraumes eines Trockneraufbaus. Für diese können hinsichtlich spezifischer Einstellungen die vorgegebenen Prozessparameter eingehalten werden und dennoch kann dem Eintrag von Superabsorber Partikeln, Fein- und Feinstpartikeleintrag, insbesondere mit Falschluft, entgegen gewirkt werden.

Bevorzugt kann eine Unterdruckeinstellung im Trockneraufbau des Bandtrockners umgesetzt werden; nämlich vorteilhaft mit einer Trocknungsluftführung im Gegenstrom.

Zum Trocknen ist bevorzugt vorgesehen, dass eine am Trockneraufbau luftrückführend anschließende Luftentnahmeführung und eine am Trockneraufbau luftzuführend anschließende Luftrückführung, die mit der Luftentnahmeführung, insbesondere über Einbauten verbunden ist, wobei Rückführluft aus dem Trockneraufbau, insbesondere einer Endzone (EZ), entnommen und über die Luftrückführung dem Trockneraufbau, insbesondere einer Trocknerzone vor einer Endzone (EZ), wieder zugeführt wird, wobei eine Luftentnahmeführung und/oder Luftrückführung mit einer Druckzone strömungsverbunden ist, insbesondere über eine Luftführungsöffnung zu einer Druckzone mündet.

Zusätzlich oder alternativ hat es sich als vorteilhaft erwiesen, dass Abluft aus dem Trockneraufbau wenigstens teilweise in einer Abluftführung abgeführt wird, wobei die Abluftführung über eine weitere Luftführungsöffnung zu einer Druckzone mündet.

Zusätzlich oder alternativ hat sich als vorteilhaft erwiesen, dass der Bandtrockner als ein mit Umluft betriebener Umluftbandtrockner ausgebildet ist, der zur Führung von Umluft mit einem das Förderband weitgehend umfassenden Trockneraufbau gebildet ist, bei dem die Trocknungsluft als Umluft in einer Trockenzone (TZ) als Umluft (UL) umgewälzt wird, insbesondere quer zur Gegenstrom-Richtung (C') umgewälzt wird.

Bevorzugt kann also zusätzlich ein Umluftbetrieb im Trockneraufbau des Umluftbandtrockners umgesetzt werden; nämlich weiter bevorzugt im Kreuzgegenstrom d.h. zusätzlich unter Nutzung von Umluft quer zum Gegenstrom. Eine Umluft kann beispielsweise von oben und/oder unten durch das Förderband und durch das aufliegende Polymergel; d.h. quer zum und durch den Polymergelstrom geführt werden, z.B. wie dies in WO 2006/100300 A1 beschrieben ist. Die Weiterbildung hat erkannt, dass es gleichwohl vorteilhaft ist, eine oder mehrere Druckzonen vorzusehen, insbesondere einen Druck in einer Druckzone gemäß dem Konzept anzupassen.

Bevorzugt wird eine Umluftführung und/oder Luftrückführung und/oder Luftabführung vorgesehen. Bevorzugt wird lediglich in einem Endbereich zum Polymergelauslass einer Druckzone, insbesondere Trocknerzone, ein Druckprofil desselben eingestellt, um einen Eintrag von Superabsorber, Fein- und Feinstpartikeleintrag in den Trockneraufbau zu verringern und damit Reinigungs- und Wartungsarbeiten deutlich zu reduzieren. Insbesondere hat eine besonders bevorzugte Weiterbildung darüberhinaus erkannt, dass in einem oben genannten kontrollierbaren Bereich des Trockneraufbaus ein Trocknungsprofil eingestellt werden kann, nämlich mit ggfs. eingestellten Temperaturen, Drücken, Feuchtigkeitsausträgen, den Einstellungen für ein Luftrückführsystem und dergleichen.

Bei einem Druckprofil, z. B. mit einem Druckgradientenbereich, sollte dabei eine Druckdifferenz am Polymergeleinlass und/oder Polymergelauslass einer Druckzone, derart reduziert sein, dass der Innendruck der Druckzone einem Umgebungsdruck, insbesondere Atmosphärendruck, in zunehmendem Maße angeglichen wird. Bevorzugt weist die Druckzone mindestens eine Drossel an einem Polymergeleinlass der Druckzone und mindestens eine Drossel an einem Polymergelauslass der Druckzone auf. Ein Druckprofil ist hinsichtlich einer Druckzone bevorzugt bereits durch die Zuluft und/oder Abluft einstellbar bzw. durch drosselbare Zuläufe an Luft bzw. Abführungen an Luft einstellbar. Bevorzugt wird ein Druckprofil eines Druckverlaufs in der Druckzone unabhängig von einem Umgebungsdruck eingestellt, und/oder es bildet sich das Druckprofil durch eine Einstellung einer Klappe oder Drossel aus. Insbesondere kann eine Eingangseinstellung einer Eingangsdrossel oder Eingangsklappe an einem Polymergeleinlass zu einer Druckzone und/oder eine Ausgangseinstellung einer Ausgangsdrossel oder Ausgangsklappe am Polymergelauslass zu einer Druckzone ein Druckprofil bestimmen.

Im Folgenden werden besonders bevorzugte bauliche Maßnahmen an einem Trockneraufbau erläutert.

Bevorzugt ist der Bandtrockner als ein modularer Bandtrockner gebildet mit einem Eintragsmodul, einem Trocknermodul und einem Austragsmodul, wobei wenigstens dem Innenraum des Trockneraufbaus eine Anzahl von Druckzonen zugeordnet ist. Besonders bevorzugt kann in einer ersten Variante der Innenraum des Trockneraufbaus in eine Anzahl von Druckzonen aufgeteilt sein, wobei sich eine Druckzone über wenigstens eine oder mehrere der Trocknerzonen erstreckt. Besonders bevorzugt kann in einer zweiten Variante der Innenraum einer Trocknerzone in eine Anzahl von Druckzonen aufgeteilt sein so dass auch der Innenraum des Trockneraufbaus in eine Anzahl von Druckzonen aufgeteilt ist Ein Trockneraufbau kann modular durch eine Anzahl von Trocknerzonen gebildet sein.

In einem Austragsmodul können wie erläutert größere Mengen an Superabsorber-Partikeln, Fein- und Feinstpartikeln durch das Abwerfen und Brechen des getrockneten Strangs von Polymergel entstehen. Vorteilhaft zeigt sich, dass mit einer Anpassung der Drücke am Rand einer Druckzone gemäß dem Konzept ein unkontrollierter Partikeleintrag und/oder Falschlufteintrag an einer Anfangs- oder Endzone in den Innenraum des Trockneraufbaus verringert wird. Insbesondere in einer Anfangszone ist ein durch eine Druckdifferenz bewirkter unkontrollierter Falschlufteintrag vom Eintragsmodul in den Innenraum des Trockneraufbaus zu verringern; dies führt zu einer besseren Energieeffizienz des Verfahrens, da ein verringerter Falschlufteintrag auch weniger Kaltlufteintrag bedeutet, der teilweise energetisch auszugleichen wäre und teilweise als Kurzschlussstrom lediglich zu einem erhöhten Luftdurchsatz mit erhöhtem Energieeinsatz führt und kalte Luft das heiße Polymergel eher abkühlt und dadurch die Trocknungsgeschwindigkeit des Gutes verringert. Das Konzept der Weiterbildungen setzt in überraschender Weise mit Überlegungen an, die nicht nur polymergelspezifisch zu betrachten sind. Vorteilhaft werden, über einen Trocknungsprozess hinaus, auch zusätzliche prozesstechnische relevante Größen der Reinigungs- und Wartungsarbeiten berücksichtigt.

Vorteilhaft wurde erkannt, dass, um Reinigungs- und Wartungsarbeiten innerhalb des Bandtrockners zu verringern, die Anhäufung von Superabsorber-Partikeln, Fein- und Feinstpartikeln oder sonstigen Partikeln innerhalb der Anlage weitestgehend zu vermeiden ist, jedenfalls aber zu verringern ist gemäß einer oder mehrerer der vorgenannten Weiterbildungen. Insgesamt soll eine höhere Prozessausbeute und/oder bei geringerem Energiebedarf erreicht werden. Insoweit bietet sich der Vorteil, dass ein Abweichen von besonders optimierten Prozessparametern möglichst gering ausfällt bzw. die Häufigkeit einer Abweichnotwendigkeit verringert ist gemäß einer oder mehrerer der vorgenannten Weiterbildungen. Vorteilhaft ist vorgesehen, dass das Herstellungsverfahren zur insbesondere kontinuierlichen Herstellung wasserabsorbierender Polymerpartikel hinsichtlich des Trocknungsschrittes spezifisch verbessert wird bzw. der Bandtrockner mit spezifischen Baumaßnahmen zum Trocknermodul verbessert wird.

Bevorzugt ist, dass in der wenigstens einen Druckzone im Innenraum des Trockneraufbaus die Druckzone oder ein Druckzonenteilbereich von dieser mittels einer Querwand, die quer zur Förderrichtung des Förderbandes orientiert ist, begrenzt wird, insbesondere ein Druckgradientenbereich mittels der Querwand gebildet werden kann. Insbesondere weist eine Druckzone eine Druckzonengrenze, einen Polymergeleinlass und/oder einen Polymergelauslass auf, wobei die Druckzonengrenze mittels einer Querwand im Innenraum des Trockneraufbaus gebildet ist, wobei die Querwand quer zur Förderrichtung des Förderbandes orientiert ist und am Trockneraufbau befestigt ist.

Bevorzugt kann auch sein, dass eine Druckzone eine Druckzonengrenze aufweist, wobei die Druckzonengrenze mittels einer Außen-Querwand bei einer Luftführungsöffnung gebildet ist und am Trockneraufbau, insbesondere an einer Trocknerzone, befestigt ist.

Bevorzugt weist eine Druckzone eine Innen-Querwand innerhalb der Druckzone zwischen einem Polymergeleinlass und einem Polymergelauslass zur Ausbildung eines Druckgradientenbereichs auf, insbesondere ist die Innen-Querwand neben einer Außen-Querwand einer Druckzone gebildet.

Bauliche Maßnahmen können im Wesentlichen, insbesondere im Bereich einer Endzone des Trockneraufbaus, derart ausgeführt werden, dass gegenüber der Situation an einem Polymergeleinlass die Druckdifferenz zu einem Umgebungsdruck an einem Polymergelauslass einer Druckzone, insbesondere einer Trocknerzone, eher niedriger ist.

Eine weitere bevorzugte Weiterbildung sieht vor, dass die Endzone eine letzte Trocknerzone des Aufbaus des Bandtrockners aufweist. Bevorzugt bildet sich das Druckprofil in einer Endzone umfassend eine letzte Trocknerzone, insbesondere in einer letzten Trocknerzone, aus. Eine Endzone umfasst eine letzte Trocknerzone, insbesondere mehrere Trocknerzonen, insbesondere auch das Austragsmodul. Problematisch ist, dass der Superabsorber Fein- und Feinstpartikeleintrag durch Falschluft insbesondere von dem Austragsmodul in die letzte Trocknerzone erfolgen kann, da das Austragsmodul unmittelbar angrenzt an das letzte Trocknungsmodul. Aufgrund einer vergleichsweise geringen Druckdifferenz gemäß der Weiterbildung kann ein Eintrag von Falschluft Superabsorber Fein- und Feinstpartikel verringert werden. Es ist mit dem Konzept der Weiterbildung vorteilhaft möglich, in der Endzone umfassend eine letzte Trocknerzone, insbesondere in der letzten Trocknerzone, das Druckprofil derartig einzustellen, dass am Trocknerzonenauslass (d.h. in Förderrichtung C des Polymergels am Auslass für das Polymergel aus der Trocknerzone) ein Atmosphärendruck oder ein nahezu angenäherter Atmosphärendruck eingestellt werden kann.

Insbesondere ist eine Querwand im Innenraum des Trockneraufbaus vorgesehen, die quer zur Förderrichtung des Förderbandes orientiert ist und die mindestens ein Segmentierungselement aufweist. Bevorzugt umfasst eine Querwand im Innenraum des Trockneraufbaus ein oberes Segmentierungselement oberhalb des Förderbandes und/oder ein unteres Segmentierungselement unterhalb des Förderbandes und/oder ein mittleres Segmentierungselement zwischen einem in Förderrichtung laufenden Teil des Förderbandes und einem gegen die Förderrichtung laufenden Teil des Förderbandes.

Insbesondere ist vorgesehen, dass in einer Endzone umfassend eine letzte Trocknerzone, das Druckprofil mittels einem oder einer Anzahl von Querwänden, insbesondere umfassend Segmentierungselemente, zur zusätzlichen räumlichen Unterteilung ausgebildet wird. Die Weiterbildung des Bandtrockners sieht vor, dass sich ein Druckprofil durch mindestens ein Segmentierungselement aufgrund einer zusätzlichen räumlichen Unterteilung ausbildet. In dieser Weiterbildung wird mit dem Segmentierungselement eine Druckdifferenz bzw. ein Druckprofil zwischen einem ersten Bereich und einem zweiten Bereich einer Druckzone erzielt. Vorteilhaft wird dadurch der Falschlufteintrag durch die Einstellung einer minimalen Druckdifferenz zur Umgebung am Polymergelaustrag der Endzone minimiert.

Ein Segmentierungselement ist bevorzugt als ein einen Druckunterschied hervorrufender Teil der Querwand gebildet. Ein Segmentierungselement ist in seiner Größe und Form grundsätzlich jedoch nicht eingeschränkt; grundsätzlich kann ein Segmentierungselement verschiedenartig gestaltet werden. Das Segmentierungselement kann an sich als Teil offen gestaltet werden. Beispielsweise kann die Struktur des Segmentierungselements die eines Lochbleches oder eines Gitters oder eines Pendelblechs beinhalten. Eine Anzahl von Segmentierungselementen kann beispielsweise als Bleche gebildet sein.

Insbesondere kann ein oberes Segmentierungselement einstückig und/oder mit Pendelblechen ausgebildet sein. Insbesondere kann mindestens ein oberes Segmentierungselement höhenverstellbar sein.

Ein Segmentierungselement kann an einer Wandung, d. h. an einer oder mehreren Seitenwänden und/oder Decke, eines Trockneraufbaus des Trocknermoduls angebracht werden. Insbesondere kann ein Segmentierungselement von oben herabhängend gebildet sein. Es kann in einer festen Einbauweise oder in einer losen Einbauweise gestaltet sein. Insbesondere kann das Segmentierungselement fest an die Seitenwand angebunden sein.

Eine Anbringung des Segmentierungselements ist ebenfalls grundsätzlich nicht eingeschränkt. Grundsätzlich eignet sich jede Art einer Anbringung oder Form, die einen Druckunterschied hervorrufen kann. Das Segmentierungselement kann z. B. oberhalb, oder unterhalb des Bandes angeordnet sein; falls notwendig, je nach Bandrückführung, auch zwischen einem vorlaufenden und rücklaufenden Bandteil angeordnet sein.

Ein Segmentierungselement kann einstückig ausgebildet sein oder segmentiert sein. Es kann als einstückiges Segmentierungselement ähnlich wie Bleche einstückig eingebracht werden. Es kann als segmentiertes Segmentierungselement aber auch aus mehreren Stücken aufgebaut sein, die jedoch fest und unbeweglich oder nur wenig beweglich sind oder auch als feste, nicht-pendelnde Bleche gebildet sind. Z. B. kann in einer bevorzugten Abwandlung auch aus mehreren Stücken aufgebaut sein und eine oder mehrere Stücke können pendeln, sodass das Segmentierungselement mit Pendelblechen ausgebildet ist. Das Segmentierungselement kann in seinem segmentierten und/oder pendelnden Aufbau im Betrieb variabel sein. Es kann auch als festes, nicht-pendelndes Blech mit zusätzlichen Pendelblechen versehen sein oder bereits an seiner Aufhängung pendeln und damit insgesamt als Pendelblech ausgebildet sein. Dabei ist zu beachten, dass ein auf dem Förderband aufgebrachtes Polymergel durch den Einbau eines Segmentierungselementes nicht beeinträchtigt werden sollte, insbesondere möglichst nicht mit einem mechanischen Druck beaufschlagt werden sollte bevorzugt nicht oder nur wenig mit dem/den Segmentierungselementen in Kontakt kommen sollte.

Vorzugsweise ist vorgesehen, dass in der Druckzone, insbesondere in der Trocknerzone, das Druckprofil durch einen drosselbaren Volumenstrom an Zuluft am Polymergeleinlass der Druckzone und einen drosselbaren Volumenstrom an Abluft am Polymergelauslass der Druckzone ausgebildet wird. Dabei soll eine Einstellung der Volumenströme ein entsprechendes Druckniveau am Polymergeleinlass und/oder vorgeben, um so ein geeignetes Druckprofil für eine Druckzone auszubilden.

Eine Weiterbildung sieht vor, dass sich in der Druckzone im Bereich der Endzone ein Druckprofil ausbildet, wobei die zweite Druckdifferenz zum Atmosphärendruck an einem Polymergelauslass (d.h. in Förderrichtung C des Polymergels am Auslass für das Polymergel aus der Druckzone) absolut zwischen -2 mbar und 0 mbar beträgt besonders bevorzugt zwischen -1 mbar und 0 mbar beträgt. Die Weiterbildung hat erkannt, dass ein definierter Wert einer Differenz von - 2 mbar bis 0 mbar, insbesondere jedoch -1 mbar bis Ombar zum Atmosphärendruck vorteilhaft ausreicht, um den Eintrag von Superabsorber-Partikeln, Fein- und Feinstpartikeln oder sonstigen Partikeln und/oder Falschlufteintrag im Bereich einer Endzone und/oder Aufgabezone zu verringern.

Das Segmentierungselement kann zum Aufbau eines Druckprofils in der Höhe einstellbar sein; z.B. mit nicht weniger als 30cm Freiraum zur Polymergeloberfläche, bevorzugt mit nicht weniger als 20cm zur Polymergeloberfläche, ganz bevorzugt mit nicht weniger als 10cm zur Polymergeloberfläche, wenn feste, nicht bewegliche Segmentierungselemente verwendet werden. Werden bewegliche Segmentierungselemente wie beispielsweise Pendelbleche verwendet, dann kann der Freiraum zur Polymergeloberfläche bevorzugt 0cm betragen. Ein Montieren des Segmentierungselements ist vor allem oberhalb des Bandes von Vorteil, da sich hierbei der größte Volumenstrom der zirkulierten Luft und gleichzeitig hier der größte Volumenraum an Luft zur Verfügung stehen. Bevorzugterweise wird das Segmentierungselement oberhalb des Bandes und/oder unterhalb des Bandes und/oder ggfs. zwischen den Bandteilen installiert. Durch eine vorteilhafte Weiterbildung dahingehend, dass das Segmentierungselement oberhalb des Bandes und unterhalb des Bandes und zwischen den Bandteilen installiert ist, kann leichter eine Druckdifferenz reduziert werden am Polymergelauslass einer Druckzone. Insbesondere kann sich prozesstechnisch die zu fördernde wässrige Polymergelmasse in ihrer Dicke verändern; abhängig davon kann bevorzugt die Höhe des Segmentierungselements über der Polymergelschicht auf dem Förderband in Bezug auf eine Polymergelaufgabe eingestellt werden.

Das Konzept lässt sich insbesondere umsetzen mit einem Herstellungsverfahren, aufweisend die Schritte:
- Prozessieren einer Monomer-Lösung oder -Suspension unter Polymerisation zu einem wässrigen Polymergel,
- Trocknen des wässrigen Polymergels in einem Bandtrockner, wobei der Bandtrockner ein zirkulierendes Transportband hat und das wässrige Polymergel auf dem Transportband gefördert wird. Bevorzugt ist dabei vorgesehen, dass
- das Transportband als ein Plattentransportband gebildet ist, aufweisend eine Anzahl von Bandplatten die an einer Gelenklinie einer Gelenkkonstruktion getrennt sind und wobei jede Bandplatte eine Oberfläche zur Aufnahme des wässrigen Polymergels hat.

Insbesondere kann dieses Herstellungsverfahren umfassen: Prozessieren einer Monomer-Lösung oder -Suspension unter Polymerisation zu einem vernetzten wässrigen Polymergel.

Im Rahmen einer besonders bevorzugten Weiterbildung wurde erkannt, dass das Konzept von besonderem Vorteil ist für einen speziellen Herstellungsprozess für Superabsorber, der im folgenden mit einigen Weiterbildungen beschrieben wird und zum Teil auch in WO2006/100300 A1 näher erläutert ist, deren Offenbarungsgehalt hiermit durch Zitat in den Offenbarungsgehalt der vorliegenden Anmeldung aufgenommen ist.

Insbesondere betrifft dies ein Herstellungsverfahren zur Herstellung wasserabsorbierender Polymerpartikel mit Polymerisation einer Monomer-Lösung oder -Suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
   optional ein oder mehrere wasserlösliche Polymere.

Die wasserabsorbierenden Polymerpartikel werden mit Polymerisation einer Monomer-Lösung oder -Suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure und/oder deren Salze. Ganz besonders bevorzugt ist Acrylsäure und/oder deren Salze.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomer-Lösung enthält vorzugsweise bis zu 250 Gew.-ppm, bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf das unneutralisierte Monomer a). Beispielsweise kann zur Herstellung der Monomer-Lösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraallyloxyethan, Methylenbismethacrylamid, 15-fach ethoxyliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,2 bis 0,5 Gew.-%, jeweils bezogen auf Monomer a). Mit steigendem Vernetzergehalt sinkt die Zentrifugenretentionskapazität (CRC) und die Absorption unter einem Druck von 21,0 g/cm² durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite^{®} FF6 und Brüggolite^{®} FF7 (Brüggemann Chemicals; Heilbronn; Deutschland) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomer-Lösung verwendet. Der Wassergehalt der Monomer-Lösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich, Monomersuspensionen, d.h. Monomer-Lösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomer-Lösung vor der Polymerisation durch Inertisierung, d. h. Durchströmen mit einem inerten Gas, vorzugsweise Stickstoff oder Kohlendioxid, von gelöstem Sauerstoff befreit werden. Vorzugsweise wird der Sauerstoffgehalt der Monomer-Lösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomer-Lösung oder -Suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Zur Verbesserung der Trocknungseigenschaften kann das mittels eines Kneters erhaltene zerkleinerte Polymergel zusätzlich extrudiert werden.

Es ist aber auch möglich, eine wässrige Monomer-Lösung zu vertropfen und die erzeugten Tropfen in einem erwärmten Trägergasstrom zu polymerisieren. Hierbei können die Verfahrensschritte Polymerisation und Trocknung zusammengefasst werden, wie in WO 2008/040715 A2, WO 2008/052971 A1 und WO 2011/026876 A1 beschrieben.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden wässrigen Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomer-Lösung zugesetzt und der gewünschte Endneutralisationsgrad erst nach der Polymerisation auf der Stufe des wässrigen Polymergels eingestellt wird. Wird das wässrige Polymergel zumindest teilweise nach der Polymerisation neutralisiert, so wird das wässrige Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene wässrige Gelmasse noch mehrmals zur Homogenisierung extrudiert werden.

Das wässrige Polymergel wird dann vorzugsweise mit einem Bandtrockner getrocknet bis sich ein gewünschter, bevorzugt niedriger Wassergehalt einstellt, insofern insbesondere ein Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Mass Loss Upon Heating" bestimmt wird. Bei einer zu hohen Restfeuchte weist das getrocknete Polymergel eine zu niedrige Glasübergangstemperatur T_{g} auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des wässrigen Polymergels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als gemahlene Polymerpartikel abgetrennten superabsorbierenden Polymerpartikel beträgt vorzugsweise mindestens 200 µm, besonders bevorzugt von 250 bis 600 µm, ganz besonders von 300 bis 500 µm. Die mittlere Partikelgröße der Polymerpartikel kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Polymerpartikeln mit einer Partikelgröße von größer 150 µm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel ("fines") niedrig sein.

Zu kleine Polymerpartikel werden daher üblicherweise abgetrennt und in das Verfahren rückgeführt. Die Rückführung erfolgt vorzugsweise vor, während oder unmittelbar nach der Polymerisation, d.h. vor der Trocknung des wässrigen Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise im letzten Drittel des Knetreaktors zugesetzt.

Werden die zu kleinen Polymerpartikel sehr früh zugesetzt, beispielsweise bereits zur Monomer-Lösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden. Die zu kleinen Polymerpartikel können auch später zugesetzt werden, könnten dann aber ggfs. nur unzureichend eingearbeitet werden.

Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 µm, beträgt vorzugsweise mindestens 90 Gew.-%, besonders bevorzugt mindesten 95 Gew.-%, ganz besonders bevorzugt mindestens 98 Gew.-%.

Der Anteil an Partikeln mit einer Partikelgröße von höchstens 600 µm, beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel können zur weiteren Verbesserung der Eigenschaften oberflächennachvernetzt werden. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidinon und dessen Derivate, wie 2-Hydroxyethyl-2-oxazolidinon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidinone, in DE 102 04 937 A1 zyklische Harnstoffe, in DE 103 34 584 A1 bizyklische Amidoacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyl-2-oxazolidinon, 2-Oxazolidinon und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 5 Gew.-%, besonders bevorzugt 0,02 bis 2 Gew.-%, ganz besonders bevorzugt 0,05 bis 1 Gew.-%, jeweils bezogen auf die Polymerpartikel.

In einer bevorzugten Ausführungsform werden vor, während oder nach der Oberflächennachvernetzung zusätzlich zu den Oberflächennachvernetzern polyvalente Kationen auf die Partikeloberfläche aufgebracht.

Die im Herstellungsverfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Hydroxid, Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat, Citrat und Lactat, möglich. Es sind auch Salze mit unterschiedlichen Gegenionen möglich, beispielsweise basische Aluminiumsalze, wie Aluminiummonoacetat oder Aluminiummonolaktat. Aluminiumsulfat, Aluminiummonoacetat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1 Gew.-%, vorzugsweise 0,005 bis 0,5 Gew.-%, besonders bevorzugt 0,02 bis 0,2 Gew.-%. jeweils bezogen auf die Polymerpartikel.

Die Oberflächennachvernetzung wird üblicherweise so durchgeführt, dass eine Lösung des Oberflächennachvernetzers auf die getrockneten, gemahlenen und abgesiebten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar^{®} Mischer (Gebr. Lödige Maschinenbau GmbH; Paderborn; Deutschland), Vrieco-Nauta Continuous Mixer (Hosokawa Micron BV; Doetinchem; Niederlande), Processall Mixmill Mixer (Processall Incorporated; Cincinnati; USA) und Schugi Flexomix^{®} (Hosokawa Micron BV; Doetinchem; Niederlande). Es ist aber auch möglich die Oberflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex^{®} Horizontal Paddle Dryer (Hosokawa Micron GmbH; Leingarten; Deutschland), Hosokawa Bepex^{®} Disc Dryer (Hosokawa Micron GmbH; Leingarten; Deutschland), Holo-Flite^{®} dryers (Metso Minerals Industries Inc.; Danville; USA) und Nara Paddle Dryer (NARA Machinery Europe; Frechen; Deutschland). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

In einer bevorzugten Ausführungsform werden die oberflächennachvernetzten, wasserabsorbierenden Polymerpartikel nach der thermischen Trocknung gekühlt. Die Kühlung wird vorzugsweise in Kontaktkühlern, besonders bevorzugt Schaufelkühlern, ganz besonders bevorzugt Scheibenkühlern, durchgeführt. Geeignete Kühler sind beispielsweise Hosokawa Bepex^{®} Horizontal Paddle Cooler (Hosokawa Micron GmbH; Leingarten; Deutschland), Hosokawa Bepex^{®} Disc Cooler (Hosokawa Micron GmbH; Leingarten; Deutschland), Holo-Flite^{®} coolers (Metso Minerals Industries Inc.; Danville; USA) und Nara Paddle Cooler (NARA Machinery Europe; Frechen; Deutschland). Überdies können auch Wirbelschichtkühler eingesetzt werden.

Im Kühler werden die oberflächennachvernetzten, wasserabsorbierenden Polymerpartikel auf 20 bis 150°C, vorzugsweise 30 bis 120°C, besonders bevorzugt 40 bis 100°C, ganz besonders bevorzugt 50 bis 80°C, abgekühlt.

Anschließend können die oberflächennachvernetzten, wasserabsorbierenden Polymerpartikel erneut klassiert werden, wobei zu kleine und/oder zu große Polymerpartikel abgetrennt und in das Verfahren rückgeführt werden.

Die oberflächennachvernetzten, wasserabsorbierenden Polymerpartikel können zur weiteren Verbesserung der Eigenschaften beschichtet und/oder nachbefeuchtet werden, insbesondere mit Additiven oder sonstigen Beschichtungen beschichtet und/oder mit Wasser nachbefeuchtet werden.

Die Nachbefeuchtung wird vorzugsweise bei 30 bis 80°C, besonders bevorzugt bei 35 bis 70°C, ganz besonders bevorzugt bei 40 bis 60°C, durchgeführt. Bei zu niedrigen Temperaturen neigen die oberflächennachvernetzten, wasserabsorbierenden Polymerpartikel zum Verklumpen und bei höheren Temperaturen verdampft bereits merklich Wasser. Die zur Nachbefeuchtung eingesetzte Wassermenge beträgt vorzugsweise von 1 bis 10 Gew.-%, besonders bevorzugt von 2 bis 8 Gew.-%, ganz besonders bevorzugt von 3 bis 5 Gew.-%, jeweils bezogen auf die oberflächennachvernetzten, wasserabsorbierenden Polymerpartikel. Durch die Nachbefeuchtung wird die mechanische Stabilität der Polymerpartikel erhöht und deren Neigung zur statischen Aufladung vermindert. Vorteilhaft wird die Nachbefeuchtung im Kühler nach der thermischen Trocknung durchgeführt.

Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verpackungsneigung der Polymerpartikel sind beispielsweise pyrogene Kieselsäure, wie Aerosil^{®} 200, und Tenside, wie Span^{®} 20.

Die gemäß dem Herstellungsverfahren hergestellten oberflächennachvernetzten, wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Feuchtegehalt gemäß der von der EDANA empfohlenen Testmethode Nr. WSP 230.2-05 "Mass Loss Upon Heating" bestimmt wird.

Die gemäß dem Herstellungsverfahren hergestellten oberflächennachvernetzten, wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der oberflächennachvernetzten, wasserabsorbierenden Polymerpartikel beträgt üblicherweise weniger als 60 g/g. Die Zentrifugenretentionskapazität (CRC) wird gemäß der von der EDANA empfohlenen Testmethode Nr. WSP 241.2-05 "Fluid Retention Capacity in Saline, After Centrifugation" bestimmt.

Die gemäß dem Herstellungsverfahren hergestellten oberflächennachvernetzten, wasserabsorbierenden Polymerpartikel weisen eine Absorption unter einem Druck von 49,2 g/cm² von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,2 g/cm² der oberflächennachvernetzten, wasserabsorbierenden Polymerpartikel beträgt üblicherweise weniger als 35 g/g. Die Absorption unter einem Druck von 49,2 g/cm² wird analog der von der EDANA empfohlenen Testmethode Nr. WSP 242.2-05 "Absorption Under Pressure, Gravimetric Determination" bestimmt, wobei statt eines Drucks von 21,0 g/cm² ein Druck von 49,2 g/cm² eingestellt wird.

Ausführungsbeispiele der Erfindung werden nun nachfolgend anhand der Zeichnung beschrieben. Diese soll die Ausführungsbeispiele nicht notwendigerweise maßgeblich darstellen, vielmehr ist die Zeichnung, für die Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Multiplikationen und Änderungen betreffend die Form und das Detail einer Ausführungsform vorgenommen werden können, ohne von der allgemeinen Idee und dem Konzept der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee und das Konzept der Erfindung ist nicht beschränkt auf die exakte Form oder das Detail der im Folgenden gezeigten und beschriebenen Ausführungsformen oder beschränkt auf einen Gegenstand, der eingeschränkt würde im Vergleich zu dem in den Ansprüchen beanspruchten Gegenstand. Bei angegebenen Bemessungsbereichen sollen auch innerhalb der genannten Grenzen liegende Werte mit Grenzwerten offenbart und beliebig einsetzbar und durchführbar sein. Weitere Vorteile, Merkmale und Einzelheiten der Erfindung ergeben sich aus der nachfolgenden Beschreibung der bevorzugten Ausführungsbeispiele sowie anhand der Zeichnung.

Im Einzelnen zeigt die Zeichnung in
- FIG. 1: eine schematische Darstellung eines Bandtrockners, hier in Form eines ersten Umluftbandtrockners, gemäß einer besonders bevorzugten ersten Ausführungsform in einem Schnitt entlang der Förderrichtung C und entlang der Richtung des Gegenstroms C';
- FIG. 2: in (A) eine schematische Darstellung eines Bandtrockners mit einem in (B) symbolisch, nicht maßstäblich dargestellten ersten sich einstellenden Druckprofil;
- FIG. 3: in (A) eine schematische Darstellung eines Bandtrockners mit einem in (B) symbolisch, nicht maßstäblich dargestellten zweiten sich einstellenden Druckprofil;
- FIG. 4: in (A) ein Beispiel einer Drucksituation in einer Druckzone über und unter dem Förderband bei einem Bandtrockner mit einem in (B) symbolisch, nicht maßstäblich dargestellten dritten sich einstellenden Druckprofil;
- FIG. 5: in (A) eine schematische Darstellung eines Bandtrockners mit einer beispielhaften Ausführung von Querwänden zur Begrenzung einer Druckzone und zur Darstellung eines Druckgradientenbereichs in einer Druckzone mit in (B) einem symbolisch, nicht maßstäblich dargestellten, vierten sich einstellenden Druckprofil und in (C) einer Vorderansicht einer Querwand mit Rahmen;
- FIG. 6: eine besonders bevorzugte Ausführungsform eines Herstellungsverfahrens anhand eines schematisierten Flussdiagramms;
- FIG. 7: eine schematische Darstellung eines Bandtrockners gemäß einer weiteren besonders bevorzugten Ausführungsform in einem Schnitt entlang der Förderrichtung C und entlang der Richtung des Gegenstroms C' sowie in (X) mit einer Detail-Darstellung eines symbolisch, nicht maßstäblich dargestellten, möglichen Druckgradientenverlaufs.

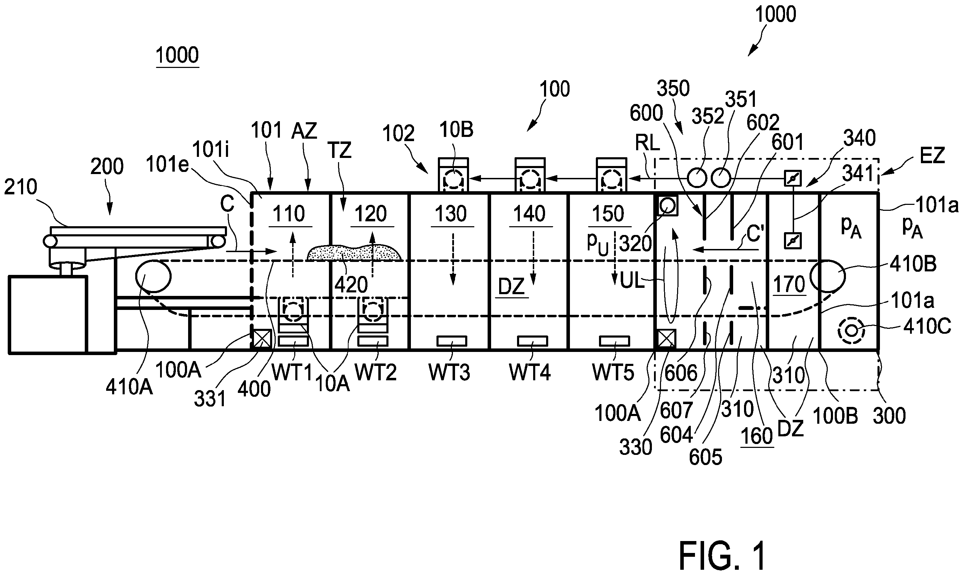

In FIG. 1 bis FIG. 7 sind für gleiche oder ähnliche Teile oder Teile gleicher oder ähnlicher Funktion der Einfachheit halber gleiche Bezugszeichen benutzt.

FIG. 1 zeigt im Prinzip einen Bandtrockner 1000, hier in Form eines Umluftbandtrockners gebildet, der in dieser Ausführungsform beispielhaft mit einer Anzahl von Trocknerzonen TZ modular aufgebaut ist. Der Bandtrockner 1000 weist ein Eintragsmodul 200, ein Trocknermodul 100 mit einem Trockneraufbau 101 mit mehreren Trocknerzonen TZ-hier als 110, 120, 130, 140, 150, 160, 170 bezeichnet-- und ein Austragsmodul 300 auf; das Eintragsmodul 200 und das Austragsmodul 300 wird vorliegend als nicht zum Trockneraufbau 101 gehörig beschrieben.

Der Bandtrockner 1000 ist für eine Polymergelbehandlung ausgestaltet, wobei das wässrige Polymergel 420 kontinuierlich und möglichst gleichmäßig in dem Eintragsmodul 200 auf ein horizontal angeordnetes Förderband 400 aufgegeben wird und anschließend auf dem Förderband 400 das Trocknermodul 100 --über den Innenraum 101i des Trockneraufbaus 101-- in Förderrichtung C durchläuft. Der Bandtrockner 1000 ist als sogenannter Einstufentrockner ausgebildet. Ein solcher Bandtrockner kann in einer hier nicht gezeigten Abwandlung, aber in sonst analoger Weise, auch als ein Mehrstufentrockner oder ein Mehretagen- oder ein Mehrbandtrockner ausgebildet werden.

Bei dem in FIG.1 gezeigten Bandtrockner 1000 wird Trocknungsluft in einer Gegenstrom-Richtung C' entgegen der Förderrichtung C geführt; also im Gegenstrom entlang der Richtung C' zum Polymergelstrom entlang der Richtung C. Vorliegend ist zur Unterstützung dieser Strömung im unteren Teil des Förderbandes in der vordersten Trocknerzone 110 (hier die erste Trocknerzone, die auch als Anfangszone AZ bezeichnet ist) ein Abluftelement 331 und in der vorletzten (hier sechsten) Trocknerzone 160 ein Zuluftelement 330 vorgesehen. Der Trockneraufbau 101 wird im Innenraum 101i in weiten Teilen, vorliegend vollständig, mit einem Unterdruck p_U gegenüber einem Umgebungsdruck p_A (Atmosphärendruck) beaufschlagt, um den Gegenstrom von Trocknungsluft in Gegenstromrichtung C' gegen die Förderrichtung C zu realisieren. Aufgrund der teilweise gasdurchlässigen Gestaltung des (hinsichtlich dem Polymergelstrom bezeichneten) Eingangs 101e und Ausgangs 101a des Trockneraufbaus 101 zu dessen Innenraum 101i stellt sich der Umgebungsdruck p_A (Atmosphärendruck) jedenfalls ungefähr auch in den Übergangsbereichen zur Umgebung ein, nämlich auch im Eintragsmodul 200 und im Austragsmodul 300.

Der Bandtrockner 1000 hat ein endloses über Trageelemente und zwei Umlenkrollen 410A und 410B, von denen mindestens eine angetrieben ist, geführtes Förderband 400. Die Lagergehäuse der Umlenkrolle 410A des Förderbandes 400 und die zugehörige mechanische Bandspannvorrichtung befinden sich vorliegend im Eintragsmodul 200; die Antriebswelle mit aufgestecktem Bandantrieb im Austragsmodul 300. Auf dem Förderband 400 des Bandtrockners 1000 wird das wässrige Polymergel 420 langsam durch die mehreren hintereinander angeordneten Trocknerzonen 110, 120, 130, 140, 150, 160 und durch die letzte Trocknerzone 170 zum Austragsmodul 300 gefahren. Hier sind die vorletzte Trocknerzone 160 und die letzte Trocknerzone 170 als eine Anzahl letzter Trocknerzonen 310 vor dem Austragsmodul 300 bezeichnet, auf die im Folgenden Bezug genommen wird. Die Anzahl letzter Trocknerzonen 310 mit dem Austragsmodul 300 ist hier als Endzone EZ bezeichnet, auf die im Folgenden auch Bezug genommen wird. Die Anzahl letzter Trocknerzonen 310 kann in einer Abwandlung auch eine oder mehr als zwei Trocknerzonen umfassen.

Wie vom Konzept der Erfindung erkannt kann es sich als problematisch erweisen, dass im Bereich der Endzone EZ ein gravierender Druckübergang vom Atmosphärendruck p_A oder dergleichen Umgebungsdruck (der außerhalb des Trockneraufbaus 101 auch noch im Austragsmodul 300 herrschen kann) zum Unterdruck p_U im Innenraum 101i des Trockneraufbaus 101 vorliegt; der Druckübergang besteht vorliegend insbesondere zwischen der letzten Trocknerzone 170 und dem Austragsmodul 300. Der Unterdruck p_U ist gewünscht, um unvorteilhafte und unkontrollierte Emissionen an heißer Trocknungsluft ggf. mit Staub oder sonstigen gasförmigen Emissionen in die Umgebung des Trockners zu vermeiden. Der Unterdruck p_U kann jedoch auch infolge des Druckübergangs zum Umgebungsdruck (Atmosphärendruck) p_A einen unerwünschten Falschlufteintrag und/oder Partikeleintrag in den Trockneraufbau 101 verursachen, insbesondere einen Falschlufteintrag und einen Eintrag dadurch mitgerissener Partikel verursachen.

Die den Trocknerzonen 110, 120, 130, 140, 150, 160, 170 vorliegend zugeordneten Module sind hier baulich aus mit Profilen versteiften standardisierten Blechen als Boden-, Seiten- und Deckenwandungen gebildet und unterteilt. Das Eintragsmodul 200 ist hier mit Profilen versteiften standardisierten Boden- und Seitenblechen gebildet. Die Produktaufgabe 210 ist hier als ein Schwenkband gebildet. Weiterhin könnten in hier nicht gezeigten Abwandlungen eine Verteilerschnecke oder eine Dreharmaufgabevorrichtung genutzt werden. Auf der Oberseite des Förderbandes 400 wird das wässrige Polymergel aufgetragen und über das Förderband 400 zum Austragsmodul 300 hin transportiert, bei dem es als getrocknetes superabsorbierendes Polymer 420 ankommt.

Als Förderband 400 dient hier ein Plattenband. Als Förderbandvarianten kommen aber auch ein kettengeführtes Drahtgewebeband, ein Scharnierplattenband, ein Flechtband oder ein Drahtgewebeband, welches kettenlos geführt wird oder ähnliche Ausführungen, auch beispielsweise aus Kunststoff statt Metall, in Frage. Das zu trocknende Polymergel 420 --also zu trocknendes wässriges Polymergel, das zu getrocknetem superabsorbierendem Polymer getrocknet wird-- ist hier der Einfachheit halber insgesamt mit 420 bezeichnet. Das Polymergel 420 liegt auf einem hier perforierten Förderband 400 auf und wird von der mit Pfeilen dargestellten Trocknungsluft in unterschiedlicher Strömungsrichtung über- bzw. durchströmt.

Das Polymergel 420 wird nämlich in Gegenstrom-Richtung C' von Trocknungsluft überströmt und in einer Trocknerzone TZ --unter Umwälzung der Trocknungsluft quer zur Gegenstrom-Richtung C'-- zudem von Umluft UL durchströmt; dies entspricht einer Überlagerung von Kreuz- und Gegenstrom der Trocknungsluft gegenüber dem Polymergel 420. Das Polymergel 420, anfangs noch in Form von wässrigem Polymergel, wird damit von Trocknungsluft durch- bzw. überströmt während es auf dem Förderband 400 durch den Innenraum 101i des Trockneraufbaus 101 entlang der Förderrichtung C transportiert und dadurch getrocknet wird. Die Trocknungsluft wird --bevorzugt in einer Ebene quer zur Förderrichtung C-- als Umluft UL geführt, um beim mehrfachen Durchgang durch das zu trocknende wässrige Polymergel 420 eine möglichst hohe Aufsättigung mit Feuchte zu erfahren.

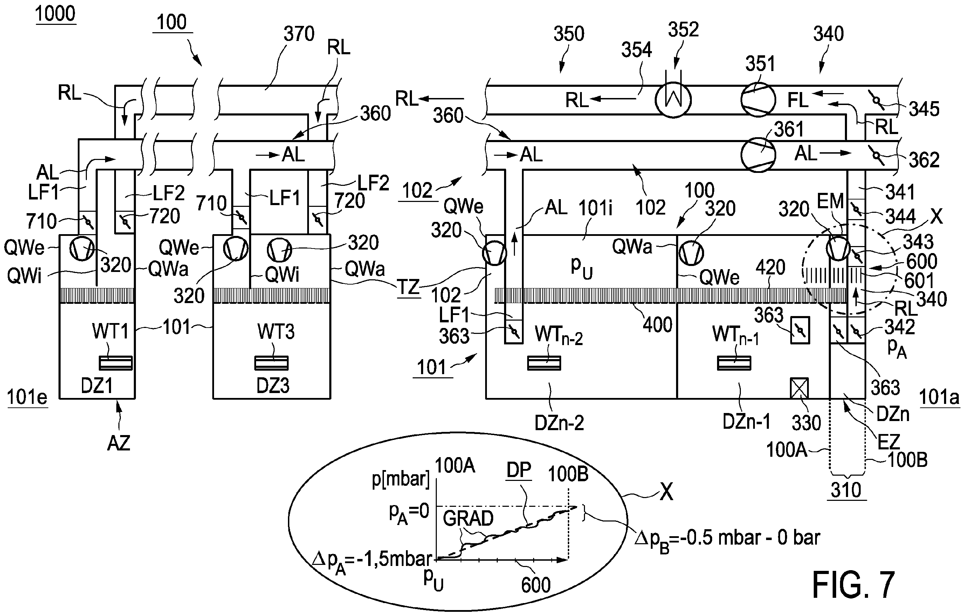

Ein gewisser Anteil der Trocknungsluft (in FIG. 1 nicht gezeigt, in FIG.7 als Abluft AL dargestellt) verlässt den Bandtrockner 1000 hoch aufgesättigt mit Feuchte und führt somit die aus dem Polymergel verdampfte Wassermenge ab. Eine entsprechende Abluftführung 360 ist beispielhaft in Bezug auf FIG. 7 erläutert. Ebenso kann, jedenfalls aus der Endzone EZ, Rückführluft RL zurückgeführt werden in eine Trocknerzone TZ, die in Förderrichtung C gesehen vor der Endzone EZ liegt; z.B. kann, wie in FIG. 1 gezeigt, aus der letzten Trocknerzone 170 Rückführluft RL zu den vorderen Trocknerzonen 110, 120 (dort von unten eingeblasen) und 130, 140, 150 (dort von oben eingeblasen) zurückgeführt werden.

Eine Trocknerzone TZ kann zur Einstellung von angemessenen Trocknungsbedingungen dienen und ihr ist je nach Zweckmäßigkeit eine Zu- und Abluft im Rahmen eines Belüftungsaufbaus 102 zugeordnet; hier umfasst dies ein- oder angebaute Heizregister/Ventilatoren 10A, 10B und/oder Wärmetauscher. Vorliegend sind für jede Trocknerzone 110, 120, 130, 140, 150, 160 mit WT1, WT2, WT3, WT4, WT5 bezeichnete Wärmetauscher vorgesehen. Ein diesbezüglich weiter detaillierteres Ausführungsbeispiel ist (ähnlich dem der FIG.1) in Bezug auf FIG.7 erläutert.

In dem Ausführungsbeispiel der FIG.1 ist das Trocknermodul 100 im Innenraum 101i des Trockneraufbaus 101 mit einer Druckzone DZ sowohl für die Trocknerzonen 110 (Anfangszone AZ), 120, 130, 140, 150 als auch für die zwei letzten Trocknerzonen 160, 170 eingerichtet. Alle Trocknerzonen 110 (Anfangszone AZ), 120, 130, 140, 150, 160, 170-d.h. vorliegend die gesamte Druckzone DZ-- wird weitgehend im Unterdruck p_U betrieben. Dazu passend kann ein angemessener Temperaturverlauf entlang der Trocknerzonen 110 (Anfangszone AZ), 120, 130, 140, 150, 160, 170 vorgesehen sein.

Jede Trocknerzone TZ kann, muss aber nicht, als ein einziges Trocknermodul realisiert sein. Auch kann jede Trocknerzone TZ, muss aber nicht, mit einer Anzahl von Trocknermodulen realisiert sein. Ein modularer Aufbau kann Vorteile haben, wenn der bauliche Aufbau des Bandtrockner 1000, insbesondere aus Fertigungsgründen, veränderbar sein soll. Vorliegend sind die Trocknerzonen 110, 120, 130, 140, 150, 160, 170 jeweils mit einem Trocknermodul gebildet und weisen --bis auf die letzte Trocknerzone 170-- mindestens einen Umluftventilator 10A, 10B, hier vorteilhafterweise mit einem Heizregister, auf. Dabei kann jede Trocknerzone 110, 120, 130, 140, 150, 160 individuell gesteuert werden. Die Anströmung des Polymergels mit Trocknungsluft (bzw. ggfs. Kühlluft) in Gegenstromrichtung C' kann variiert werden. Dabei erfolgt die Anströmrichtung durch das superabsorbierende Polymergel z.B. in den vorderen Trocknerzonen 110, 120 von unten nach oben oder, z.B. in den weiteren Trocknerzonen 130, 140, 150, von oben nach unten. Die in FIG.1 dargestellte Trocknungsanordnung eines Bandtrockners 1000 zeigt also, dass in einer, oder hier den vorderen, Trocknerzonen 110 und 120 das Polymergel 420 in Form von wässrigem Polymergel von unten nach oben angeströmt wird und anschließend in den weiteren Trocknerzonen 130, 140 und 150 und 160 das Polymergel 420 in Form von superabsorbierendem Polymer von oben nach unten angeströmt wird. Das superabsorbierende Polymer geht dabei durch Trocknung zunehmend über von wässrigem Polymergel zu getrocknetem Polymergel in Form eines brettartigen Strangs.

Die Trocknungszeit ist beeinflussbar durch die Bandgeschwindigkeit des Förderbandes 400, die kontinuierlich verstellbar sein kann. Das Polymergel 420 in Form von wasserabsorbierenden Polymerpartikeln, die auf dem Förderband 400 unter Bildung eines brettartigen Strangs aneinander hängen und/oder kleben, wird nach dem Trocknungsverfahren im Austragsmodul 300 abgeworfen und der brettartige Strang wird in einem Brecher 410C gebrochen. Anschließend werden die wasserabsorbierenden Polymerpartikel, ggfs. entsprechend der einzustellenden Partikelgröße, gemahlen. Das Austragsmodul 300 ist derart ausgerüstet, dass das getrocknete superabsorbierende Polymer 420 als Strang über die hintere Umlenkrolle 410B hinaus in den Brecher 410C abgeworfen wird, d.h. mit wasserabsorbierenden Polymerpartikeln, die unter Bildung des Strangs zusammenhängen oder zusammenkleben, entnehmbar ist; der Strang rutscht im Bereich der hinteren Umlenkrolle 410B in den Brecher 410C. Die Umlenkrollen 410A und 410B sorgen dafür, dass das Förderband 400 entgegen der Förderrichtung C, als Endlosband, zurückgeführt wird und wieder in eine Endlosschleife einer weiteren Auftragung von wässrigem Polymergel zur Verfügung steht. Der Bandtrockner 1000 ist dahingehend eingestellt, dass das aufgebrachte wässrige Polymergel einem für den Zustand des aufgebrachten wässrigen Polymergels angemessenen Trocknungsverfahren unterzogen wird. Dabei sollten die Produktionskosten reduziert sowie die Herstellungsmethode verbessert bzw. die Produktionszeit verringert werden.

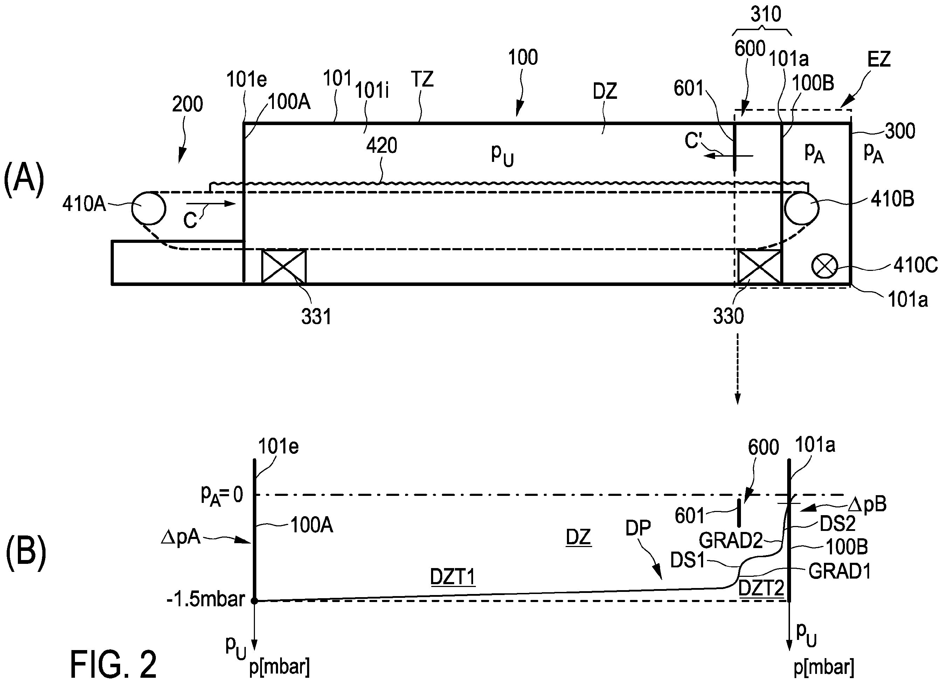

Die gestrichelten Linien in FIG.1 im hinteren Teil des Bandtrockners 1000 stellen symbolisch eine vorgenannte Endzone EZ dar, welche hier die vorletzte Trocknerzone 160, die letzte Trocknerzone 170 und das Austragsmodul 300 umfasst. Die letzte Trocknerzone 170 und die vorletzte Trocknerzone 160 stehen hier beispielhaft für eine Anzahl letzter Trocknerzonen (in Förderrichtung C), die im Folgenden mit 310 bezeichnet und im Einzelnen anhand mehrerer Beispiele der FIG. 2 bis FIG. 7 erläutert sind. In einer Abwandlung könnte auch nur die letzte Trocknerzone 170 von der Anzahl letzter Trocknerzonen 310 umfasst sein. Die Endzone EZ des Bandtrockner 1000 umfasste dann nur die letzte Trocknerzone 170 mit dem Austragsmodul 300. Baulich könnte die letzte Trocknerzone 170 integral mit dem Austragsmodul 300 im Rahmen einer Endzone EZ gebildet sein.

Gemäß FIG.1 wird insbesondere im Bereich der Anzahl letzter Trocknerzonen 310 Umluft UL, ggfs. mit einem Teil an Umgebungsluft, durch das Polymergel 420 (in der Anzahl letzter Trocknerzonen 310 bereits weitgehend in Form von getrocknetem Polymergel umfassend wasserabsorbierende Polymerpartikel) zirkuliert. Vorliegend im unteren Teil des Förderbandes ist in der vorletzten Trocknerzone 160 ein Zuluftelement 330 (in einer Abwandlung ggfs. auch ein Abluftelement) vorgesehen. Vorliegend im unteren Teil des Förderbandes ist in der vordersten Trocknerzone 110 ein Abluftelement 331 (in einer Abwandlung ggfs. auch ein Zuluftelement) vorgesehen.

Ein Umluftventilator 320 ist vorliegend im oberen Bereich des Förderbandes 400 eingesetzt, so dass zudem eine Zirkulation von Umluft UL durch das Polymergel 420 (in der Anzahl letzter Trocknerzonen 310 bereits weitgehend in Form von getrocknetem Polymergel umfassend wasserabsorbierende Polymerpartikel) möglich ist. Damit ist ein vorteilhaftes Trocknungsverhalten auch in der vorletzten Trocknerzone 160 gewährleistet.

Zudem ist eine Luftentnahmeführung 340 in der letzten Trocknerzone 170 integriert; d.h. außerdem wird in der letzten Trocknerzone 170 feuchtebeladene Rückführluft RL, wie in FIG.1 dargestellt, mittels einer Luftentnahmeführung 340 entnommen. Die Rückführluft RL wird über die im Rahmen eines Belüftungsaufbaus 102 ein- oder angebauten Heizregister/Ventilator 10A, 10B und/oder einem Wärmetauscher WT wieder einer oder mehreren der "vorderen" Trocknerzonen 110, 120, 130, 140, 150, 160 zugeführt.

Um insbesondere das oben genannte Problem eines Falschlufteintrags und/oder Partikeleintrags in der Endzone EZ zu lösen, ist in der in FIG.1 gezeigten Ausführungsform eines Bandtrockners 1000 das Trocknermodul 100 im Innenraum 101i des Trockneraufbaus mit einer besonders ausgebildeten Druckzone DZ im Bereich der Trocknerzone 160 eingerichtet; also für die letzten Trocknerzonen 310 vor dem Austragsmodul 300. Die letzten Trocknerzonen 310 vor dem Austragsmodul 300 weisen einen Druckübergangsverlauf vom Unterdruck p_U zum Umgebungsdruck p_A, nämlich etwa Atmosphärendruck, im Austragsmodul 300 und dem Außenbereich des Trockneraufbaus 101 auf. Diese letzten Trocknerzonen 310 können auch mit einem angemessenen Temperaturverlauf betrieben werden. Zur Realisierung des Druckübergangsverlaufs in der gezeigten Druckzone DZ ist für die letzten Trocknerzonen 310 --hier in der vorletzten Trocknerzone 160-- im Innenraum 101i des Trockneraufbaus 101 eine oder mehrere Querwände 600 zur Ausbildung eines in FIG.2 gezeigten Druckgradientenbereichs GRAD vorgesehen.

Eine Querwand 600 weist bei dem Ausführungsbeispiel der FIG.1 ein erstes und zweites oberes Segmentierungselement 601, 602 oberhalb des Förderbandes 400 auf, ein erstes und zweites mittleres Segmentierungselement 604, 606 zwischen dem Förderband auf (d.h. zwischen dem oberen Teil desselben in Förderrichtung C laufend und dem unteren Teil desselben entgegen der Förderrichtung, d.h. in Gegenstrom-Richtung C' laufend), und ein erstes und zweites unteres Segmentierungselement 605, 607 unterhalb des Förderbandes 400 auf. Beispielsweise ist es in einer Abwandlung jedoch auch möglich, eine Querwand 600 bereits nur mit einem ersten oberen Segmentierungselement 601 zu bilden. Grundsätzlich kann damit bereits ein gewünschter Effekt des Druckübergangsverlaufs zur Verringerung des genannten Problems eines Falschlufteintrags und/oder Partikeleintrags realisiert werden.

Im Folgenden wird beispielhaft auf bevorzugte obere Segmentierungselemente 601, 602 kurz als Segmentierungselement einer Querwand 600 Bezug genommen. Eine Querwand 600 kann wenigstens ein oberes Segmentierungselement 601, 602 und optional ein oder mehrere weitere mittlere Segmentierungselemente 604, 606 und/oder ein oder mehrere weitere untere Segmentierungselemente 605, 607 aufweisen.

Insbesondere kann für eine abgewandelte Form eines hier nicht gezeigten Bandtrockners ein Förderband außerhalb des Trockneraufbaus 101 zurückgeführt werden. In dem Fall erweisen sich ggfs. mögliche mittlere und/oder insbesondere ggfs. mögliche untere Segmentierungselemente 604, 605 als weniger notwendig bzw. vergleichsweise entbehrlich.

Generell kann auch davon ausgegangen werden, dass aufgrund des oberhalb eines Förderbandes 400 vorhandenen Großteils eines freien Volumens im Trockneraufbau 101 ein oberes Segmentierungselement, also z.B. eine erstes und/oder zweites oberes Segmentierungselement 601 am effektivsten wirksam ist. Nämlich um eine Einteilung des Innenraumes 101i des Trockneraufbaus 101 in eine oder mehrere Druckzonen DZ zu erreichen bzw. zusätzlich oder alternativ eine Einteilung einer Druckzone DZ im Innenraum 101i des Trockneraufbaus 101 in Druckzonenteilbereiche zu erreichen. Dazu sind beispielhaft in FIG. 2 Druckzonenteilbereiche DZT1 und DZT2 symbolisch dargestellt.

In einer hier nicht gezeigten Abwandlung könnte auch in der vorletzten Trocknerzone 160 das Zuluftelement 330 (in einer Abwandlung ggfs. auch ein Abluftelement) und ein Umluftventilator 320 genutzt werden, um eine zweite (hintere) Druckzone für die Trocknerzonen 160, 170 und eine erste (vordere) Druckzone für die Trocknerzonen 110,120, 130, 140, 150 einzurichten.

Bezugnehmend auf FIG. 2 kann mittels einer oder mehrerer Querwände 600 --hier ggfs. ein einziges symbolisch dargestelltes (oberes) Segmentierungselement 601 und ähnlich wie anhand von FIG. 1 beschrieben-- für die Druckzone DZ (oder eine zuvor beschriebene hintere Druckzone der Abwandlung) ein Druckprofil DP zwischen einem Polymergeleinlass 100A der Druckzone DZ und einem Polymergelauslass 100B der Druckzone DZ eingestellt werden. Das Druckprofil DP stellt sich entsprechend der Druckniveaus an einem Polymergeleinlass 100A der Druckzone DZ und einem Polymergelauslass 100B der Druckzone DZ derart ein, dass eine zweite Druckdifferenz ΔpB zum Atmosphärendruck p_A im Polymergelauslass 100B derselben geringer ist als eine erste Druckdifferenz ΔpA zum Atmosphärendruck p_A am Polymergeleinlass 100A derselben.

Im vorliegenden Fall --der FIG.1 wie auch der FIG..2-- lässt sich zudem der hintere Druckzonenteilbereich DZT2 einer letzten und vorletzten Trocknerzone 170, 160 zuordnen (allgemein einer Anzahl letzter Trocknerzonen 310 umfassend die letzte Trocknerzone 170) und der vordere Druckzonenteilbereich DZT1 den vorderen Trocknerzonen 110, 120, 130, 140, 150 zuordnen. Zur weiteren Erläuterung ist in FIG. 2 im unteren Teil derselben beispielhaft und vereinfacht ein sich über den Innenraum 101i des Trockneraufbaus 101 sich ausbildendes Druckprofil DP gezeigt, das insbesondere einen Druckgradientenbereich GRAD1 zwischen dem Polymergeleinlass 100A und dem Polymergelauslass 100B der Druckzone DZ und einen Druckgradientenbereich GRAD2 an dem Polymergelauslass 100B aufweist. Der Druckgradientenbereich GRAD1 ist das Resultat einer ersten Druckstufe DS1 oder einem ähnlichen Druckverlauf aufgrund des Druckverlusts an dem Segmentierungselement 601 als Innen-Querwand in der Druckzone DZ. Der Druckgradientenbereich GRAD2 ist das Resultat einer zweiten Druckstufe DS2 oder einem ähnlichen Druckverlauf aufgrund des Druckverlusts an dem Polymergelauslass 100B als Außen-Querwand der Druckzone DZ.

Segmentierungselemente 601 für eine Endzone EZ wie in FIG.1 --allgemein für eine Anzahl von letzten Trocknerzonen 310 umfassend die letzte Trocknerzone vor dem Austragsmodul 300-- können grundsätzlich auch für eine Druckzone DZ, wie sie noch anhand von FIG.7 erläutert ist, vorgesehen werden. Mit entsprechender Steuer- oder Regelsensorik bzw. mit geeigneten Steuer- oder Regelmitteln kann es grundsätzlich auch möglich sein, eine Druckzone DZ als Kontroll- oder Regelzone für jedenfalls einen vorbestimmten Druck des Trocknungsprozesses auszubilden, gegebenenfalls auch für eine vorbestimmte Temperatur des Trocknungsprozesses auszubilden.

In FIG. 2 ist zunächst praktisch der gesamte Innenraum eines Trockneraufbaus 101 zwischen Eingang und Ausgang 101e, 101a als eine Druckzone DZ mit einem darunter gezeigten Druckprofil DP ausgebildet. Das Druckprofil DP ergibt sich im Wesentlichen aufgrund der Platzierung des Zuluftelements 330 am Polymergeleinlass 100A mit entsprechendem Druckniveau eines ersten Innendrucks als Einlassdruck und der Luftentnahmeführung 340 am Polymergelauslass 100B mit entsprechendem Druckniveau eines zweiten Innendrucks als Auslassdruck. Die in FIG. 2 untere schematische Darstellung zeigt den auftretenden Druckverlauf als Druckprofil DP innerhalb des Innenraums 101i des Trockneraufbaus 101 zwischen Eingang und Ausgang 101e, 101a des Trockneraufbaus 101 mit dem sich absetzenden Druckübergangsverlauf eines Druckgradientenbereichs GRAD1 zwischen Polymergeleinlass und Polymergelauslass 100A, 100B, d.h. konkret zwischen dem vorderen erstem Druckzonenteilbereich DZT1 und dem hinteren zweiten Druckzonenteilbereich DZT2, und dem Druckgradientenbereich GRAD2 am Polymergelauslass 100B.

Daran kann man erkennen, dass der hier beispielhaft auftretende Unterdruck p_U im Innenraum 101i des Trockneraufbaus 101 zunächst am Eingang 101e beispielsweise - 1,5 mbar beträgt und dann zum Ende der letzten Trocknerzonen 310 in der Endzone EZ im Übergang zum Austragsmodul 300 zunächst im Druckgradientenbereich GRAD1 ansteigt und dann zum Ausgang 101a im Druckgradientenbereich GRAD2 ansteigt; dies ist dargestellt durch eine durchgezogene Linie mit der Bezeichnung GRAD1 und GRAD2 an der Druckstufe DS1 und DS2. Tatsächlich wird über den größten Teil der Länge des Innenraums 101i des Trockneraufbaus 101 ein nahezu konstanter (leicht steigender) Unterdruck von -1,5 mbar herrschen (leicht steigend, wie dargestellt) während sich am Polymergelauslass 100B der letzten Trocknerzonen 310 ein Druckgradientenbereich GRAD2 zum Umgebungsdruck einstellt; ein zu großer sprunghafter Anstieg, der zum problematischen Falschlufteintrag führt, ist jedoch vermieden insbesondere weil im Druckgradientenbereich GRAD1 an der Druckstufe DS1 aufgrund des Segmentierungselements 601 bereits ein sich absetzender Druckübergangsverlauf mit einer Druckerhöhung erreicht wird.

Durch die Eingangsstellung einer Drossel (z.B. 710 in FIG. 7) und einer Ausgangseinstellung einer Drossel (z.B. 720 in FIG. 7) kann zudem nämlich ein Druckprofil DP mit einer moderaten Steigung eingestellt werden, so dass ohne Segmentierungen 600 am Polymergelauslass 100B der letzten Trocknerzonen 310 in der Endzone EZ vor dem Austragsmodul 300 ein Drucksprung mit der vollen Amplitude bis zum Atmosphärendruck vorliegen würde. Vielmehr gibt die durchgezogene Linie einen verringerten Druckgradientenbereich GRAD2 am Polymergelauslass 100B zu erkennen.

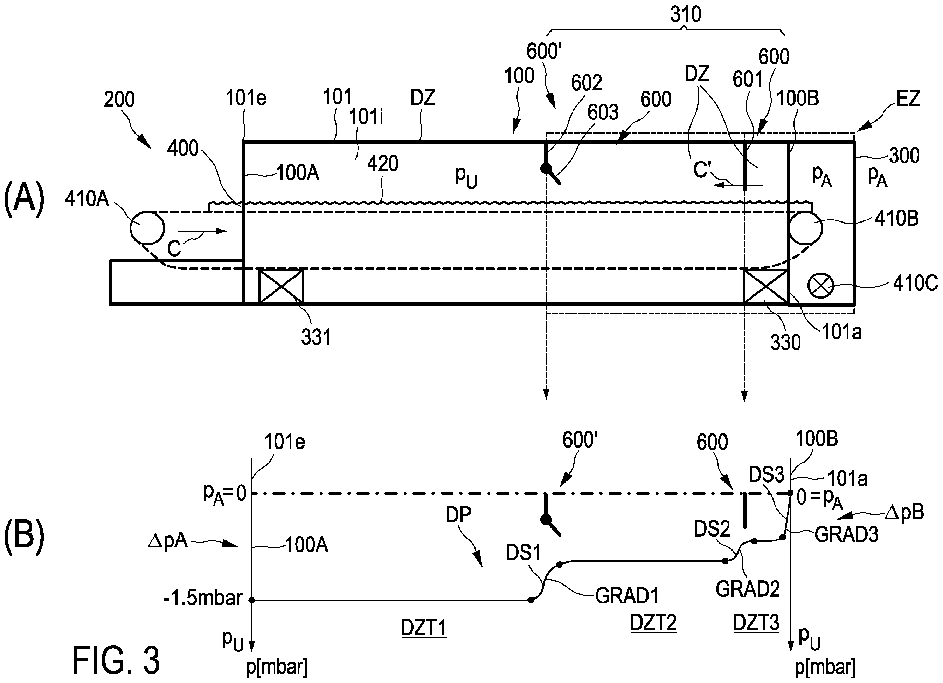

Ganz ähnlich wie in FIG. 2 ist mit Hinweis auf die obige Beschreibung auch bei dem Ausführungsbeispiel gemäß FIG. 3 praktisch der gesamte Innenraum eines Trockneraufbaus 101 zwischen Eingang und Ausgang 101e, 101a als eine Druckzone DZ mit einem darunter gezeigten Druckprofil DP ausgebildet. Gemäß FIG. 3 ist zwischen einem Polymergeleinlass 100A und einem Polymergelauslass 100B ein (in Förderrichtung C) hinterer dritter Druckzonenteilbereich DZT3 und mittlerer zweiter Druckzonenteilbereich DZT2 im Bereich der letzten Trocknerzonen 310 vor dem Austragsmodul 300 und ein (in Förderrichtung C) vorderer erster Druckzonenteilbereich DZT1 gebildet. Dieses besondere Druckprofil mit den Druckstufen DS1, DS2, DS3 und zugehörigen Druckgradientenbereichen GRAD1, GRAD2 und GRAD3 bildet sich gemäß FIG. 3 aufgrund der Querwand 600 mit dem Segmentierungselement 601 und der Querwand 600' mit dem Segmentierungselement 602 und dem Pendelblech 603 aus. Also ist aufgrund der Querwand 600 zwischen dem mittleren zweiten Druckzonenteilbereich DZT2 und hinteren dritten Druckzonenteilbereich DZT3 eine gezielt abgeflachte Druckrampe in Gegenstromrichtung C' vom Umgebungsdruck p_A zum Unterdruck p_U in der Druckzone DZ gebildet. Dieses Prinzip ist für den gesamten Innenraum 101i des Trockneraufbaus 101 ausgedehnt worden; nämlich durch eine entsprechende Verteilung einer weiteren Querwand 600' zwischen dem mittleren zweiten Druckzonenteilbereich DZT2 und vorderen ersten Druckzonenteilbereich DZT1 im Innenraum 101i des Trockneraufbaus 101.

Dazu ist, weiter Bezug nehmend auf FIG.3, ein Bandtrockner 1000 mit einem Eintragsmodul 200, mit einem Förderband 400, welches das Polymergel 420 transportiert, mit einem Trocknermodul 100 und mit einem Austragsmodul 300 und einem Bereich letzter Trocknerzonen 310 schematisch dargestellt. Der Bereich letzter Trocknerzonen 310 umfasst den besonderen mittleren zweiten Druckzonenteilbereich DZT2 und den hinteren dritten Druckzonenteilbereich DZT3, die getrennt sind durch eine Querwand 600 mit Blechen oder dergleichen Segmentierungselementen 601, so dass ein Druckübergangsverlauf in Form der zweiten Druckstufe DS2 mit dem Druckgradientenbereich GRAD2 ausgebildet wird. Der Bereich vor den Trocknerzonen 310 umfasst den besonderen vorderen ersten Druckzonenteilbereich DZT1, der getrennt ist vom mittleren zweiten Druckzonenteilbereich DZT2 durch eine Querwand 600' mit dem Segmentierungselement 602 und dem Pendelblech 603 so dass ein Druckübergangsverlauf in Form der ersten Druckstufe DS1 mit dem Druckgradientenbereich GRAD1 ausgebildet wird.

Das Polymergel 420 wird an der Umlenkrolle 410B abgeworfen und fällt in den Brecher 410C. Die dabei durch Abrieb, Bruch oder dergleichen Brech- und Reibeffekte entstehenden Partikel und Feinpartikel könnten normalerweise (ohne die Querwände 600, 600') aufgrund des Druckunterschiedes von Umgebungsdruck p_A zwischen dem Austragsmodul 300 und p_U im Innenraum 101i des Trockneraufbaus 101 durch Falschluft in den Innenraum 101i des Trockneraufbaus 101 gesaugt werden. Ein Unterdruck p_U zur Unterstützung eines Gegenstroms von Trocknungsluft in Gegenstromrichtung C' ist (wie bei der Ausführungsform der FIG. 2) auch bei der Ausführungsform der FIG. 3 durch ein Zuluftelement 330 und ein Abluftlement 331 einstellbar.

Ein Eintrag von Partikeln und Feinpartikeln wird durch die hier gezeigte zusätzliche vorteilhafte Einrichtung von Segmentierungselementen 601, 602, 603 bei den Querwänden 600, 600' unter Abflachung des Druckprofils DP verhindert, jedenfalls aber deutlich reduziert, a Die mit den Querwänden 600, 600' verringerte zweite Druckdifferenz ΔpB zum Atmosphärendruck im Polymergelauslass 100B des Trockneraufbaus 101 ist wesentlich geringer ist als eine erste Druckdifferenz ΔpA zum Atmosphärendruck am Polymergeleinlass 100A des Trockneraufbaus 101.

Die Druckdifferenz ΔpB zum Atmosphärendruck am Polymergelauslass 100B (in Förderrichtung - Gaseinlass in Gegenstromrichtung C') wird auch durch eine Eingangsstellung einer Drossel am Abluftelement 331 (in einer Abwandlung ggfs. auch ein Zuluftelement) am Eingang 101e sowie durch eine Ausgangsstellung einer Drossel am Zuluftelement 330 am Ausgang 101a des Innenraums 101i des Trockneraufbaus 101eingestellt.

Der Innenraum 101i des Trockneraufbaus 101 hat hier also zwei Querwände 600, 600' mit einem ersten und zweiten Segmentierungselement 601, 602, zur räumlichen Unterteilung des Innenraum 101i, so dass sich ein mehrfach zum Umgebungsdruck p_A angeglichenes Druckprofil mit entsprechenden drei Druckgradientenbereichen GRAD1, GRAD2, GRAD3 und einem ersten Druckplateau und einem zweiten Druckplateau (wenigstens zwei plateau-artige Druckniveaus) ausbilden kann. Idealisiert wird das Druckprofil also drei Druckgradientenbereiche GRAD1, GRAD2, GRAD 3 haben, wovon der am Polymergelauslass 100B einer Druckzone DZ bestehende Druckgradient GRAD3 zum Atmosphärendruck nunmehr nochmals sehr viel geringer ist im Vergleich zu dem Gradienten GRAD2 der FIG. 2.

Im unteren Teil der FIG. 3 ist zusätzlich schematisiert das eingestellte Druckprofil DP dargestellt. Hierbei zeigt die durchgezogene Linie den beispielhaften Unterdruck p_U beginnend bei -1,5 mbar auf. Die gestrichelte Linie zeigt den Atmosphärendruck oder Umgebungsdruck p_A bei 0 mbar. Eine Druckdifferenz in dem ersten vorderen Bereich der hinteren Druckzone DZ und eine Druckdifferenz in dem zweiten hinteren Bereich der hinteren Druckzone DZ zum Atmosphärendruck liegen vor, die geringer ist als die in dem ersten Bereich. Somit kann mit dem Segmentierungselement 601 ein Differenzdruck zur Umgebung am Polymergelauslass 100B der Druckzone DZ verringert werden und somit Falschlufteintrag und einhergehend der Superabsorber Fein- und Feinstpartikel-Eintrag reduziert werden.

Es bildet sich eine zweite Druckdifferenz ΔpB zum Atmosphärendruck p_A am Polymergelauslass 100B einer Druckzone DZ, die hier (betragsmäßig) weniger als -1 mbar beträgt, also zwischen Ombar und -1mbar liegt. In einem räumlich sehr ausgedehnten Bereich entlang einer Förderrichtung C kann ein gesamter Innenraum 101i eines Trockneraufbaus 101 eines Trocknermoduls 100, wie vorliegend, eine Druckzone DZ bilden; in einem räumlich engeren Bereich entlang einer Förderrichtung C kann in einer Abwandlung eine Druckzone auch eine kleinere Anzahl von Trocknerzonen umfassen oder auch nur eine einzige Trocknerzone als Teil des Trockneraufbaus 101 eine Druckzone DZ bilden. Ein Beispiel dafür ist anhand von FIG. 7 erläutert.

Die Anzahl Querwände 600 Segmentierungselemente 601, 602 kann --wie hier beispielhaft dargestellt-- mittels einstückigen Blechen bzw. Elementen --hier beispielhaft einem Pendelblech 603-- aber auch auf andere Weise gebildet sein. Dadurch ist bei einer kontinuierlichen Bandbewegung 400 grundsätzlich vorgegeben, dass die Produkthöhe und die Bandgeschwindigkeit jedenfalls keinen massiven Einfluss auf das eingestellte Druckprofil haben können.

Hierbei umfasst die der Druckzone DZ zugeordnete Trocknerzone TZ --die hier als Trockneraufbau 101 eines Trocknermoduls 100 dargestellt ist-- die letzte Trocknerzone 170 des Bandtrockners vor einem Austragsmodul 300, so dass sich das Druckprofil in einer Endzone EZ, umfassend die letzte Trocknerzone, ausbildet. Dabei ist es auch möglich, dass das Druckprofil in dieser Endzone EZ, vorzugsweise mit einer abgesenkten Temperatur, ausgebildet wird, so dass eine letzte Trocknerzone (vorliegend beispielhaft ohne Wärmetauschereinheit) ohne weitere Temperaturzunahme des Polymergels, gebildet, also als Kühlzone betrieben wird.

Die Querwand 600 hat ein Druckunterschied hervorrufendes Segmentierungselement 601, welches teilweise offen sein kann, ggf. auch nur von oben herabhängend ausgebildet sein kann; es kann fest an der Seitenwand oder an der Decke montiert sein bzw. aus Lochblechen bestehen . Auch sind Gitter möglich bzw. Pendelflächen. Dabei ergibt sich die segmentierende Wirkung des Segmentierungselements 601 durch die Wandung zu einem Druckprofil zwischen einem ersten vorderen Bereich der hinteren Druckzone DZ und einem zweiten hinteren Bereich der hinteren Druckzone DZ. Dabei ist in Abhängigkeit vom Segmentierungselement 601 und der einzustellenden Polymergelschüttdichte des Polymergels eine höhenverstellbare Einrichtung denkbar, so dass das Segmentierungselement 601 höhenverstellbar ist.

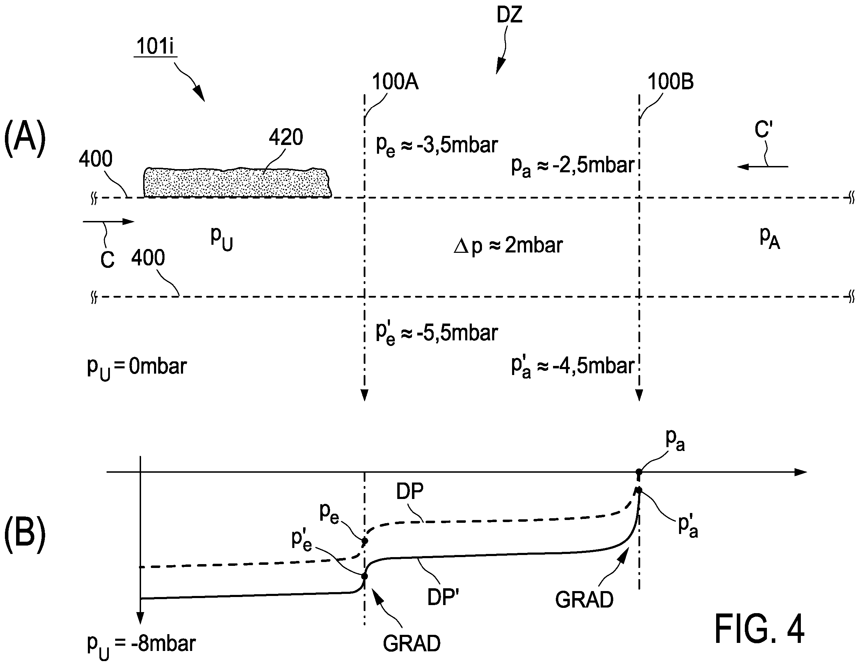

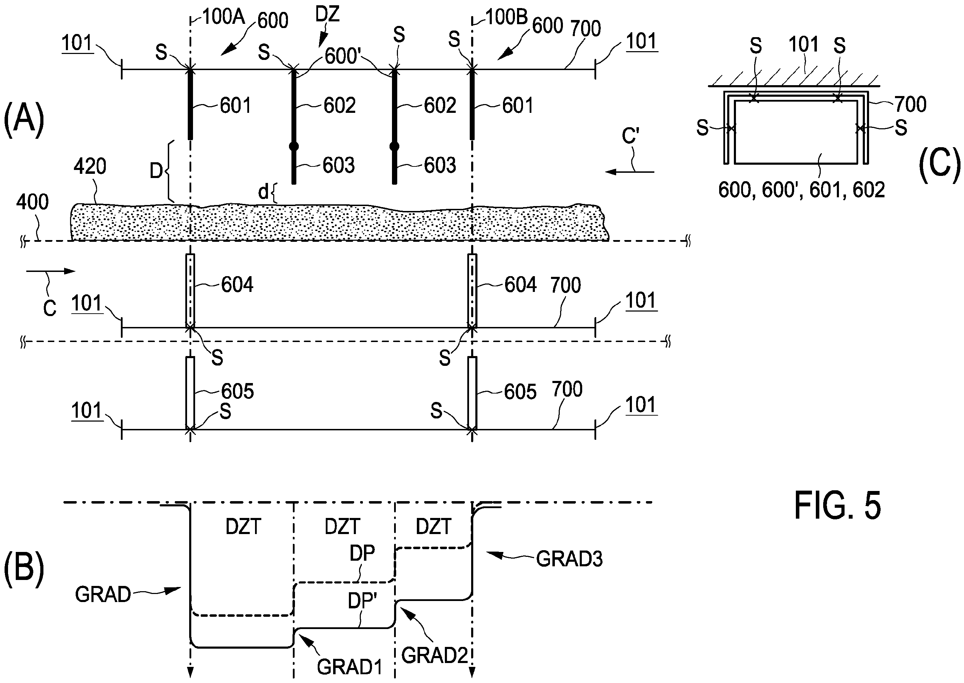

In Bezug auf FIG. 4 und FIG. 5 werden Einzeldrücke, Druckbereiche und Abstände der Segmentierungselemente beschrieben. FIG.4 zeigt schematisch in Ansicht (A) allgemein eine Druckzone DZ für den Innenraum 101i eines Trockneraufbaus 101, bevorzugt im Bereich einer zuvor erläuterten Endzone EZ vor einem Austragsmodul 300, z.B. für eine Anzahl letzter Trocknerzonen 310 oder dergleichen Umgebung. In Ansicht (B) der FIG. 4 ist ein Profil eines Druckübergangsverlaufs in der Druckzone DZ gezeigt.

Während im Innenraum 101i ein Unterdruck von in FIG. 4 beispielsweise bis zu etwa - 8mbar vorgegeben ist (in anderen Ausführungen kann der Unterdruck durchaus bis zu wenigstens -20mbar oder -30mbar oder mehr betragen), herrscht in der Umgebung ein Umgebungsdruck von p_A=0mbar (gemessen relativ zum Atmosphärendruck). Eine Druckzone DZ mit der zuvor erläuterten Ausbildung einer oder mehrerer Querwände 600 erlaubt nun eine vergleichsweise graduelle Anpassung des in der Druckzone DZ im Innenraum 101i herrschenden Unterdrucks p_U mittels abschnittsweiser Gestaltung von Druckabschnittsverläufen; d.h. über die Distanz der Druckzone DZ bis zum Atmosphärendruck. Bevorzugt ist die wenigstens eine Druckzone DZ --mit jeweils einem bestimmten Druckprofil DP, DP' im Innenraum 101i des Trockneraufbaus 101-- in eine oder mehrere Druckzonenteilbereiche DZT aufgeteilt; und zwar derart, dass in jedem Druckzonenteilbereich ein Druckabschnittsverlauf eines Druckprofils DP, DP' der Druckzone DZ vorliegt. Zu starke Druckgradienten und/oder zu hohe Druckamplituden sind insofern an den Grenzen der Druckzone DZ in Förderrichtung C bzw. Gegenstrom-Richtung C' vermieden. Somit ist, insbesondere auch für eine der in FIG. 1 bis FIG. 3 beschriebenen letzten Trocknerzonen 310, die Tendenz vermieden Falschluft und oder Partikel und/oder Fein- oder Feinst-Partikel aus der Umgebung in den Innenraum 101i einzusaugen.

Beispielhaft ist in Ansicht (A) der FIG.4 eine Druckzone DZ (ggfs. als Auswahl aus mehreren Druckzonen) mit einem Druckprofil DP, DP' in Ansicht (B) zwischen einem Polymergeleinlass 100A und einem Polymergelauslass 100B gezeigt; das Druckprofil DP, DP' setzt sich in angrenzenden Bereichen des Innenraums 101i fort.

Am Polymergeleinlass 100A der Druckzone DZ herrscht ein erster Innendruck als Einlassdruck p_e, nämlich ein Unterdruck von p_e=-3.5mbar oberhalb des Förderbandes 400. Wie aus dem gestrichelten Druckübergangsverlauf des Druckprofils DP vom Unterdruck p_U zum Umgebungsdruck p_A in der Ansicht (B) der FIG. 4 ersichtlich ist, steigt der Druck in der Druckzone vom Einlassdruck p_e bis zu einem zweiten Innendruck als Auslassdruck p_a am Polymergelauslass 100B der Druckzone DZ an, nämlich bis zu einem Unterdruck von p_a=-2.5mbar an. Dies macht dann nur noch einen verringerten Unterschied bis zum Umgebungsdruck bei Ombar aus (im Vergleich zum Unterschied des vorgenannten generellen Unterdruck p_U bei etwa -8mbar im Innenraum 101i bis zum Umgebungsdruck bei Ombar). Die Druckzone DZ ist vorliegend begrenzt durch Querwände quer zur Förderrichtung C im Innenraum 101i des Trockneraufbaus 101. Diese geben entsprechende Druckgradientenbereiche vor, die hier allgemein mit GRAD bezeichnet sind. Mittels einer Anordnung von Luft zum Innenraum zuführenden Elementen und Luft vom Innenraum abführenden Elementen (z.B. ein weiter unten beschriebenes Abluftelement 331 am Polymergeleinlass 100A oder ein Zuluftelement 330 am Polymergelauslass 100B) wird ein Druckniveau am Innenraum 101i vorgegeben; insofern ein Druck eingestellt.

Der Druckverlust über das Förderband und Polymergel beträgt hier beispielhaft etwa Δp = 2mbar. Der Einlassdruck am Polymergeleinlass 100A der Druckzone DZ und und Auslassdruck am Polymergelauslass 100B der Druckzone DZ betragen entsprechend unter dem Föderband 400 p'_e = -5.5mbar und p'_a = -4.5mbar - wie aus dem durchgezogenen Druckübergangsverlauf des Druckprofils DP' vom Unterdruck p'_U = -8mbar zum Umgebungsdruck p_A in der Ansicht (B) der FIG. 4 ersichtlich ist, steigt der Druck in der Druckzone bis zu einem Auslassdruck am Polymergelauslass 100B der Druckzone DZ von p_a = -4.5mbar; dies macht einen nur noch verringerten Unterschied bis zum Umgebungsdruck p_A bei Ombar aus.

Ein zu FIG. 4 abgewandeltes Druckprofil DP, DP' kann --wie in FIG. 5 im unteren Teil (B) gezeigt-- gemäß dem oben beispielhaft erläuterten Konzept gebildet werden; also kann das Druckprofil DP, DP' der FIG. 4 weiter modifiziert werden. Dies erfolgt --wie im oberen Teil (A) der FIG.5 gezeigt-- mittels einer oder mehrerer Querwände 600, insbesondere mit oberen Segmentierungselementen 601, 602 und/oder mittels einer oder mehrerer Querwände 600, insbesondere mit oberen Segmentierungselementen 601, 602, sowie mittleren und unteren Segmentierungselementen 604, 605. Diesbezüglich können oben erläuterte und im unteren Teil (B) der FIG. 5 beispielhaft gezeigte eine oder mehrere Druckzonenteilbereiche DZT in einer Druckzone DZ, derart vorgesehen sein, dass in jedem Druckzonenteilbereich DZT ein Druckabschnittsverlauf eines Druckprofils DP, DP' der Druckzone DZ vorliegt. Die Druckabschnittsverläufe sind aufgeteilt mittels der in FIG.5 unten schematisch aufgezeigten Druckgradientenbereiche, nämlich hier mit GRAD, GRAD1, GRAD2 und GRAD3 bezeichnet. Diese ergeben sich aufgrund des Druckverlusts an einer Querwand 600,600' etwa in der Form einer Druckstufe, Druckrampe oder dergleichen Druckverlauf entstehen. FIG.5 zeigt dazu weiter im oberen Teil schematisch zwei Querwände 600 mit jeweils einem oberen, mittleren und unteren Segmentierungselement 601, 604, 605 zur Begrenzung einer Druckzone DZ an deren Polymergeleinlass und Polymergelauslass 100A, 100B (in Förderrichtung C bzw. entgegen der Gegenstromrichtung C'). Desweiteren sind zwei Querwände 600' innerhalb der Druckzone DZ zur Ausbildung eines Druckgradientenbereichs GRAD1, GRAD2 gezeigt (analog wie er beispielsweise jeweils im unteren Teil der FIG. 2, FIG. 3 oder FIG. 4 gezeigt und erläutert ist). Die Querwände 600' sind jeweils mit einem Segmentierungselement 602 und einem Pendelblech 603 oberhalb des Förderbandes 400 ausgebildet. Das Segmentierungselement 601 kann, wie oben ausgeführt höhenverstellbar sein; insbesondere kann es so eingestellt werden, dass dies zu den aufgebrachten Schichtdicken von Polymergel 420 passt. Vorliegend hält die unterste Kante eines oberen Segmentierungselements 601 bevorzugt einen Abstand von D=30cm, insbesondere 20cm, wenigstens aber von D=10cm zur oberen Fläche des Polymergels 420. Bevorzugt ist das oberste Segmentierungselement ein Schottblech. Die unterste Kante eines oberen Segmentierungselements 602, 603 hält bevorzugt wenigstens einen Abstand von d=20cm, wenigstens aber d=5cm zur oberen Fläche des Polymergels 420. Bevorzugt ist das obere Segmentierungselement 602, 603 ein Pendelblech. Grundsätzlich kann auch d=0cm betragen; das freie Pendeln eines Pendelbleches mit einem endlichen Mindestabstand ist aber bevorzugt. Unter der oberen Fläche des Polymergels 420 ist grundsätzlich ein sich betriebsmäßig einstellendes mittleres Niveau der tatsächlichen Oberkante des Polymergels 420 zu verstehen.

Bevorzugt wird in einem Betrieb des Bandtrockners 1000 eine Schichtdicke, also das mittlere Niveau, unter Abgleich eines Durchsatzes mit einer Bandgeschwindigkeit des Förderbandes 400 eingestellt; dazu kann auch eine hier nicht gezeigte Schiene zur Nivellierung des Schichtdicke genutzt werden. Im Rahmen einer bevorzugten Weiterbildung ist ein Abstand einer untersten Kante eines oberen Segmentierungselements 601, 602, 603 (ggfs. in der oben erläuterten Weise zwar abhängig vom Durchsatz) grundsätzlich in einem vorderen Bereich des Trockneraufbaus 101i (also etwa im Bereich einer in FIG.1 bezeichneten Anfangszone AZ) größer als in einem hinteren Bereich des Trockneraufbaus 101i (also etwa im Bereich einer in FIG.1 bezeichneten letzten Trocknerzone 310 oder Endzone EZ). Dadurch kann in bevorzugter Weise berücksichtigt werden, dass das superabsorbierende Polymergel 420 auf dem Förderband 400 in dem vorderen Bereich des Trockneraufbaus 101i noch feuchter ist als in dem hinteren Bereich des Trockneraufbaus 101i.

Die Abstände D, d gewährleisten die Realisierung eines ausreichenden Gegenstroms von Trocknungsluft in Gegenstromrichtung C' und erlauben zum anderen die genannte Ausbildung eines Druckübergangsverlaufs nach dem Beispiel eines Druckgradientenbereichs GRAD.

Grundsätzlich können die Segmentierungselemente 601, 602 im Innenraum 101i eines Trockneraufbaus 101; d.h. insbesondere an einer Wandung desselben angeschweißt sein. Es hat sich jedoch gezeigt, dass die Verbindung zwischen Segmentierungselement 601, 602 und Trockneraufbau 101 vergleichsweise hohen Temperaturunterschieden und Temperaturschwankungen ausgesetzt ist; dies führt zu vergleichsweise hohen thermischen Spannungen in einer Schweißverbindung aufgrund unterschiedlicher absoluter Ausdehnungen der Segmentierungselemente 601, 602 einerseits und dem Trockneraufbau 101 andererseits.

Es hat sich als vorteilhaft erwiesen, eine Verbindung zwischen Segmentierungselement 601, 602 und Trockneraufbau 101 mittels einem im oberen Teil (A) und in Ansicht (C) der FIG.5 symbolisch dargestellten Rahmens 700 zu realisieren. Bevorzugt ist dieser stoffschlüssig fest --wie hier gezeigt-- nur mit dem Trockneraufbau 101 oder nur mit dem Segmentierungselement 601, 602 verbunden.

An dem Rahmen 700 kann die Querwand 600, 600' bzw. das Segmentierungselement 601, 602,603, 604, 605 angebracht sein, wenn der Rahmen 700 stoffschlüssig fest nur mit dem Trockneraufbau 101 verbunden ist. Die Anbringung des Segmentierungselements 601, 602, 603, 604, 605 am Rahmen 700 erfolgt unter Spiel S, vorzugsweise mittels einer Schraubverbindung, z. B. in einem Langloch.

Grundsätzlich kann in einer Abwandlung der Rahmen an dem Trockneraufbau 101 mit Spiel angebracht sein, wenn der Rahmen stoffschlüssig fest nur mit dem Segmentierungselement 601, 602 verbunden ist. Die Anbringung des Rahmens am Trockneraufbau 101 erfolgt dann unter Spiel, vorzugsweise mittels einer Schraubverbindung; z. B. in einem Langloch.

Die Anbringung des Segmentierungselement 601, 602 am Rahmen unter Spiel S --wie hier gezeigt-- gewährt ein gewisses Maß an relativer Ausdehnung von Segmentierungselement 601, 602, 603, 604, 605 und Trockneraufbau 101 sodass Dehnspannungen an der Verbindungsstelle gering gehalten sind. Die Verbindung ist vergleichsweise langlebig; etwaige Schweißnähte sind von Dehnspannungen entlastet.

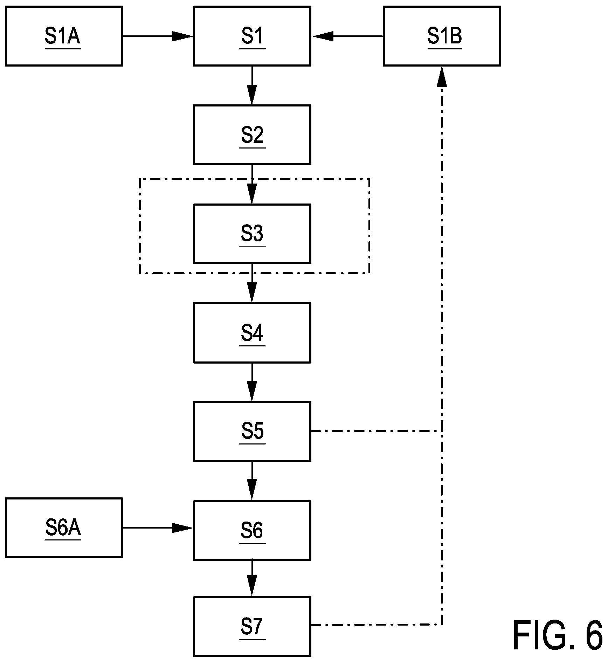

Im Folgenden wird mit Bezug auf FIG. 6 das Herstellungsverfahren zur Herstellung wasserabsorbierender Polymerpartikel mit dem Trocknungsschritt S3 allgemein beschrieben. Im Verfahrensschritt S1A erfolgt die Monomerpräparation einer wässrigen Monomer-Lösung oder -Suspension, die durch Hinzugabe mit weiteren Initiatoren, Additiven oder Rückführprodukten zusammen in den Polymerisationsprozess im Verfahrensschritt S1 gelangen. Nach abgeschlossener Polymerisation erfolgt die Gelpräparation eines super absorbierenden Polymers im Zustand eines wässrigen Polymergels im Verfahrensschritt S2. Danach wird das wässrige Polymergel als Polymergel 420 auf das Förderband 400 am Eintragsmodul 200 aufgebracht und es erfolgt im Verfahrensschritt S3 die Trocknung des Polymergels 420 zu einem superabsorbierenden Polymer im Zustand eines wasserabsorbierenden Polymerpartikels. Der Vorteil eines oben erläuterten verbesserten Druckprofils eines Druckübergangsverlaufs mit einem Druckgradientenbereich GRAD in einer Druckzone DZ ist zum einen eine Minimierung der Abfallprodukte und damit verbundene Wartungsarbeiten, bzw. Reinigung, was zu einer Kostenreduzierung führt. Desweiteren ist aufgrund der geringeren Verschmutzung eine Trocknungsqualität konstanter und damit verbunden ist auch eine Schwankung der Polymergelqualität, z.B. der Partikelgröße im Prinzip minimiert. Nach der Trocknung im Verfahrensschritt S3 erfolgt nach dem Mahlen der wasserabsorbierenden Polymerpartikel im Verfahrensschritt S4 das sogenannte Sizing der wasserabsorbierenden Polymerpartikel im Verfahrensschritt S5 zu einem sogenannten Basispolymer. Die im Sizing dargestellten Partikelgrößen des Basispolymers mit definierten Partikeln werden zur Postreaktion im Verfahrensschritt S6 überführt. In diesem m Verfahrensschritt werden noch weitere Additive im Verfahrensschritt S6A hinzugegeben. Danach erfolgt im Verfahrensschritt S7 nochmals ein Sizing des Endprodukts zur Darstellung bestimmter Partikelgrößen definierter Partikel im Endprodukt eines Superabsorbers. Anschließend erfolgt das Verpacken der Superabsorber. Die auftretenden Superabsorber Fein- und Feinstpartikel als Abfallprodukte können in den Prozess der Polymerisation über den Verfahrensschritt S1B in den Verfahrensschritt S1 überführt und somit wieder zurückgewonnen werden; insbesondere aus den Verfahrensschritten S5 und S7. Die im Schritt S3 anfallenden Abfälle müssen verworfen werden.

FIG. 7 zeigt schematisch ein Trocknermodul 100 mit einem Trockneraufbau 101 und einem Belüftungsaufbau 102. Der Belüftungsaufbau 102 weist eine Luftentnahmeführung 340 wie in FIG.1 sowie eine Luftrückführung 350 auf, die an den Trockneraufbau 101 angeschlossen sind. Zur Bildung des Trocknermoduls 100 ist auf den Trockneraufbau 101 --wie in FIG. 1-- der Belüftungsaufbau 102 mit entsprechenden Luftzirkulationseinheiten 320 --hier ein Ventilator-- bzw. teilweise Zuluftelementen 330 --hier eine Klappe, oder eine andere Art einer Drossel, soweit erforderlich (grundsätzlich ist eine möglichst widerstandsfreie i.e. ungedrosselte Luftzuführung bevorzugt)-- auf- und/oder angesetzt. Die Luftrückführung 350 weist eine Reihe von Einbauten der zuvor erläuterten Art auf, nämlich vorliegend einen Ventilator 351 zur Umwälzung der Rückführluft RL und/oder Frischluft FL über einen Wärmetauscher 352.

Weiter ist bei dem in FIG. 7 schematisch gezeigten Bandtrockner 1000 eine Abluftführung 360 des Belüftungsaufbaus 102 zur Führung von Feuchte beladener Abluft AL vorgesehen, die nicht zur Rückführung vorgesehen ist, sondern in die Umgebung über eine Abgabedrossel 362 abgegeben wird. Die Abluftführung 360 weist ebenfalls Einbauten, wie einen Ventilator 361 zur Ansaugung der Feuchte beladenen Abluft AL aus einer oder mehreren Trocknerzonen TZi (i=1..5) auf, die in der FIG.7 nicht näher bezeichnet sind. Die Abluft AL ist zur Abgabe zur Umgebung über die Abgabedrossel 362 vorgesehen. Eine Anzahl von letzten Trocknerzonen 310 vor dem Austragsmodul 300 des Trockneraufbaus 101 sind dargestellt und bilden eine bevorzugte Druckzone DZ_n deren Druckübergangsverlauf mit einem bevorzugten Druckprofil eines Druckgradientenbereichs GRAD im Detail X vergrößert dargestellt ist.

Die Anzahl der letzten Trocknerzonen 310 weist --wie bei den vorher erläuterten Ausführungsformen-- eine Umluftventilator 320 und ein Zuluftelement 330 auf, was hier als Beispiel zu verstehen ist. In einer hier nicht gezeigten Abwandlung können auch mehrere Umluftventilatoren 320 und/oder Zuluftelemente 330 oder auch Wärmetauscher jeweils in den nicht näher bezeichneten Trocknerzonen TZ vorgesehen sein. Im vorliegenden Fall ist jeder Trocknerzone TZn eine Druckzone DZn (hier i=1, 3, n-2, n-1, n) zugeordnet bzw. der Anzahl letzter Trocknerzonen 310 ist eine oben genannte besonders bevorzugte Druckzone DZn zugeordnet.

Außerdem ist eine Rückführung von Trocknungsluft als Rückführluft RL aus einer der letzten Trocknerzonen 310 in eine entgegen der Förderrichtung (C) davor liegende Trocknerzone (in FIG.1 ist das beispielhaft die Trocknerzone 130) möglich, da die Trocknungsluft einer der letzten Trocknerzonen 310 mit vergleichsweise wenig Feuchte beladen ist; mittels der Rückführung lässt sich energieeffizient warme Trocknungsluft in eine oder mehrere der bezogen auf die Förderrichtung C vorderen Trocknerzonen einbringen. Dazu sind die als Drosselklappe dargestellte erste Drossel 342 zur Bildung einer Rückführluftdrossel in der Luftentnahmeleitung 341 und die zweite Drossel 343 (letztere ggfs. zur Bildung einer Rückführluft-Bypassdrossel in einer Bypassleitung) vorgesehen. Die dritte Drossel 344 ist als Gesamt-Drossel in der Luftentnahmeleitung 341 zur Luftrückführleitung 354 angebracht, um den Strom der Rückführluft RL zu regulieren. Die vierte Drossel 345 kann zur Bildung einer Zuluft-Bypassdrossel (in einer weiteren Bypassleitung zur Bildung eines Zuluft-Bypass) angeordnet sein; d.h. um Zuluft aus der Umgebung in die Luftrückführleitung 354 einzubringen.

Bei dem in FIG.7 dargestellten Bandtrockner 1000 ist der Innenraum 101i des Trockneraufbaus 101 entlang der Förderrichtung C des Förderbandes 400 in mehr als eine Druckzone DZ, nämlich eine Anzahl von Druckzonen DZi aufgeteilt, wobei in FIG.7 vier der beispielsweise sechs oder sieben Druckzonen DZi (i=1, 3, n-2, n-1, n mit n beliebig, beispielsweise n=7) in unterschiedlicher Ausführung beispielhaft dargestellt sind.

Bei dem Bandtrockner 1000 der FIG.7 ist eine Druckzone DZi jeweils mit einer Anzahl von einem oder mehreren (z.B. vier bzw. fünf) Wärmetauschern WT1, WT3, WTn-2, WTn-1, WTn bestückt; diese können beispielsweise jeweils Teil eines Trocknermoduls sein, das mit den anderen Trocknermodulen assembliert werden kann. Die Aufteilung der Druckzonen DZi kann sich aus einem anhand der vorhergehenden FIG. 1 bis FIG. 6 erläuterten Druckverlauf ergeben und beispielsweise funktional und/oder konstruktiv zur Einstellung eines Drucks bzw. Druckverlaufs realisiert sein. Insbesondere ergibt sich eine Aufteilung in eine Anzahl von Druckzonen DZ1, DZ3, DZn-2, Dzn-1, DZn wie anhand von FIG. 7 beispielhaft beschrieben. Dort ist eine Anordnung von Luft zum Innenraum zuführenden Elementen (z.B. ein Umluftventilator 320 oder dergleichen Zuluftelement) und Luft vom Innenraum abführenden Elementen (z.B. eine Abluftdrossel 363 oder dergleichen Abluftelement 331) gezeigt, die ein Druckniveau am Innenraum vorgeben; insofern einen Druck einstellen; in FIG. 1 und FIG. 2 ist dazu z. B. ein Zuluftelement 330 und ein Abluftelement 331 gezeigt durch die ein Druckniveau am Innenraum 101i vorgegeben wird; insofern ein Druck eingestellt wird. Der innere Bereich des Trockneraufbaus kann demnach in einen oder mehrere, ggfs. bezüglich des Drucks einstellbare, insbesondere kontrollierbare, Bereiche, nämlich die hier dargestellten Druckzonen DZi (i=1..n), aufgeteilt sein.

Auf die hier beispielhaft genannte Weise könnten auch mehrere (in den FIG.n nicht gezeigte) Trocknerzonen TZi (i=1..5) zur Bildung einer Druckzone DZn, DZn-1 zusammengefasst sein; für jede Druckzone DZ können hier nicht näher dargestellte Temperatur- und vor allem Drucksensoren vorgesehen sein, die entweder nur als Messpunkte oder zusätzlich oder alternativ als Kontroll- und/oder Regelsensorik dienen. Außerdem kann auch jede Druckzone DZ_n, DZ_n-1, wenigstens ein Zuluftelement 330 und/oder ein Abluftelement 331 z. B. jeweils einen Umluftventilator 320 und/oder eine Abluftdrossel 363 oder Drosselklappe oder dergleichen, aufweisen.

Die in Förderrichtung C vorderen Druckzonen, wie sie hier mit DZ1 und DZ3 bezeichnet sind, erstrecken sich jeweils über jeweils genau eine Trocknerzone TZ, wie dies in FIG.7 gezeigt ist. Vorliegend sind diese als Druckzone DZ1 mit zwei Wärmetauschern WT, Druckzone DZ3 mit drei Wärmetauschern WT, Druckzone DZ_n-2 mit fünf Wärmetauschern WT und Druckzone DZ_n-1 mit vier Wärmetauschern WT ausgeführt; die weitere besonders bevorzugte Druckzone DZn, welche den letzten Trocknerzonen 310 zugeordnet ist, ist ohne Wärmetauscher WT ausgeführt. Die der Anzahl von letzten Trocknerzonen 310 zugeordnete Druckzone DZn erstreckt sich über diese letzten Trocknerzonen 310 (mit Luftumwälzung, bewirkt mittels eines Umluftventilators 320 und einem Zuluftelement 330).

Beispielhaft anhand der Druckzone DZ3 sei erläutert, dass jede der Druckzonen eine Druckzonengrenze aufweist, wobei die Druckzonengrenze mittels einer Querwandung QWe am Polymergeleinlass und mittels einer Querwandung QWa am Polymergelauslass einer Trocknerzone TZ im Innenraum quer zur Förderrichtung C des Förderbandes gebildet ist. Die Druckzonengrenze der Druckzone DZ3 ist vorliegend auch markiert durch eine erste am nicht näher bezeichneten Polymergeleinlass angeordnete Luftführungsöffnung LF1, die in eine Abluftführung 360 für Abluft AL mündet. Des Weiteren ist die Druckzone DZ3 am Polymergelauslass begrenzt durch eine dort angeordnete Luftführungsöffnung LF2, die hier die Mündung an einem luftzuführenden Abschnitt 370 einer Luftrückführung 350 in die Druckzone DZ3 darstellt. Jede der Luftführungsöffnungen LF1, LF2 weist eine Drossel auf, die vorliegend mit Eingangsdrossel 710 und Ausgangsdrossel 720 bezeichnet sind. Insofern treffen die obigen Angaben auch auf die in FIG.7 dargestellte, in Förderrichtung C, vorderste (d.h. erste) Druckzone DZ1 des Trockneraufbaus 101 in Form einer Anfangszone AZ zu; entsprechend sind die Bezeichnungen einer eingangsseitigen Luftführungsöffnung LF 1 mit Eingangsdrossel 710 und ausgangsseitigen Luftführungsöffnung LF2 mit Ausgangsdrossel 720 gegeben.

Beide vorderen Druckzonen solcherart können direkt aneinandergrenzen; sie können jedoch auch, wie hier vorliegend DZ1, DZ3, beanstandet sein, nämlich wie hier vorliegend durch eine zweite nicht näher gezeigte Druckzone. Beispielsweise können generell beide vordere Druckzonen durch eine weitere Druckzone mit einer beliebigen Anzahl von Trocknerzonen oder auch durch mehrere Druckzonen DZ mit jeweils einer beliebigen Anzahl von Trocknerzonen beanstandet und verbunden sein. Eine dazwischenliegende Druckzone, wie hier vorliegend eine zweite nicht näher gezeigte Druckzone, weist mindestens eine Trocknerzone auf.

Sowohl die erste Druckzone DZ1 als auch die dritte Druckzone DZ3 hat vorliegend im Innenraum des Trockneraufbaus 101 eine Innenwandung, die als eine Querwandung QWi gebildet ist. Eine solche als Innenwandung gebildete Querwandung QWi in einer Druckzone DZ ist vorliegend in Form einer oben erläuterten Querwand 600 gebildet und kann Segmentierungselemente 601, 602, 604, 605 aufweisen. Ein Segmentierungselement 603 kann beispielsweise als ein Pendelblech 603 gebildet sein und/oder ein oberes Segmentierungselement 601, 602 kann höhenverstellbar und oberhalb des Förderbandes 400 montiert sein. Insofern eignet sich eine Querwandung QWi, als Innenwandung in einer Druckzone DZ in der zuvor erläuterten Weise bei der Druckzone DZ1, DZ3 zur Ausbildung eines Druckgradientenbereichs GRAD. Ein Druckgradientenbereich GRAD liegt jeweils zwischen Polymergeleinlass 100A und Polymergelauslass 100B der ersten Druckzone DZ1 bzw. dritten Druckzone DZ3 und umfasst jeweils eine Druckstufe im Bereich der Innenwandung QWi.

Dementsprechend kann sich ein Druckverlauf --beispielsweise Bezug nehmend auf einen unteren Teil der FIG. 2 bis FIG. 4-- mit einer Druckstufe bei der eine Innenwandung bildenden Querwandung QWi einstellen lassen, so dass (etwa wie bezüglich FIG. 4 erläutert) ein erster Innendruck als Einlassdruck p_e jeweils in einem vorderen Bereich einer Druckzone DZ1, DZ3 herrscht und ein zweiter Innendruck als Auslassdruck p_a in einem hinteren Bereich der Druckzone DZ1, DZ3 herrscht- d.h. also in Förderrichtung C hinter der als Innenwandung gebildeten Querwandung QWi der Druckzone DZ1, DZ3 herrscht ein vom ersten Innendruck als Einlassdruck p_e anderer zweiter Innendruck als Auslassdruck p_a.

Demgegenüber ist die Druckzone DZ_n-2 --wiederum beanstandet zur Druckzone DZ3-hier ohne Innenwandung ausgeführt, so dass sich entlang der gesamten Druckzone DZ_n-2 in Förderrichtung C ein weitgehend konstantes Druckniveau einstellen kann zwischen den Querwänden QWe eingangs und QWa ausgangs. Das Druckniveau in der Druckzone DZ_n-2 ist wesentlich beeinflusst durch die Luftführungsöffnung LF1 zur Druckzone DZ_n-2. Analog stellt sich ein weitgehend konstanter Innendruck in der Druckzone DZ_n-1 ein, der wesentlich beeinflusst ist durch die Luftführungsöffnung LF1, die hier als 330 bezeichnet ist. Die Druckzone DZ_n-1 weist Außenwandungen QWe, QWa auf.

Die in Förderrichtung C letzte und besonders bevorzugte Druckzone DZn des Trockneraufbaus 101, ist der Anzahl letzter Trocknerzonen 310 zugeordnet. Die Druckzone DZn weist vorliegend eine vordere, am Polymergeleinlass 100A angrenzende Trocknerzone und eine hintere am Polymergelauslass 100B angrenzende Kühlzone auf - nämlich die vordere Trocknerzone mit Elementen 320, 330 und die hintere Kühlzone wie erläutert mit Drosseln 342, 343. Die hintere Kühlzone mit Drosseln 341, 342 ist vorliegend ohne Wärmetauschereinheit und damit bei abgesenkter Temperatur ausgebildet.

Die besonders bevorzugte letzte Druckzone DZ_n hat vorliegend eine Reihe von symbolisch dargestellten Querwänden 600, deren beispielhaft dargestellte obere Segmentierungselemente 601 höhenverstellbar oberhalb des Förderbandes 400 montiert sind und beispielsweise einstückig oder als Segmentierungselement 602 mit einem Pendelblech 602 ausgebildet sein können. In der besonders bevorzugte letzten Druckzone DZ_n, welche der Anzahl letzter Trocknerzonen 310 zugeordnet ist, stellt sich insofern ein Druckprofil DP mit mehreren Druckgradientenbereichen GRAD 1n mit vorliegend einer Mehrzahl von Druckstufen und jeweils stufenweise steigendem Unterdruck p_U im Innenraum 101i des Trockenaufbaus 101 bis zum Atmosphärendruck p_A als Umgebungsdruck ein; Dies ist im Detail X vergrößert dargestellt. Die Anzahl der Druckstufen und jeweils stufenweise steigendem Unterdruck entspricht der Anzahl von Querwänden 600, da sich an jedem Segmentierungselement 601 der Querwände 600 eine Druckstufe ausbildet.

Je nach Betriebsweise und Dichtigkeit der Segmentierungselemente 601, 602, 603 kann sich auch eine idealisierte gestrichelt dargestellte kontinuierliche Druckrampe eines Druckprofils DP einstellen, die sich ausgehend von einem Unterdruck p_U von einem Einlassdruck p_e am Polymergeleinlass 100A von -1,5 mbar bis zu einem bevorzugten Auslassdruck p_a am Polymergelauslass 100B zwischen bevorzugt -1 mbar bis 0 mbar Druckdifferenz zum Umgebungsdruck p_A anpasst.

Im Ergebnis führt diese Art einer Druckrampe des Druckprofils DP aufgrund der Querwände 600 in der letzten Druckzone DZ_n (d. h. hier konkret in der letzten Anzahl Trocknerzonen 310 vor einem Austragsmodul 300) dazu, dass sich im unmittelbaren Bereich der Auslassöffnung am (bezüglich der Förderung des Polymergels 420 benannten) Eingang 101e zum Innenraum 101i des Trockneraufbaus 101 und Ausgang 101a zum Innenraum 101i des Trockneraufbaus 101, d.h. wie hier für den Ausgang 101a des Trockneraufbaus 101 hin zur Umgebung gezeigt, ein übermäßig hoher Drucksprung vermieden ist.

Das Konzept hat erkannt, dass sich übermäßig hoch einstellende Drucksprünge (im Falle fehlender Querwände 600) dazu neigen, einen nachteiligen Falschlufteintrag und damit auch Partikeleintrag in den Innenraum 101i des Trockneraufbaus 101 zu fördern. Im vorliegenden Fall wird eine jedenfalls über die Erstreckung der Anzahl letzter Trocknerzonen 310 in der letzten Druckzone DZ_n sich anpassende Druckrampe mittels der Segmentierungselemente 601 erreicht.

Eine solche Maßnahme kann sich auch bei einer ersten Druckzone DZ1 (z. B. zugeordnet einer als Anfangszone zu bezeichnenden Trocknerzone TZ) als vorteilhaft erweisen. Ein Innendruck kann langsam, d.h. über die Erstreckung der ersten Druckzone DZ1 vom Umgebungsdruck p_A, insbesondere Atmosphärendruck, auf den Innendruck p_U im Innenraum 101i im Trockneraufbau 101, bei z. B. -1,5 mbar, abgesenkt werden. Die Unterdruckwerte sind als Differenzdrücke zum Atmosphärendruck p_A der Umgebung angegeben - der Atmosphärendruck der Umgebung ist insofern mit 0mbar anzugeben. Anstatt einer Segmentierung mit Segmentierungselementen 601 --aber mit ähnlicher Funktion wie eine Segmentierung-- kann in einer solchen ersten Druckzone DZ1 (Anfangszone AZ) aber auch in einer Endzone EZ beispielsweise eine Querwand 600 auch eine Lamellendichtung oder eine geeignete Staffelung von mehreren Vorhängen von Blechen oder dgl. lockere Dichtungsmaßnahme gebildet sein, was eine Alternative zur Segmentierung mit großen Blechen, aber mit ähnlicher Wirkung darstellt.

Bei der ersten Druckzone DZ1 am Eingang 101e des Trockneraufbaus 101 sind diese Maßnahmen vor allem der Energieeffizienz förderlich, da ein Falschlufteintrag in den Innenraum 101i des Trockneraufbaus 101 vermieden wird. Die Maßnahme einer Segmentierung in der Endzone EZ bei der letzten Anzahl Trocknerzonen 310 vor einem Austragsmodul 300 mit Blechen dient vor allem dazu, eine Falschluft und einen dadurch bewirkten Partikeleintrag am Ausgang 101a gering zu halten.) Am Eingang 101e des Trockneraufbaus 101 wird das bloße Einsaugen von Luft vermieden. Eine Druckrampe DR am Ausgang 101a des Trockneraufbaus 101 ist dazu geeignet, einen Lufteintrag und einen Partikeleintrag zu unterbinden.

### Bezugszeichen:

- 1000: Bandtrockner, insbesondere Umluftbandtrockner
- 10A: unten eingebautes Heizregister und/oder Ventilator
- 10B: oben eingebautes Heizregister und/oder Ventilator
- 100: Trocknermodul
- 100A: Polymergeleinlass einer bevorzugten Druckzone
- 100B: Polymergelauslass einer bevorzugten Druckzone
- 101: Trockneraufbau
- 101e: Eingang des Trockneraufbaus 101
- 101a: Ausgang des Trockneraufbaus 101
- 101i: Innenraum des Trockneraufbaus 101
- 102: Belüftungsaufbau
- 110: Trocknerzone 1
- 120: Trocknerzone 2
- 130: Trocknerzone 3
- 140: Trocknerzone 4
- 150: Trocknerzone 5
- 160: Trocknerzone 6
- 170: letzte Trocknerzone
- 200: Eintragsmodul
- 210: Produktaufgabe
- 300: Austragsmodul
- 310: Anzahl letzter Trocknerzonen
- 320: Umluftventilator
- 330: Zuluftelement
- 331: Abluftelement
- 340: Luftentnahmeführung
- 341: Luftentnahmeleitung
- 342: erste Drossel mit Drosselklappe
- 343: zweite Drossel mit Drosselklappe
- 350: Luftrückführung
- 351: Ventilator
- 352: Wärmetauscher
- 354: Luftrückführleitung
- 360: Abluftführung
- 361: Ventilator
- 362: Abgabedrossel
- 363: Abluftdrossel
- 370: luftzuführende Abschnitte
- 400: Förderband
- 410A, 410B: Umlenkrolle A und B
- 410C: Brecher
- 420: Polymergel, wässriges Polymergel vor dem Trocknen / getrocknetes superabsorbierendes Polymergel in Partikeln nach dem Trocknen
- 600: Querwand
- 601, 602: oberes Segmentierungselement, oberhalb des Förderbandes
- 603: Pendelblech
- 604, 606: mittleres Segmentierungselement, zwischen dem Förderband
- 605, 607: unteres Segmentierungselement, unterhalb des Förderbandes
- 700: Rahmen
- 710 / 720: Eingangs- Drossel / Ausgangs-Drossel
- S: Spiel
- FL: Frischluft
- AL: Abluft
- C: Förderrichtung
- C': Gegenstrom-Richtung
- UL: Umluft
- RL: Rückführluft
- TZ: Trocknerzone
- DZ: Druckzone z.B. hintere und vordere Druckzone
- DZT1, DZT2, DZT3: Druckzonenteilbereiche
- DP: Druckprofil
- DS1, DS2, DS3: Druckstufe
- WT1...WT3, WTn-2, WTn-1: Wärmetauscher
- EZ: Endzone
- AZ: Anfangszone
- GRAD, GRAD1, GRAD2, GRAD3: Druckgradientenbereich
- S1, S1A, S1B, S2, ...S6, S6A, S7: Verfahrensschritte
- QW, QWe, QWa, QWi: Querwandung, eingangs, ausgangs, innen sowie oberhalb, zwischen und unterhalb des Förderbandes
- p_A: Umgebungsdruck (Atmosphärendruck) zum Innenraum 101i
- p_U: Unterdruck im Innenraum 101i
- p_e, p_a: Einlassdruck, Auslassdruck zur Druckzone DZ
- ΔpA, ΔpB: erste, zweite Druckdifferenz

## Patentansprüche

1. Herstellungsverfahren zur Herstellung wasserabsorbierender Polymerpartikel, wobei das Herstellungsverfahren die Verfahrensschritte aufweist:
- Polymerisieren (S1) einer wässrigen Monomer-Lösung oder-Suspension zur Herstellung eines wässrigen Polymergels (S2),
- Trocknen (S3) des wässrigen Polymergels in einem Bandtrockner mit einem Förderband (400) unter Aufnahme des wässrigen Polymergels auf dem Förderband (400) und Fördern des Polymergels auf dem Förderband (400) in eine Förderrichtung (C) des Förderbandes (400),
- Brechen und/oder Mahlen (S4) des getrockneten Polymergels zu wasserabsorbierenden Polymerpartikeln, wobei zum Trocknen (S3):
- der Bandtrockner einen Trockneraufbau (101) aufweist, in dessen Innenraum (101i) das Förderband (400) geführt wird,
- Trocknungsluft in dem Innenraum (101i) des Trockneraufbaus (101) im Gegenstrom (C') entgegen der Förderrichtung (C) geführt wird und der Innenraum des Trockneraufbaus (101) weitgehend, bevorzugt vollständig, bei einem Unterdruck (p_U) gegenüber dem Umgebungsdruck (p_A) im Außenraum des Trockneraufbaus (101) gehalten wird,
wobei
- der Innenraum (101i) eine Druckzone (DZ) aufweist und/oder bildet, wobei der Innenraum (101i) des Trockneraufbaus (101) in eine Anzahl einer oder mehrerer Druckzonen (DZ) und/oder Druckzonenteilbereiche (DZT1, DZT2) aufgeteilt ist, und die Anzahl einer oder mehrerer Druckzonen (DZ) und/oder Druckzonenteilbereiche (DZT1, DZT2) innerhalb einer Endzone (EZ) vor einem Austragsmodul (300) gebildet werden und/oder sich wenigstens eine Druckzone (DZ) über eine Anzahl letzter Trocknerzonen (TZ, 310) erstreckt, wobei entlang der Förderrichtung (C):
- ein erster Innendruck als Einlassdruck an einem Polymergeleinlass (100A) in wenigstens einer der Druckzonen (DZ) mit einer ersten Druckdifferenz (ΔpA) zu einem Umgebungsdruck (p_A), und
- ein zweiter Innendruck als Auslassdruck an einem Polymergelauslass (100B) in der wenigstens einen Druckzone (DZ) mit einer zweiten Druckdifferenz (ΔpB) zu einem Umgebungsdruck (p_A) gebildet wird, wobei
- die erste und zweite Druckdifferenz zum Umgebungsdruck bezogen auf einen Innendruck oberhalb des Förderbandes (400) ist, wobei der Innendruck oberhalb des Förderbandes (400) ein Unterdruck im Bereich bis zu -10mbar ist, und
- die zweite Druckdifferenz (ΔpB) geringer ist als die erste Druckdifferenz (ΔpA), wobei
- die wenigstens eine Druckzone (DZ) im Innenraum (101i) des Trockneraufbaus (101) oder ein Druckzonenteilbereich (DZT1, DZT2) der Druckzone (DZ) mittels einer Querwand (QWa, QWe, QWi) begrenzt wird, die quer zur Förderrichtung des Förderbandes orientiert ist, wobei
- ein Druckprofil (DP) ausgebildet wird, das mindestens einen Druckgradientenbereich (GRAD) an und/oder zwischen dem Polymergeleinlass (100A) und dem Polymergelauslass (100B) der Druckzone (DZ) aufweist, und der Druckgradientenbereich (GRAD) eine Druckstufe (DS1, DS2, DS3), Druckrampe oder dergleichen Druckverlauf an der Querwand (QWa, QWe, QWi) aufweist.

2. Herstellungsverfahren nach Anspruch 1, **dadurch gekennzeichnet, dass** der Innenraum des Trockneraufbaus (101) weitgehend, bevorzugt vollständig, bei einem Unterdruck (p_U) in einem Bereich bis zu -20mbar, insbesondere bis zu -10mbar, insbesondere bis zu -5mbar, gehalten ist, vorzugsweise bei einem Unterdruck (p_U) zwischen - 0,5mbar bis -5mbar gegenüber dem Umgebungsdruck (p_A) im Außenraum des Trockneraufbaus (101) gehalten ist, und der Umgebungsdruck (p_A) ein Atmosphärendruck außerhalb des Trockneraufbaus (101) ist.

3. Herstellungsverfahren nach einem der Ansprüche 1 oder 2, **dadurch gekennzeichnet, dass** ein Innendruck unterhalb des Förderbandes (400) um einen Wert zwischen 0.5mbar und 5mbar gegenüber dem Innendruck oberhalb des Förderbandes (400) abgesenkt ist, bei auf dem Förderband (400) aufliegendem wässrigen Polymergel.

4. Herstellungsverfahren nach einem der Ansprüche 1 bis 3, **dadurch gekennzeichnet, dass** die erste und zweite Druckdifferenz zum Umgebungsdruck bezogen auf einen Innendruck oberhalb des Förderbandes (400) ist, wobei
- an einem Polymergeleinlass (100A) der Druckzone (DZ) die erste Druckdifferenz zum Atmosphärendruck zwischen -10 mbar und -1 mbar, insbesondere zwischen -10 mbar und -0.5 mbar beträgt, und/oder
- an einem Polymergelauslass (100B) der Druckzone (DZ) die zweite Druckdifferenz zum Atmosphärendruck zwischen -3 mbar und 0 mbar, insbesondere zwischen -2 mbar und 0 mbar, insbesondere zwischen -0.5mbar und 0mbar, beträgt.

5. Herstellungsverfahren nach einem der Ansprüche 1 bis 4, **dadurch gekennzeichnet, dass**
- ein Druckprofil (DP) eines Druckverlaufs in der Druckzone (DZ) und/oder Druckzonenteilbereichs (DZT1, DZT2) unabhängig von einem Umgebungsdruck einstellbar ist, und/oder
- sich das Druckprofil (DP) zu einer Druckzone (DZ) und/oder Druckzonenteilbereich (DZT1, DZT2) durch eine Eingangseinstellung einer Eingangsklappe oder Eingangsdrossel (710) an einem Polymergeleinlass (100A) zu einer Druckzone (DZ) und/oder Druckzonenteilbereich (DZT1, DZT2) und durch eine Ausgangseinstellung einer Ausgangsklappe oder Ausgangsdrossel (720) am Polymergelauslass (100B) einer Druckzone (DZ) und/oder Druckzonenteilbereich (DZT1, DZT2) ausbildet.

6. Herstellungsverfahren nach einem der Ansprüche 1 bis 5, **dadurch gekennzeichnet, dass** zum Trocknen (S3):
- eine am Trockneraufbau (101) luftabführend anschließende Luftentnahmeführung (340) und eine am Trockneraufbau (101) luftzuführend anschließende Luftrückführung (350) gebildet ist, die mit der Luftentnahmeführung (340) verbunden ist, wobei
- Rückführluft (RL) aus dem Trockneraufbau (101), insbesondere einer Endzone (EZ), entnommen und über die Luftrückführung (350) dem Trockneraufbau (101), insbesondere vor einer Endzone (EZ) gelegenen Trocknerzone (TZ), wieder zugeführt wird, wobei eine Luftentnahmeführung (340) und/oder Luftrückführung (350) mit einer Druckzone (DZ) strömungsverbunden ist, insbesondere über eine Luftführungsöffnung zur Druckzone (DZ) mündet.

7. Herstellungsverfahren nach einem der Ansprüche 1 bis 6, **dadurch gekennzeichnet, dass** zum Trocknen (S3):
- Abluft aus dem Trockneraufbau (101) wenigstens teilweise in einer Abluftführung (360) abgeführt wird, wobei die Abluftführung (360) von einer weiteren Luftführungsöffnung zur Druckzone ausgeht.

8. Herstellungsverfahren nach einem der Ansprüche 1 bis 7, **dadurch gekennzeichnet, dass** zum Trocknen (S3):
- der Bandtrockner als ein mit Umluft (UL) betriebener Umluftbandtrockner ausgebildet ist, der zur Führung der Umluft mit einem das Förderband (400) weitgehend umfassenden Trockneraufbau (101) gebildet ist, bei dem die Trocknungsluft in einer Trockenzone (TZ) als die Umluft (UL) umgewälzt wird, insbesondere quer zur Gegenstrom-Richtung (C') umgewälzt wird.

9. Herstellungsverfahren nach einem der Ansprüche 1 bis 8, **dadurch gekennzeichnet, dass** in der Druckzone (DZ) das Druckprofil:
- durch einen drosselbaren Volumenstrom an Zuluft, insbesondere Rückführluft (RL) und/oder Frischluft (FL), insbesondere am Polymergeleinlass (100A) der Druckzone (DZ) und/oder Druckzonenteilbereich (DZT1, DZT2), ausgebildet wird, und/oder
- durch einen drosselbaren Volumenstrom an Abluft, insbesondere am Polymergelauslass (100B) der Druckzone (DZ) und/oder Druckzonenteilbereich (DZT1, DZT2), ausgebildet wird, und/oder
- in der Druckzone (DZ), insbesondere an und/oder zwischen dem Polymergeleinlass (100A) und/oder Polymergelauslass (100B), die Einstellung der Volumenströme das Druckprofil (DP) ausbildet, insbesondere die Einstellung der Volumenströme bei einer Luftführungsöffnung, insbesondere einem Zuluftelement (330) und/oder einem Abluftelement (331), erfolgt.

10. Bandtrockner zur Trocknung eines wässrigen Polymergels bei einem Herstellungsverfahren nach einem der Ansprüche 1 bis 9, wobei
- der Bandtrockner einen Trockneraufbau (101) aufweist, in dessen Innenraum (101i) das Förderband (400) geführt wird, wobei
- Trocknungsluft in dem Innenraum (101i) des Trockneraufbaus (101) im Gegenstrom (C') entgegen der Förderrichtung (C) führbar ist und der Innenraum des Trockneraufbaus (101) weitgehend, bevorzugt vollständig, bei einem Unterdruck (p_U) gegenüber dem Umgebungsdruck (p_A) im Außenraum des Trockneraufbaus (101) haltbar ist
wobei
- der Innenraum (101i) eine Druckzone (DZ) aufweist und/oder bildet, wobei der Innenraum (101i) des Trockneraufbaus (101) in eine Anzahl einer oder mehrerer Druckzonen (DZ) und/oder Druckzonenteilbereiche (DZT1, DZT2) aufgeteilt ist, und die Anzahl einer oder mehrerer Druckzonen (DZ) und/oder Druckzonenteilbereiche (DZT1, DZT2) innerhalb einer Endzone (EZ) vor einem Austragsmodul (300) gebildet werden und/oder sich wenigstens eine Druckzone (DZ) über eine Anzahl letzter Trocknerzonen (TZ, 310) erstreckt, wobei entlang der Förderrichtung (C):
- ein erster Innendruck als Einlassdruck an einem Polymergeleinlass (100A) in wenigstens einer der Druckzonen (DZ) mit einer ersten Druckdifferenz (ΔpA) zu einem Umgebungsdruck (p_A) und
- ein zweiter Innendruck als Auslassdruck an einem Polymergelauslass (100B) in der wenigstens eine Druckzone (DZ) mit einer zweiten Druckdifferenz (ΔpB) zu einem Umgebungsdruck (p_A) gebildet ist, wobei
- die erste und zweite Druckdifferenz zum Umgebungsdruck bezogen auf einen Innendruck oberhalb des Förderbandes (400) ist, wobei der Innendruck oberhalb des Förderbandes (400) ein Unterdruck im Bereich bis zu -10mbar ist, und
- die zweite Druckdifferenz (ΔpB) geringer ist als die erste Druckdifferenz (ΔpA), wobei
- die wenigstens eine Druckzone (DZ) im Innenraum (101i) des Trockneraufbaus (101) oder ein Druckzonenteilbereich (DZT1, DZT2) von dieser mittels einer Querwand (QWa, QWe, QWi) begrenzt wird, die quer zur Förderrichtung des Förderbandes orientiert ist, wobei
- ein Druckprofil (DP) ausgebildet werden kann, das mindestens einen Druckgradi entenbereich (GRAD) an und/oder zwischen dem Polymergeleinlass (100A) und dem Polymergelauslass (100B) der Druckzone (DZ) aufweist, und der Druckgradi entenbereich (GRAD) eine Druckstufe (DS1, DS2, DS3), Druckrampe oder derglei chen Druckverlauf an der Querwand (QWa, QWe, QWi) aufweist.

11. Bandtrockner nach Anspruch 10, **dadurch gekennzeichnet, dass** eine Druckzone (DZ) eine Druckzonengrenze am Rand der Druckzone (DZ) aufweist, insbesondere einen Polymergeleinlass (100A) und/oder einen Polymergelauslass (100B) aufweist.

12. Bandtrockner nach Anspruch 11, **dadurch gekennzeichnet, dass** - die Druckzonengrenze mittels einer Luftführungsöffnung und/oder einer Außen-Querwand (QWa, QWe) im Innenraum (101i) des Trockneraufbaus (101) gebildet ist, wobei die Außen-Querwand (QWa, QWe) quer zur Förderrichtung (C) des Förderbandes (400) orientiert ist, insbesondere am Trockneraufbau (101) befestigt ist, und/oder.
- die Luftführungsöffnung und/oder die Außen-Querwand (QWa, QWe) zur Ausbildung eines Druckgradientenbereichs (GRAD) an der Druckzonengrenze angeordnet ist.

13. Bandtrockner nach einem der Ansprüche 10 bis 12, **dadurch gekennzeichnet, dass** eine Druckzone (DZ) eine Innen-Querwand (QWi) innerhalb der Druckzone aufweist, insbesondere zwischen einem Polymergeleinlass (100A) und einem Polymergelauslass (100B), und/oder die Innen-Querwand (QWi) neben einer Außen-Querwand (QWa, QWe) einer Druckzone (DZ) gebildet ist zur Ausbildung eines Druckzonenteilbereichs (DZT1, DZT2) und/oder eines Druckgradientenbereichs (GRAD) in der Druckzone (DZ).

14. Bandtrockner (1000) nach einem der Ansprüche 10 bis 13, **dadurch gekennzeichnet, dass** eine Querwand (QWa, QWe,QWi) im Innenraum des Trockneraufbaus (101) die quer zur Förderrichtung (C) des Förderbandes (400) orientiert ist, mindestens ein Segmentierungselement (600) aufweist.

15. Bandtrockner (1000) nach Anspruch 14, **dadurch gekennzeichnet, dass** die Querwand (QWa, QWe,QWi) im Innenraum des Trockneraufbaus (101) wenigstens ein oberes Segmentierungselement (601, 602) oberhalb des Förderbandes (400) und/oder wenigstens ein unteres Segmentierungselement (605, 607) unterhalb des Förderbandes und/oder wenigstens ein mittleres Segmentierungselement (604, 606) zwischen einem in Förderrichtung (C) laufenden Teil des Förderbandes und einem gegen die Förderrichtung (C') laufenden Teil des Förderbandes aufweist.

16. Bandtrockner (1000) nach Anspruch 14 oder 15, **dadurch gekennzeichnet, dass** ein Segmentierungselement (601, 602, 604, 605, 606, 607), insbesondere ein oberes Segmentierungselement, einstückig und/oder mit einem Pendelblech (603) ausgebildet ist und/oder höhenverstellbar ist.

17. Bandtrockner (1000) nach einem der Ansprüche 10 bis 16, **dadurch gekennzeichnet, dass** eine Verbindung zwischen einem Segmentierungselement (601, 602, 604, 605, 606, 607) und dem Trockneraufbau (101) mittels eines Rahmens realisiert ist.

18. Bandtrockner (1000) nach Anspruch 17, **dadurch gekennzeichnet, dass** der Rahmen fest nur mit dem Trockneraufbau (101) oder nur mit dem Segmentierungselement (601, 602) verbunden ist, und/oder
- an dem Rahmen das Segmentierungselement mit Spiel angebracht sein, wenn der Rahmen fest nur mit dem Trockneraufbau (101) verbunden ist und/oder
- der Rahmen mit Spiel an dem Trockneraufbau (101) angebracht ist, wenn der Rahmen fest nur mit dem Segmentierungselement (601, 602, 604, 605, 606, 607) verbunden ist.

## Claims

1. A production process for production of water-absorbing polymer particles, where the production process has the following process steps:
- polymerizing (S1) an aqueous monomer solution or suspension for production of an aqueous polymer gel (S2),
- drying (S3) the aqueous polymer gel in a belt dryer with a conveyor belt (400) by accommodating the aqueous polymer gel on the conveyor belt (400) and conveying the polymer gel on the conveyor belt (400) in a conveying direction (C) of the conveyor belt (400),
- crushing and/or grinding (S4) the dried polymer gel to give water-absorbing polymer particles, where, for drying (S3):
- the belt dryer has a dryer setup (101) in the interior (101i) of which the conveyor belt (400) is guided,
- drying air in the interior (101i) of the dryer setup (101) is conducted in countercurrent (C') counter to the conveying direction (C) and the interior of the dryer setup (101) is kept substantially, preferably completely, at a reduced pressure (p_U) relative to the ambient pressure (p_A) outside the dryer setup (101), where
- the interior (101i) has and/or forms a pressure zone (DZ), where the interior (101i) of the dryer setup (101) is divided into a number of one or more pressure zones (DZ) and/or pressure zone subregions (DZT1, DZT2), and the number of one or more pressure zones (DZ) and/or pressure zone subregions (DZT1, DZT2) are formed within an end zone (EZ) upstream of a discharge module (300) and/or at least one pressure zone (DZ) extends over a number of last dryer zones (TZ, 310), where, in line with the conveying direction (C):
- a first internal pressure is formed as inlet pressure at a polymer gel inlet (100A) in at least one of the pressure zones (DZ) with a first pressure differential (ΔpA) from an ambient pressure (p_A), and
- a second internal pressure is formed as outlet pressure at a polymer gel outlet (100B) in the at least one pressure zone (DZ) with a second pressure differential (ΔpB) from an ambient pressure (p_A), where
- the first and second pressure differentials from ambient pressure are based on an internal pressure above the conveyor belt (400), where the internal pressure above the conveyor belt (400) is a reduced pressure in the range of up to -10 mbar, and
- the second pressure differential (ΔpB) is smaller than the first pressure differential (ΔpA),
where
- the at least one pressure zone (DZ) in the interior (101i) of the dryer setup (101) or a pressure zone subregion (DZT1, DZT2) of the pressure zone (DZ) is bounded by means of a transverse wall (QWa, QWe, QWi) oriented transverse to the conveying direction of the conveyor belt, where
- a pressure profile (DP) is formed, having at least one pressure gradient region (GRAD) at and/or between the polymer gel inlet (100A) and the polymer gel outlet (100B) of the pressure zone (DZ), and the pressure gradient region (GRAD) has a pressure stage (DS1, DS2, DS3), pressure ramp or similar pressure variation at the transverse wall (QWa, QWe, QWi).

2. The production process according to claim 1, wherein the interior of the dryer setup (101) is kept substantially, preferably completely, at a reduced pressure (p_U) in a range of up to -20 mbar, especially up to -10 mbar, especially up to -5 mbar, preferably at a reduced pressure (p_U) between -0.5 mbar and -5 mbar relative to the ambient pressure (p_A) outside the dryer setup (101), and the ambient pressure (p_A) is an atmospheric pressure outside the dryer setup (101).

3. The production process according to either of claims 1 and 2, wherein an internal pressure beneath the conveyor belt (400) has been lowered by a value between 0.5 mbar and 5 mbar compared to the internal pressure above the conveyor belt (400), with aqueous polymer gel lying on the conveyor belt (400).

4. The production process according to any of claims 1 to 3, wherein the first and second pressure differentials from ambient pressure are based on an internal pressure above the conveyor belt (400), where
- the first pressure differential from atmospheric pressure at a polymer gel inlet (100A) of the pressure zone (DZ) is between -10 mbar and -1 mbar, especially between -10 mbar and -0.5 mbar, and/or
- the second pressure differential from atmospheric pressure at a polymer gel outlet (100B) of the pressure zone (DZ) is between -3 mbar and 0 mbar, especially between -2 mbar and 0 mbar, especially between -0.5 mbar and 0 mbar.

5. The production process according to any of claims 1 to 4, wherein
- a pressure profile (DP) of a pressure variation in the pressure zone (DZ) and/or pressure zone subregion (DZT1, DZT2) is adjustable independently of an ambient pressure, and/or
- the pressure profile (DP) with respect to a pressure zone (DZ) and/or pressure zone subregion (DZT1, DZT2) forms through an input setting of an intake valve or intake throttle (710) at a polymer gel inlet (100A) to a pressure zone (DZ) and/or pressure zone subregion (DZT1, DZT2) and through an output setting of an output valve or output throttle (720) at the polymer gel outlet (100B) of a pressure zone (DZ) and/or pressure zone subregion (DZT1, DZT2).

6. The production process according to any of claims 1 to 5, wherein, for drying (S3):
- an air withdrawal conduit (340) connected to the dryer setup (101) to remove air and an air recycling conduit (350) connected to the dryer setup (101) to supply air are formed, said air recycling conduit (350) being connected to the air withdrawal conduit (340), where
- recycled air (RL) is withdrawn from the dryer setup (101), especially from an end zone (EZ), and fed back via the air recycling conduit (350) to the dryer setup (101), especially dryer zone (TZ) situated upstream of an end zone (EZ), where an air withdrawal conduit (340) and/or air recycling conduit (350) is connected for flow purposes to a pressure zone (DZ), and especially opens into the pressure zone (DZ) via an air-guiding orifice.

7. The production process according to any of claims 1 to 6, wherein, for drying (S3):
- waste air from the dryer setup (101) is removed at least partly in a waste air conduit (360), where the waste air conduit (360) proceeds from a further air-guiding orifice to the pressure zone.

8. The production process according to any of claims 1 to 7, wherein, for drying (S3):
- the belt dryer takes the form of an air circulation belt dryer which is operated with circulating air (UL) and, to guide the circulating air, is formed with a dryer setup (101) substantially comprising the conveyor belt (400), in which the drying air is circulated in a drying zone (TZ) as the circulating air (UL), especially transverse to the countercurrent direction (C').

9. The production process according to any of claims 1 to 8, wherein, in the pressure zone (DZ), the pressure profile:
- is formed by a throttle-controllable volume flow rate of feed air, especially recycled air (RL) and/or fresh air (FL), especially at the polymer gel inlet (100A) of the pressure zone (DZ) and/or pressure zone subregion (DZT1, DZT2), and/or
- is formed by a throttle-controllable volume flow rate of waste air, especially at the polymer gel outlet (100B) of the pressure zone (DZ) and/or pressure zone subregion (DZT1, DZT2), and/or
- the adjustment of the volume flow rates in the pressure zone (DZ), especially at and/or between the polymer gel inlet (100A) and/or polymer gel outlet (100B), forms the pressure profile (DP), the volume flow rates especially being adjusted at an air-guiding orifice, especially an air supply element (330) and/or a waste air element (331).

10. A belt dryer for drying an aqueous polymer gel in a production process according to any of claims 1 to 9, where
- the belt dryer has a dryer setup (101) in the interior (101i) of which the conveyor belt (400) is guided, where
- drying air in the interior (101i) of the dryer setup (101) can be conducted in countercurrent (C') counter to the conveying direction (C) and the interior of the dryer setup (101) can be kept substantially, preferably completely, at a reduced pressure (p_U) relative to the ambient pressure (p_A) outside the dryer setup (101),
where
- the interior (101i) has and/or forms a pressure zone (DZ), where the interior (101i) of the dryer setup (101) is divided into a number of one or more pressure zones (DZ) and/or pressure zone subregions (DZT1, DZT2), and the number of one or more pressure zones (DZ) and/or pressure zone subregions (DZT1, DZT2) are formed within an end zone (EZ) upstream of a discharge module (300) and/or at least one pressure zone (DZ) extends over a number of last dryer zones (TZ, 310), where, in line with the conveying direction (C):
- a first internal pressure is formed as inlet pressure at a polymer gel inlet (100A) in at least one of the pressure zones (DZ) with a first pressure differential (ΔpA) from an ambient pressure (p_A) and
- a second internal pressure is formed as outlet pressure at a polymer gel outlet (100B) in the at least one pressure zone (DZ) with a second pressure differential (ΔpB) from an ambient pressure (p_A), where
- the first and second pressure differentials from ambient pressure are based on an internal pressure above the conveyor belt (400), where the internal pressure above the conveyor belt (400) is a reduced pressure in the range of up to -10 mbar, and
- the second pressure differential (ΔpB) is smaller than the first pressure differential (ΔpA),
where
- the at least one pressure zone (DZ) in the interior (101i) of the dryer setup (101) or a pressure zone subregion (DZT1, DZT2) thereof is bounded by means of a transverse wall (QWa, QWe, QWi) oriented transverse to the conveying direction of the conveyor belt, where
- a pressure profile (DP) can be formed, having at least one pressure gradient region (GRAD) at and/or between the polymer gel inlet (100A) and the polymer gel outlet (100B) of the pressure zone (DZ), and the pressure gradient region (GRAD) has a pressure stage (DS1, DS2, DS3), pressure ramp or similar pressure variation at the transverse wall (QWa, QWe, QWi).

11. The belt dryer according to claim 10, wherein a pressure zone (DZ) has a pressure zone boundary at the edge of the pressure zone (DZ), especially a polymer gel inlet (100A) and/or a polymer gel outlet (100B).

12. The belt dryer according to claim 11, wherein the pressure zone boundary is formed by means of an air-guiding orifice and/or a transverse outer wall (QWa, QWe) in the interior (101i) of the dryer setup (101), where the transverse outer wall (QWa, QWe) is oriented transverse to the conveying direction (C) of the conveyor belt (400), especially secured to the dryer setup (101), and/or
- the air-guiding orifice and/or the transverse outer wall (QWa, QWe) for formation of a pressure gradient region (GRAD) is arranged at the pressure zone boundary.

13. The belt dryer according to any of claims 10 to 12, wherein a pressure zone (DZ) has a transverse inner wall (QWi) within the pressure zone, especially between a polymer gel inlet (100A) and a polymer gel outlet (100B), and/or the transverse inner wall (QWi), as well as a transverse outer wall (QWa, QWe) of a pressure zone (DZ), is designed to form a pressure zone subregion (DZT1, DZT2) and/or a pressure gradient region (GRAD) in the pressure zone (DZ).

14. The belt dryer (1000) according to any of claims 10 to 13, wherein a transverse wall (QWa, QWe, QWi) in the interior of the dryer setup (101) which is oriented transverse to the conveying direction (C) of the conveyor belt (400) has at least one segmenting element (600).

15. The belt dryer (1000) according to claim 14, wherein the transverse wall (QWa, QWe, QWi) in the interior of the dryer setup (101) has at least one upper segmenting element (601, 602) above the conveyor belt (400) and/or at least one lower segmenting element (605, 607) beneath the conveyor belt and/or at least one middle segmenting element (604, 606) between a part of the conveyor belt that runs in the conveying direction (C) and a part of the conveyor belt that runs counter to the conveying direction (C').

16. The belt dryer (1000) according to claim 14 or 15, wherein a segmenting element (601, 602, 604, 605, 606, 607), especially an upper segmenting element, is formed in one piece and/or formed with a pendulum sheet (603) and/or is height-adjustable.

17. The belt dryer (1000) according to any of claims 10 to 16, wherein a connection between a segmenting element (601, 602, 604, 605, 606, 607) and the dryer setup (101) is implemented by means of a frame.

18. The belt dryer (1000) according to claim 17, wherein the frame is connected in a fixed manner to the dryer setup (101) only or to the segmenting element (601, 602) only, and/or
- the segmenting element is mounted with play on the frame if the frame is connected in a fixed manner to the dryer setup (101) only and/or
- the frame is mounted with play on the dryer setup (101) if the frame is connected in a fixed manner to the segmenting element (601, 602, 604, 605, 606, 607) only.

## Revendications

1. Procédé de fabrication pour fabriquer des particules polymères absorbant l'eau, le procédé de fabrication présentant les étapes de procédé suivantes :
- la polymérisation (S1) d'une solution ou suspension de monomère aqueuse pour fabriquer un gel polymère aqueux (S2),
- le séchage (S3) du gel polymère aqueux dans un séchoir à bande avec une bande de transport (400), en recevant le gel polymère aqueux sur la bande de transport (400) et en transportant le gel polymère sur la bande de transport (400) dans une direction de transport (C) de la bande de transport (400),
- le concassage et/ou le broyage (S4) du gel polymère séché en particules polymères absorbant l'eau, pour le séchage (S3) :
- le séchoir à bande présentant une structure de séchoir (101) dans l'espace intérieur (101i) de laquelle la bande de transport (400) est guidée,
- l'air de séchage étant guidé dans l'espace intérieur (101i) de la structure de séchoir (101) à contre-courant (C') à l'encontre de la direction de transport (C) et l'espace intérieur de la structure de séchoir (101) étant maintenu en grande partie, de préférence entièrement, à une sous-pression (p_U) par rapport à la pression ambiante (p_A) dans l'espace extérieur de la structure de séchoir (101),
- l'espace intérieur (101i) présentant et/ou formant une zone de pression (DZ), l'espace intérieur (101i) de la structure de séchoir (101) étant divisé en un nombre d'une ou plusieurs zones de pression (DZ) et/ou régions partielles de zone de pression (DZT1, DZT2), et le nombre d'une ou plusieurs zones de pression (DZ) et/ou régions partielles de zone de pression (DZT1, DZT2) étant formées à l'intérieur d'une zone d'extrémité (EZ) avant un module de déchargement (300) et/ou au moins une zone de pression (DZ) s'étendant sur un nombre de dernières zones de séchoir (TZ, 310), le long de la direction de transport (C) :
- une première pression intérieure étant formée en tant que pression d'entrée au niveau d'une entrée de gel polymère (100A) dans au moins l'une des zones de pression (DZ) avec une première différence de pression (ΔpA) par rapport à une pression ambiante (p_A), et
- une deuxième pression intérieure étant formée en tant que pression de sortie au niveau d'une sortie de gel polymère (100B) dans l'au moins une zone de pression (DZ) avec une deuxième différence de pression (ΔpB) par rapport à une pression ambiante (p_A),
- la première et la deuxième différence de pression par rapport à la pression ambiante se rapportant à une pression intérieure au-dessus de la bande de transport (400), la pression intérieure au-dessus de la bande de transport (400) étant une sous-pression dans la plage allant jusqu'à -10 mbar, et
- la deuxième différence de pression (ΔpB) étant inférieure à la première différence de pression (ΔpA),
- l'au moins une zone de pression (DZ) dans l'espace intérieur (101i) de la structure de séchoir (101) ou une région partielle de zone de pression (DZT1, DZT2) de la zone de pression (DZ) étant délimitée au moyen d'une paroi transversale (QWa, QWe, QWi) qui est orientée transversalement par rapport à la direction de transport de la bande de transport,
- un profil de pression (DP) étant formé, qui présente au moins une région de gradient de pression (GRAD) au niveau de et/ou entre l'entrée de gel polymère (100A) et la sortie de gel polymère (100B) de la zone de pression (DZ), et la région de gradient de pression (GRAD) présentant un étage de pression (DS1, DS2, DS3), une rampe de pression ou une courbe de pression similaire au niveau de la paroi transversale (QWa, QWe, QWi).

2. Procédé de fabrication selon la revendication 1, **caractérisé en ce que** l'espace intérieur de la structure de séchoir (101) est maintenu en grande partie, de préférence entièrement, à une sous-pression (p_U) dans une plage allant jusqu'à -20 mbar, notamment jusqu'à - 10 mbar, notamment jusqu'à -5 mbar, de préférence à une sous-pression (p_U) comprise entre -0,5 mbar et -5 mbar par rapport à la pression ambiante (p_A) dans l'espace extérieur de la structure de séchoir (101), et la pression ambiante (p_A) est une pression atmosphérique à l'extérieur de la structure de séchoir (101).

3. Procédé de fabrication selon l'une quelconque des revendications 1 ou 2, **caractérisé en ce qu'**une pression intérieure en dessous de la bande de transport (400) est abaissée d'une valeur comprise entre 0,5 mbar et 5 mbar par rapport à la pression intérieure au-dessus de la bande de transport (400) lorsque le gel polymère aqueux repose sur la bande de transport (400).

4. Procédé de fabrication selon l'une quelconque des revendications 1 à 3, **caractérisé en ce que** la première et la deuxième différence de pression par rapport à la pression ambiante se rapportent à une pression intérieure au-dessus de la bande de transport (400),
- au niveau d'une entrée de gel polymère (100A) de la zone de pression (DZ), la première différence de pression par rapport à la pression atmosphérique étant comprise entre -10 mbar et -1 mbar, notamment entre -10 mbar et - 0,5 mbar, et/ou
- au niveau d'une sortie de gel polymère (100B) de la zone de pression (DZ), la deuxième différence de pression par rapport à la pression atmosphérique étant comprise entre -3 mbar et 0 mbar, notamment entre -2 mbar et 0 mbar, notamment entre -0,5 mbar et 0 mbar.

5. Procédé de fabrication selon l'une quelconque des revendications 1 à 4, **caractérisé en ce que**
- un profil de pression (DP) d'une courbe de pression dans la zone de pression (DZ) et/ou la région partielle de zone de pression (DZT1, DZT2) est réglable indépendamment d'une pression ambiante,
et/ou
- le profil de pression (DP) vers une zone de pression (DZ) et/ou une région partielle de zone de pression (DZT1, DZT2) se forme par un réglage d'entrée d'un clapet d'entrée ou d'un étranglement d'entrée (710) au niveau d'une entrée de gel polymère (100A) vers une zone de pression (DZ) et/ou une région partielle de zone de pression (DZT1, DZT2) et par un réglage de sortie d'un clapet de sortie ou d'un étranglement de sortie (720) au niveau de la sortie de gel polymère (100B) d'une zone de pression (DZ) et/ou d'une région partielle de zone de pression (DZT1, DZT2).

6. Procédé de fabrication selon l'une quelconque des revendications 1 à 5, **caractérisé en ce que** pour le séchage (S3) :
- une conduite de prélèvement d'air (340) se raccordant à la structure de séchoir (101) pour l'évacuation d'air est formée et une conduite de retour d'air (350) se raccordant à la structure de séchoir (101) pour l'amenée d'air est formée, qui est reliée à la conduite de prélèvement d'air (340),
- de l'air de retour (RL) étant prélevé à partir de la structure de séchoir (101), notamment d'une zone d'extrémité (EZ), et réintroduit par l'intermédiaire de la conduite de retour d'air (350) dans la structure de séchoir (101), notamment dans la zone de séchoir (TZ) située avant une zone d'extrémité (EZ), une conduite de prélèvement d'air (340) et/ou une conduite de retour d'air (350) étant reliées fluidiquement à une zone de pression (DZ), notamment débouchant par l'intermédiaire d'une ouverture de conduite d'air vers la zone de pression (DZ).

7. Procédé de fabrication selon l'une quelconque des revendications 1 à 6, **caractérisé en ce que** pour le séchage (S3) :
- de l'air d'échappement de la structure de séchoir (101) est évacué au moins partiellement dans une conduite d'air d'échappement (360), la conduite d'air d'échappement (360) partant d'une autre ouverture de conduite d'air vers la zone de pression.

8. Procédé de fabrication selon l'une quelconque des revendications 1 à 7, **caractérisé en ce que** pour le séchage (S3) :
- le séchoir à bande est réalisé sous la forme d'un séchoir à bande à circulation d'air exploité avec de l'air de circulation (UL) qui, pour le guidage de l'air de circulation, est formé avec une structure de séchoir (101) entourant en grande partie la bande de transport (400), dans laquelle l'air de séchage est mis en circulation dans une zone de séchage (TZ) en tant qu'air de circulation (UL), notamment est mis en circulation transversalement à la direction de contre-courant (C').

9. Procédé de fabrication selon l'une quelconque des revendications 1 à 8, **caractérisé en ce que**, dans la zone de pression (DZ), le profil de pression :
- est formé par un débit volumique réglable d'air d'alimentation, notamment d'air de retour (RL) et/ou d'air frais (FL), notamment au niveau de l'entrée de gel polymère (100A) de la zone de pression (DZ) et/ou de la région partielle de zone de pression (DZT1, DZT2), et/ou
- est formé par un débit volumique réglable d'air d'échappement, notamment au niveau de la sortie de gel polymère (100B) de la zone de pression (DZ) et/ou de la région partielle de zone de pression (DZT1, DZT2), et/ou
- dans la zone de pression (DZ), notamment au niveau de et/ou entre l'entrée de gel polymère (100A) et/ou la sortie de gel polymère (100B), le réglage des débits volumiques forme le profil de pression (DP), notamment le réglage des débits volumiques est effectué au niveau d'une ouverture de conduite d'air, notamment d'un élément d'alimentation en air (330) et/ou d'un élément d'évacuation d'air (331).

10. Séchoir à bande pour le séchage d'un gel polymère aqueux dans un procédé de fabrication selon l'une quelconque des revendications 1 à 9,
- le séchoir à bande présentant une structure de séchoir (101) dans l'espace intérieur (101i) de laquelle la bande de transport (400) est guidée,
- l'air de séchage pouvant être guidé dans l'espace intérieur (101i) de la structure de séchoir (101) à contre-courant (C') à l'encontre de la direction de transport (C) et l'espace intérieur de la structure de séchoir (101) pouvant être maintenu en grande partie, de préférence entièrement, à une sous-pression (p_U) par rapport à la pression ambiante (p_A) dans l'espace extérieur de la structure de séchoir (101),
- l'espace intérieur (101i) présentant et/ou formant une zone de pression (DZ), l'espace intérieur (101i) de la structure de séchoir (101) étant divisé en un nombre d'une ou plusieurs zones de pression (DZ) et/ou régions partielles de zone de pression (DZT1, DZT2), et le nombre d'une ou plusieurs zones de pression (DZ) et/ou régions partielles de zone de pression (DZT1, DZT2) étant formées à l'intérieur d'une zone d'extrémité (EZ) avant un module de déchargement (300) et/ou au moins une zone de pression (DZ) s'étendant sur un nombre de dernières zones de séchoir (TZ, 310), le long de la direction de transport (C) :
- une première pression intérieure étant formée en tant que pression d'entrée au niveau d'une entrée de gel polymère (100A) dans au moins l'une des zones de pression (DZ) avec une première différence de pression (ΔpA) par rapport à une pression ambiante (p_A), et
- une deuxième pression intérieure étant formée en tant que pression de sortie au niveau d'une sortie de gel polymère (100B) dans l'au moins une zone de pression (DZ) avec une deuxième différence de pression (ΔpB) par rapport à une pression ambiante (P_A),
- la première et la deuxième différence de pression par rapport à la pression ambiante se rapportant à une pression intérieure au-dessus de la bande de transport (400), la pression intérieure au-dessus de la bande d'alimentation (400) étant une sous-pression dans la plage allant jusqu'à -10 mbar, et
- la deuxième différence de pression (ΔpB) étant inférieure à la première différence de pression (ΔpA),
- l'au moins une zone de pression (DZ) dans l'espace intérieur (101 i) de la structure de séchoir (101) ou une région partielle de zone de pression (DZT1, DZT2) de celle-ci étant délimitée au moyen d'une paroi transversale (QWa, QWe, QWi) qui est orientée transversalement à la direction de transport de la bande de transport,
- un profil de pression (DP) pouvant être formé, qui présente au moins une région de gradient de pression (GRAD) au niveau de et/ou entre l'entrée de gel polymère (100A) et la sortie de gel polymère (100B) de la zone de pression (DZ), et la région de gradient de pression (GRAD) présentant un étage de pression (DS1, DS2, DS3), une rampe de pression ou une courbe de pression similaire au niveau de la paroi transversale (QWa, QWe, QWi).

11. Séchoir à bande selon la revendication 10, **caractérisé en ce qu'**une zone de pression (DZ) présente une limite de zone de pression au niveau du bord de la zone de pression (DZ), notamment une entrée de gel polymère (100A) et/ou une sortie de gel polymère (100B).

12. Séchoir à bande selon la revendication 11, **caractérisé en ce que**
- la limite de zone de pression est formée au moyen d'une ouverture de conduite d'air et/ou d'une paroi transversale extérieure (QWa, QWe) dans l'espace intérieur (101i) de la structure de séchoir (101), la paroi transversale extérieure (QWa, QWe) étant orientée transversalement à la direction de transport (C) de la bande de transport (400), notamment fixée à la structure de séchoir (101), et/ou
- l'ouverture de conduite d'air et/ou la paroi transversale extérieure (QWa, QWe) étant agencée au niveau de la limite de zone de pression pour former une région de gradient de pression (GRAD).

13. Séchoir à bande selon l'une quelconque des revendications 10 à 12, **caractérisé en ce qu'**une zone de pression (DZ) présente une paroi transversale intérieure (QWi) à l'intérieur de la zone de pression, notamment entre une entrée de gel polymère (100A) et une sortie de gel polymère (100B), et/ou la paroi transversale intérieure (QWi) est formée à côté d'une paroi transversale extérieure (QWa, QWe) d'une zone de pression (DZ) pour former une région partielle de zone de pression (DZT1, DZT2) et/ou une région de gradient de pression (GRAD) dans la zone de pression (DZ).

14. Séchoir à bande (1000) selon l'une quelconque des revendications 10 à 13, **caractérisé en ce qu'**une paroi transversale (QWa, QWe, QWi) dans l'espace intérieur de la structure de séchoir (101), qui est orientée transversalement à la direction de transport (C) de la bande de transport (400), présente au moins un élément de segmentation (600).

15. Séchoir à bande (1000) selon la revendication 14, **caractérisé en ce que** la paroi transversale (QWa, QWe, QWi) dans l'espace intérieur de la structure de séchoir (101) présente au moins un élément de segmentation supérieur (601, 602) au-dessus de la bande de transport (400) et/ou au moins un élément de segmentation inférieur (605, 607) en dessous de la bande de transport et/ou au moins un élément de segmentation intermédiaire (604, 606) entre une partie de la bande de transport se déplaçant dans la direction du transport (C) et une partie de la bande de transport se déplaçant à l'encontre de la direction de transport (C').

16. Séchoir à bande (1000) selon la revendication 14 ou 15, **caractérisé en ce qu'**un élément de segmentation (601, 602, 604, 605, 606, 607), notamment un élément de segmentation supérieur, est réalisé en une seule pièce et/ou avec une tôle pendulaire (603) et/ou est réglable en hauteur.

17. Séchoir à bande (1000) selon l'une quelconque des revendications 10 à 16, **caractérisé en ce qu'**une liaison entre un élément de segmentation (601, 602, 604, 605, 606, 607) et la structure de séchoir (101) est réalisée au moyen d'un cadre.

18. Séchoir à bande (1000) selon la revendication 17, **caractérisé en ce que** le cadre est relié de manière fixe uniquement à la structure de séchoir (101) ou uniquement à l'élément de segmentation (601, 602), et/ou
- l'élément de segmentation est disposé avec un jeu sur le cadre lorsque le cadre est relié de manière fixe uniquement à la structure de séchoir (101), et/ou
- le cadre est disposé avec un jeu sur la structure de séchoir (101) lorsque le cadre est relié de manière fixe uniquement à l'élément de segmentation (601, 602, 604, 605, 606, 607).
